# EUROPEAN PATENT APPLICATION

(11) **EP 4 722 130 A1**
(43) Date of publication of application: **08.04.2026**
(21) Application number: 25789204.2
(22) Date of filing: 13.02.2025
(51) Int. Cl.: B65G 1/02

(54) **WAREHOUSE DEVICE, WAREHOUSE SYSTEM, AND ORDER-PROCESSING, STORAGE AND RETRIEVAL METHOD**

(30) Priority: 29.05.2024 CN 202421205400 U; 29.05.2024 CN 202410684539; 11.06.2024 CN 202421321787 U; 11.06.2024 CN 202410748655; 10.09.2024 CN 202411268337
(71) Applicant: Hangzhou Hikrobot Co., Ltd., Hangzhou, Zhejiang 310051 (CN)
(72) Inventor: SU, Quan, Hangzhou, Zhejiang 310051 (CN); MA, Jiansui, Hangzhou, Zhejiang 310051 (CN); YU, Wentao, Hangzhou, Zhejiang 310051 (CN); ZHAO, Luhao, Hangzhou, Zhejiang 310051 (CN); SONG, Jindan, Hangzhou, Zhejiang 310051 (CN); LI, Biyong, Hangzhou, Zhejiang 310051 (CN)
(74) Representative: Epping - Hermann - Fischer
(86) International application number: PCT/CN2025/077155
(87) International publication number: WO 2025/218332

(57) **Abstract**

A warehousing apparatus, a warehousing system, and an order processing method, a warehousing-in method, and a warehousing-out method, wherein the warehousing system includes multiple goods shelves, a first transfer robot, and a second transfer robot; at least one goods shelf among the multiple goods shelves is a movable goods shelf; the first transfer robot is configured for transferring a workbin between two goods shelves for goods arranging; one of two adjacent goods shelves is a movable goods shelf, and the other of the two adjacent goods shelves is a movable goods shelf or a fixed goods shelf; the second transfer robot is configured for transferring the movable goods shelf after goods arranging to a destination, or to transfer a movable goods shelf waiting goods arranging to a position adjacent to another goods shelf waiting goods arranging. The warehousing system transfers the workbin between the two goods shelves for goods arranging through the first transfer robot; the second transfer robot transfers the movable goods shelf after goods arranging to the destination, which reduces the number of round trips of the second transfer robot when warehousing-out, and improves the warehouse operation efficiency.

## Description

The present application claims the priority to a Chinese invention patent application No. 202410684539.7 entitled "warehousing apparatus, warehousing system, warehousing-in method and warehousing-out method" and a Chinese utility patent application No. 202421205400.1 entitled "warehousing apparatus and warehousing system" filed with the China National Intellectual Property Administration (CNIPA) on May, 29, 2024, a Chinese invention patent application No. 202410748655.0 entitled "warehousing system and goods arranging method" and a Chinese utility No. 202421321787.7 entitled "warehousing system" filed with the China National Intellectual Property Administration (CNIPA) on June 11, 2024, and a Chinese invention patent application No. 202411268337.0 filed with the China National Intellectual Property Administration (CNIPA) on September 10, 2024 and entitled "warehousing system and order processing method", which are incorporated herein by reference in their entirety.

### Technical Field

The present application relates to the technical field of warehousing and logistics, and in particular to a warehousing apparatus, a warehousing system, an order processing method, a warehousing-in method and a warehousing-out method.

### Background

With the development of the logistics industry, goods-to-person picking is an automated picking way, which usually uses a transfer robot to transfer goods to a picking workstation, and the goods are picked by pickers and warehoused-out. This picking way reduces the workload of the pickers and improves picking and warehousing-out efficiency. Therefore, it has been widely used in industries such as retail and e-commerce.

As an example, the current warehousing system includes movable goods shelves and automated guided vehicle (AGV) transfer robots. The AGV transfer robots carry the movable goods shelves and transfer them to the picking workstation for further being picked by the pickers. However, the current warehousing system has a small storage capacity due to the limited carrying capacity of the automated guided vehicles and the limited layer height of the movable goods shelves. In addition, when to-be-warehoused-out workbins are scattered in different movable goods shelves, the AGVs need to transfer them back and forth multiple times, which results in low warehouse operation efficiency.

### Summary

In order to solve at least one of the above technical problems, the embodiments of the present application provide a warehousing apparatus, a warehousing system, an order processing method, a warehousing-in method, and a warehousing-out method.

In order to achieve the above objectives, the embodiments of the present application provide the following technical solutions.

An embodiment of the present application provides a warehousing system, including multiple goods shelves, a first transfer robot and a second transfer robot; at least one goods shelf among the multiple goods shelves is a movable goods shelf; the first transfer robot is movably arranged beside two adjacent goods shelves, and is configured for transferring a workbin between the two goods shelves for goods arranging; wherein, one of the two adjacent goods shelves is a movable goods shelf, and the other of the two adjacent goods shelves is a movable goods shelf or a fixed goods shelf; the second transfer robot is configured for transferring a movable goods shelf after goods arranging to a destination, or for transferring a movable goods shelf waiting goods arranging to a position adjacent to another goods shelf waiting goods arranging.

The warehousing system provided by the embodiment of the present application transfers the workbin between two goods shelves for goods arranging by using the first transfer robot; the second transfer robot transfers the movable goods shelf after goods arranging to the destination, thus reducing the number of round trips of the second transfer robot when warehousing-out, and improving the warehouse operation efficiency.

An embodiment of the present application provides a warehousing system, including a storage area, wherein at least one fixed high goods shelf is arranged in the storage area; a goods arranging area, wherein at least one movable goods shelf is arranged in the goods arranging area, and the movable goods shelf and the fixed high goods shelf corresponding to the movable goods shelf are arranged along an extension direction of an operating channel; a first transfer robot and a guide rail adapted to the first transfer robot, wherein an extension direction of the guide rail is consistent with the extension direction of the operating channel; the guide rail is arranged at the fixed high goods shelf and extends to an operating surface of the movable goods shelf; the first transfer robot is slidably mounted to the guide rail and configured for moving along the extension direction of the guide rail; the first transfer robot is configured to transfer a workbin between the storage area and the goods arranging area; a second transfer robot, configured for transferring the movable goods shelf in the goods arranging area and/or transferring the movable goods shelf between the goods arranging area and the goods arranging area; a sorting area, wherein a sorting workbench is arranged in the sorting area, and the sorting workbench is configured for sorting goods in the workbin.

In the warehousing system provided by the embodiment of the present application, the fixed high goods shelf is arranged in the storage area, and the movable goods shelf is arranged in the sorting area, the first transfer robot transfers the workbin from the fixed high good shelf to the movable goods shelf, and the second transfer robot further carries the movable goods shelf to the sorting area. The two types of robots divide the work and cooperate to reduce the number of round trips of the second transfer robot when warehousing-out, thus improving the warehouse operation efficiency. In this way, since the fixed high shelf has a higher layer height and a larger storage capacity than the movable goods shelf and can accommodate a larger number of workbins, the storage capacity of the warehousing system is increased.

An embodiment of the present application further provides an order processing method, including obtaining a set of to-be-processed orders and inventory information of a storage area and a goods arranging area; wherein the set of to-be-processed orders is processed at a same sorting workbench, at least one fixed high goods shelf is arranged in the storage area, and at least one movable goods shelf is arranged in the goods arranging area; determining a storage position where each of target workbins requested by the set of to-be-processed orders is located, wherein any storage position is located in the fixed high goods shelf or the movable goods shelf; determining a target movable goods shelf with a highest target workbin hit rate; transferring the target movable goods shelf to a sorting workbench located in a sorting area.

In the order processing method provided by the embodiment of the present application, the fixed high goods shelf is arranged in the storage area and the movable goods shelf is arranged in the goods arranging area, to enable the target workbins in the fixed high goods shelf to be transferred to the target movable goods shelf, and further to be transferred the sorting workbench in the sorting area through the target movable goods shelf. Since the fixed high shelf has a higher layer height and a larger storage capacity than the movable goods shelf and can accommodate a larger number of workbins, the storage capacity of the warehousing system is increased. In addition, the order processing method can transfer the target movable goods shelf with the highest target order hit rate to the sorting workbench, to improve the target workbin hit rate, so that a single transfer of the target movable goods shelf can hit more target workbins, thereby improving the warehousing-out efficiency, that is, improving the warehouse operation efficiency.

An embodiment of the present application further provides a warehousing system, including: a storage area, a goods arranging area, a sorting area, a first transfer robot and a second transfer robot; at least one fixed high goods shelf is arranged in the storage area, and at least one movable goods shelf is arranged in the goods arranging area; the movable goods shelf is arranged immediately adjacent to the fixed high goods shelf; a support frame is fixedly arranged at the fixed high goods shelf; the first transfer robot is mounted to the support frame and is configured for moving along the support frame to transfer a workbin between the storage area and the goods arranging area; the second transfer robot is configured for transferring the movable goods shelf in the goods arranging area and/or between the goods arranging area and the sorting area.

In the warehousing system provided by the embodiment of the present application, the fixed high goods shelf is arranged in the storage area, and the movable goods shelf is arranged in the sorting area, the first transfer robot transfers the workbin from the fixed high shelf to the movable goods shelf, and the second transfer robot further carries the movable goods shelf to the sorting area. The two types of robots divide the work and cooperate to reduce the number of round trips of the second transfer robot when warehousing-out, thus improving the warehouse operation efficiency. Since the fixed high shelf has a higher layer height and a larger storage capacity than the movable goods shelf and can accommodate a larger number of workbins, the storage capacity of the warehousing system is increased.

An embodiment of the present application further provides a warehousing apparatus, including a first robot goods shelf and a second robot goods shelf; the first robot goods shelf comprises a first storage space and a first accommodation space; the first storage space is provided with multiple storage bins for storing containers; the first accommodation space is arranged below the first storage space for accommodating the second robot goods shelf; the first robot goods shelf is provided with a support frame capable of mounting a first robot; the first robot is configured for picking-up and placing a container between the first robot goods shelf and the second robot goods shelf; the second robot goods shelf comprises a second storage space and a second accommodation space; the second storage space is provided with multiple temporary storage bins for temporarily storing containers; the second accommodation space is arranged below the second storage space for a second robot to move the second robot goods shelf.

An embodiment of the present application further provides a warehousing system, including any one of the above- mentioned warehousing apparatus, a first robot and a second robot; the first robot is mounted to the first robot goods shelf based on the support frame, and is configured for moving the containers in the storage bins of the first robot goods shelf to the temporary storage bins of the second robot goods shelf, or move the containers in the temporary storage bins of the second robot goods shelf to the storage bins of the first robot goods shelf; the second robot is configured for transferring the second robot goods shelf carrying a to-be-warehoused-out container to a destination, or for transferring the second robot goods shelf carrying the to-be-warehoused-in container to the first accommodation space of the first robot goods shelf.

In the warehousing apparatus and warehousing system provided by the embodiments of the present application, the second robot goods shelf is provided with multiple temporary storage bins. Therefore, the second robot goods shelf is driven by the second robot to move between the first robot goods shelf and the destination, so that the second robot can warehouse-out or warehouse-in multiple containers at a time, thereby improving the efficiency of warehousing-out and warehousing-in. The two types of robots divide the work and cooperate to reduce the number of round trips of the second transfer robot when warehousing-out, thus improving the warehouse operation efficiency. The second robot goods shelf is arranged in the first accommodation space at the lower part of the first robot goods shelf. Compared with the second robot goods shelf, the first robot goods shelf which is a fixed high goods shelf, has a higher layer height and a larger storage capacity than the second robot goods shelf, and can accommodate a larger number of containers, thereby improving the storage capacity of the warehousing system.

An embodiment of the present application further provides a warehousing-in method applied to a control device, wherein the control device is in communication connection with the first robot and the second robot of any of the above warehousing systems; the method comprises:
determining a target free storage bin for each to-be-warehoused-in container according to the number of to-be-warehoused-in containers and the number and positions of free storage bins in a first robot goods shelf; instructing the second robot to move a to-be-warehoused-in second robot goods shelf to a first accommodation space of the first robot goods shelf; wherein the to-be-warehoused-in containers are temporarily stored in temporary storage bins in the to-be-warehoused-in second robot goods shelf; instructing the first robot to move the to-be-warehoused-in containers in the second robot goods shelf to target free storage bins of the first robot goods shelf.

In the warehousing-in method provided by this embodiment, the second robot that temporarily stores the to-be-warehoused-in containers is instructed to move to the accommodation space at the bottom of the first robot goods shelf, and the first robot is instructed to move the to-be-warehoused-in containers in the second robot goods shelf to the target free storage bins of the first robot goods shelf. The second robot can drive the second robot goods shelf to move, to realize the container warehousing-in function. Moreover, in the embodiment of the present application, the second robot goods shelf is provided with multiple temporary storage bins. Therefore, the second robot can store multiple containers at a time, thus improving the warehousing-in efficiency, that is, improving the warehouse operation efficiency.

An embodiment of the present application further provides a warehousing-out method applied to a control device, wherein the control device is in communication connection with the first robot and the second robot of any of the above warehousing system; the method comprises:
determining a to-be-warehoused-out second robot goods shelf according to the number of to-be-warehoused-out containers; wherein the to-be-warehoused-out second robot goods shelf has free temporary storage bins; instructing the second robot to move the to-be-warehoused-out second robot goods shelf to a first accommodation space of a first robot goods shelf; instructing the first robot to move the to-be-warehoused-out containers in the first robot goods shelf to the free temporary storage bins of the to-be-warehoused-out second robot goods shelf; instructing the second robot to drive the to-be-warehoused-out second robot goods shelf to move to a destination.

In the warehousing-out method provided in this embodiment, the first robot is instructed to move the to-be-warehoused-out containers from the first robot goods shelf to the free temporary storage bins of the second robot goods shelf, and the second robot is instructed to drive the to-be-warehoused-out second robot goods shelf to the destination, such that the second robot can drive the second robot goods shelf to the destination, to realize the container warehousing-out function. Moreover, in the embodiment of the present application, the second robot goods shelf is provided with multiple temporary storage bins. Therefore, the second robot can warehouse-out multiple containers at a time, thus improving the warehousing-out efficiency, that is, improving the warehouse operation efficiency.

An embodiment of the present application further provides a control device, including a memory configured for storing a computer program; a processor configured for carrying out, when executing the program stored on the memory, any of the above order processing methods, warehousing-in methods or warehousing-out methods.

An embodiment of the present application further provides a computer-readable storage medium having stored thereon a computer program thereon, which, when executed by a processor, carries out any of the above order processing methods, warehousing-in methods or warehousing-out methods.

### Brief Description of the Drawings

The accompanying drawings described here are used to provide a further understanding of the present application and constitute a part of the same. The illustrative embodiments of the present application and their descriptions are used to explain the present application and do not constitute an improper limitation of the present application.
Fig. 1 is a top view of overall arrangement of a second warehousing system provided by an embodiment of the present application;
Fig. 2 is a side view of overall arrangement of the second warehousing system provided by an embodiment of the present application;
Fig. 3 is a schematic diagram of arrangement of fixed high goods shelves in a storage area and movable goods shelves in a goods arranging area provided by an embodiment of the present application;
Fig. 4 is a schematic diagram of movement of a second transfer robot carrying a movable goods shelf provided by an embodiment of the present application;
Fig. 5 is a schematic diagram of a guide rail arrangement provided by an embodiment of the present application;
Fig. 6 is a schematic diagram of mounting a first transfer robot to a guide rail provided by an embodiment of the present application;
Fig. 7 is a first schematic flow chart of an order processing method provided by an embodiment of the present application;
Fig. 8 is a second schematic flow chart of an order processing method provided by an embodiment of the present application;
Fig. 9 is a third schematic flow chart of an order processing method provided by an embodiment of the present application;
Fig. 10a is a schematic diagram of a stereoscopic structure of a first embodiment of a warehousing apparatus provided by an embodiment of the present application;
Fig. 10b is a side view of the warehousing apparatus shown in Fig. 10a;
Fig. 11a is a top view of a first robot goods shelf in the embodiment shown in Fig. 10a;
Fig. 11b is a top view of a first robot goods shelf in a second embodiment of the warehousing apparatus provided by an embodiment of the present application;
Fig. 11c is a top view of a first robot goods shelf in a third embodiment of the warehousing apparatus provided by an embodiment of the present application;
Fig. 12 is a top view of a second robot goods shelf in the embodiment shown in Fig. 10a;
Fig. 13a is a schematic diagram of a stereoscopic structure of a first embodiment of a fourth warehousing system provided by an embodiment of the present application;
Fig. 13b is a side view of the fourth warehousing system shown in Fig. 13a;
Fig. 14a is a schematic structural diagram of a first robot in the embodiment shown in Fig. 13a from a first angle of view;
Fig. 14b is a schematic structural diagram of a first robot in the embodiment shown in Fig. 13a from a second angle of view;
Fig. 15 is a schematic structural diagram of a second robot in the embodiment shown in Fig. 13a;
Fig. 16 is a schematic top view of a second embodiment of the fourth warehousing system provided by an embodiment of the present application;
Fig. 17 is schematic a top view of a third embodiment of the fourth warehousing system provided by an embodiment of the present application;
Fig. 18 is a schematic top view of a fourth embodiment of the fourth warehousing system provided by an embodiment of the present application.
Fig. 19 is a flow chart of a first embodiment of a warehousing-in method provided by an embodiment of the present application;
Fig. 20 is a flow chart of a second embodiment of the warehousing-in method provided by an embodiment of the present application;
Fig. 21 is a flow chart of a third embodiment of the warehousing-in method provided by an embodiment of the present application;
Fig. 22 is a flow chart of a first embodiment of a warehousing-out method provided by an embodiment of the present application;
Fig. 23 is a flow chart of a second embodiment of the warehousing-out method provided by an embodiment of the present application;
Fig. 24 is a flow chart of a third embodiment of the warehousing-out method provided by an embodiment of the present application;
Fig. 25 is a schematic structural diagram of a control device provided by an embodiment of the present application;
Fig. 26a is a schematic top view of a first embodiment of a fifth warehousing system provided by an embodiment of the present application;
Fig. 26b is a schematic top view of a second embodiment of a fifth warehousing system provided by an embodiment of the present application;
Fig. 27 is a schematic partial top view of a goods arranging area in the embodiment shown in Fig. 26b;
Fig. 28a is a stereoscopic schematic diagram of a positional relationship between a transfer robot shown in Fig. 26a and a movable goods shelf;
Fig. 28b is a schematic diagram of Fig. 28a from another angle of view (excluding the movable goods shelf on the right side of Fig. 28a);
Fig. 29a is a schematic structural diagram of a goods arranging robot in the embodiment shown in Fig. 28a from a first angle of view;
Fig. 29b is a schematic structural diagram of the goods arranging robot in the embodiment shown in Fig. 28a from a second angle of view;
Fig. 30 is a schematic diagram of stereoscopic structure of a positional relationship between another transfer robot shown in Fig. 26b and a movable goods shelf;
Fig. 31 is a schematic diagram of stereoscopic structure of a goods arranging robot in the embodiment shown in Fig. 30;
Fig. 32a is a schematic diagram of stereoscopic structure of a movable goods shelf in an embodiment of the present application;
Fig. 32b is a schematic structural diagram of a first side surface of the movable goods shelf shown in Fig. 32a;
Fig. 32c is a schematic diagram of stereoscopic structure of the movable goods shelf shown in Fig. 32a cooperating with a transfer robot;
Fig. 32d is a schematic structural diagram of a second side surface of the embodiment shown in Fig. 32c;
Fig. 33 is a schematic diagram of stereoscopic structure of the transfer robot in the embodiment shown in Fig. 28a;
Fig. 34 is a schematic structural diagram of a first goods arranging mode of a goods arranging robot in an embodiment of the present application;
Fig. 35 is a schematic structural diagram of a second goods arranging mode of a goods arranging robot in an embodiment of the present application;
Fig. 36 is a schematic structural diagram of a third goods arranging mode of a goods arranging robot in an embodiment of the present application;
Fig. 37 is a schematic diagram of top view structure of a third embodiment of the fifth warehousing system provided by an embodiment of the present application;
Fig. 38 is a top view of a positional relationship between a goods arranging robot and a movable goods shelf in a fourth embodiment of the fifth warehousing system provided by an embodiment of the present application;
Fig. 39 is a top view of a positional relationship between a goods arranging robot and a movable goods shelf in a fifth embodiment of the fifth warehousing system provided by an embodiment of the present application;
Fig. 40 is a schematic diagram of specific stereoscopic structure of the embodiment shown in Fig. 39;
Fig. 41 is a schematic first flow chart of a first goods arranging method provided by an embodiment of the present application;
Fig. 42 is a schematic second flow chart of the first goods arranging method provided by an embodiment of the present application;
Fig. 43 is a schematic third flow chart of the first goods arranging method provided by an embodiment of the present application;
Fig. 44 is a schematic fourth flow chart of the first goods arranging method provided by an embodiment of the present application;
Fig. 45 is a schematic fifth flow chart of the first goods arranging method provided by an embodiment of the present application;
Fig. 46 is a schematic sixth flow chart of the first goods arranging method provided by an embodiment of the present application;
Fig. 47 is a schematic first flow chart of a second goods arranging method provided by an embodiment of the present application;
Fig. 48 is a schematic second flow chart of the second goods arranging method provided by an embodiment of the present application;
Fig. 49 is a schematic structural diagram of a control device provided by an embodiment of the present application.

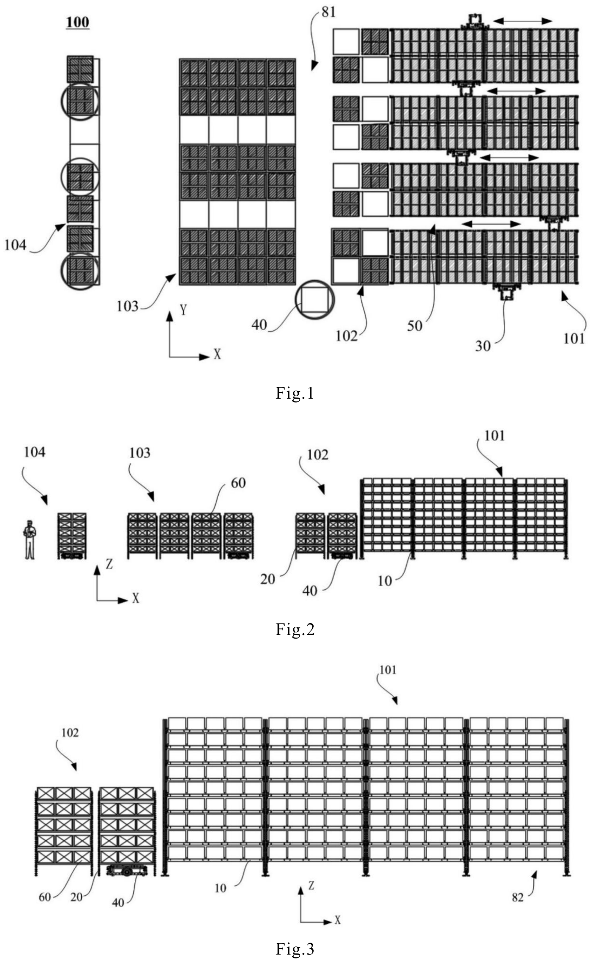

Reference signs in Figs. 1 to 9:
fixed high goods shelf 10; movable goods shelf 20; first transfer robot 30; portal frame 31; picking-up mechanism 32; lifting and lowering mechanism 33; sliding mechanism 34; second transfer robot 40; operating channel 50; workbin 60; guide rail 70; first traffic lane 81; second traffic lane 82; carrier frame 90; warehousing system 100; storage area 101; goods arranging area 102; buffer area 103; sorting area 104.

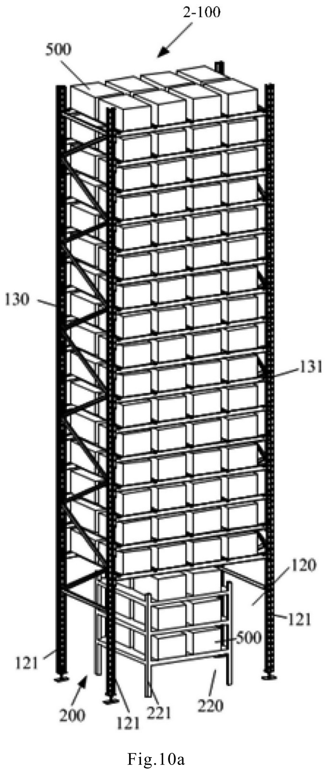

Reference signs in Figs. 10a to 25:
first robot goods shelf 2-100; first storage space 110; storage bin 111; first layer-board 112; first accommodation space 120; first support column 121; support frame 130; crossbeam 131; sub-goods shelf 101;
second robot goods shelf 200; second storage space 210; temporary storage bin 211; second layer-board 212; second accommodation space 220; second support column 221;
first robot 300; column portal frame 310; door post 311; transfer mechanism 320; lifting and lowering component 321; picking-up component 322; sliding guide rail 330; slider 331; top housing 340;
second robot 400; mobile chassis 410; elevating mechanism 420; lifting platform 430;
container 500; docking channel 600; bottom traveling channel 700; first external traveling channel 710; second external traveling channel 720; workstation 800; reviewing and packing area 900.

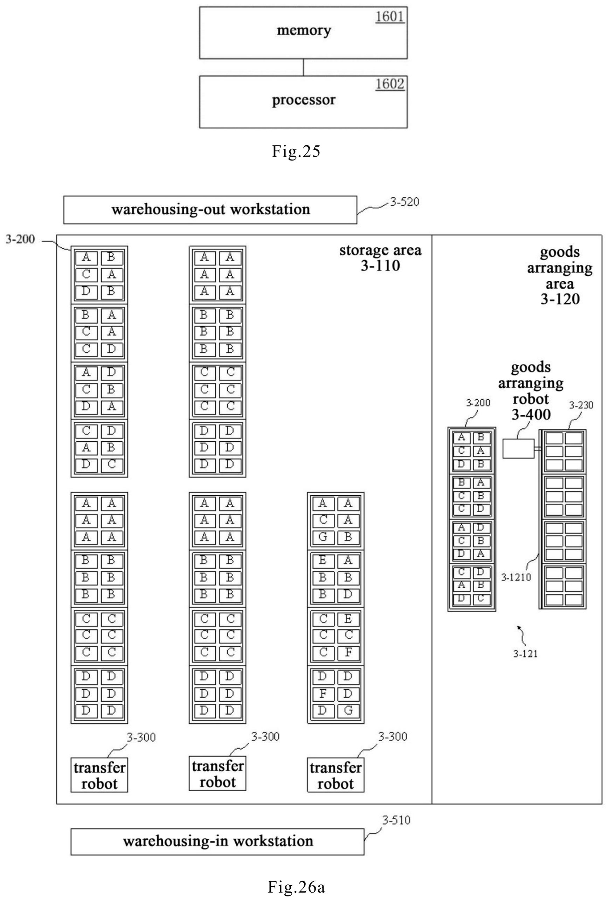

Reference signs in Figs. 26a to 49:
warehousing storage area 3-100; storage area 3-110; goods arranging area 3-120; goods arranging channel 3-121; ground support frame 3-1210; support crossbeam 3-1211; support vertical beam 3-1212;
movable goods shelf 3-200; storage space 3-210; storage bin 3-211; support column 3-212; accommodation space 3-220; target goods shelf 3-230; fixed goods shelf 3-240;
transfer robot 3-300; second mobile chassis 3-310; elevating mechanism 3-320; lifting platform 3-330;
goods arranging robot 3-400; first column portal frame 3-410; door post 3-411; first transfer mechanism 3-420; first lifting and lowering component 3-421; first picking-up component 3-422; guide rail 3-430; roller 3-431; top housing 3-432;
first mobile chassis 3-440; second column portal frame 3-450; second transfer mechanism 3-460; second lifting and lowering component 3-461; second picking-up component 3-462; rotating component 3-463; temporary storage unit 3-470; storage layer-board 3-471;
workstation 3-500; warehousing-in workstation 3-510; warehousing-out workstation 3-520; container 3-600.

### Detailed Description

In order to make the objective, technical solutions and advantages of the present application clearer and more understandable, the present application will be described in more detail below with reference to the accompanying drawings and embodiments. Obviously, the described embodiments are only some, and not all, of the embodiments of the present application. All other embodiments obtained based on the embodiments of the present application by those skilled in the art fall into the scope of protection of the present application.

The current warehousing system that includes movable goods shelves and automated guided vehicles has the problem of small storage capacity. The reason for this problem is that the movable goods shelves are used for storing workbins. When warehousing-out and sorting, the automated guided vehicles carry the movable goods shelves to a sorting area. The workbins to be sorted are further sorted and warehoused-out through a sorting workbench. However, due to the limited carrying capacity of the automated guided vehicles and the limited layer height of the movable goods shelves, the current warehousing system has a small storage capacity. In addition, when the to-be-warehoused-out workbins are scattered in different movable goods shelves, the AGVs need to transfer them back and forth multiple times, which results in low warehouse operation efficiency.

Regarding the above technical problems, the embodiments of the present application provide several warehousing systems to solve at least one of the above technical problems.

The several warehousing systems provided by the embodiments of the present application all transfer materials (workbins or containers) between a movable goods shelf and another goods shelf for goods arranging by using one robot (a first transfer robot or a first robot or a goods arranging robot) to; and transfer the movable goods shelf after goods arranging to a destination by using another robot (a second transfer robot or a second robot or a transfer robot), such that the number of round trips of the second transfer robot when warehousing-out is reduced, and the warehouse operation efficiency is thus improved.

In addition, in some embodiments, the another goods shelf in the warehousing systems may be a fixed high goods shelf, which has a higher layer height and a larger storage capacity than the movable goods shelf and can accommodate a larger number of workbins, such that the storage capacity of the warehousing system is increased. Detailed descriptions are given below.

Firstly, a first warehousing system provided by an embodiment of the present application is described in detail.

The first warehousing system provided by the embodiment of the present application includes multiple goods shelves, a first transfer robot and a second transfer robot.

At least one goods shelf among the multiple goods shelves is a movable goods shelf.

The first transfer robot is movably arranged beside two adjacent goods shelves, and is configured for transferring a workbin between the two goods shelves for goods arranging. One of the two adjacent goods shelves is a movable goods shelf, and the other of the two adjacent goods shelves is a movable goods shelf or a fixed goods shelf.

The second transfer robot is configured for transferring a movable goods shelf after goods arranging to a destination, or to transfer the movable goods shelf waiting goods arranging to a position adjacent to another goods shelf waiting goods arranging.

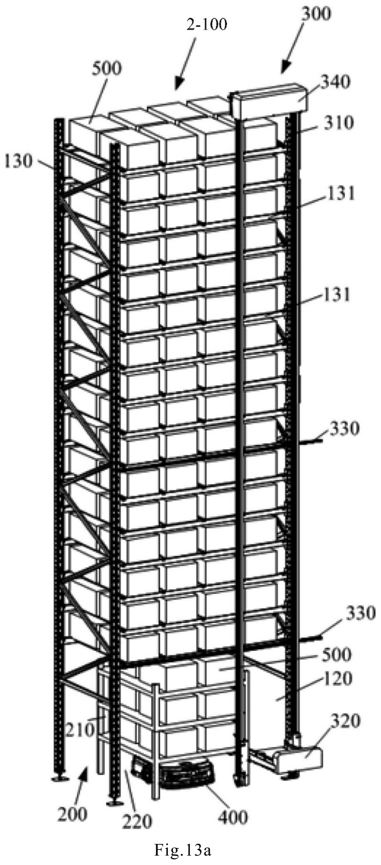

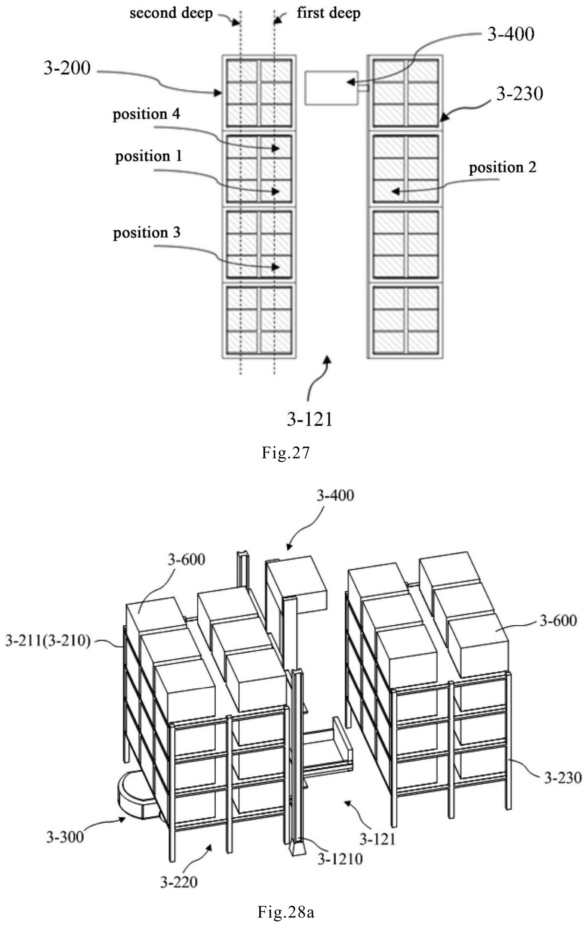

Specifically, the goods shelves may include both the movable goods shelf and the fixed goods shelf as shown in Fig. 2 and Fig. 13a; or may include only movable goods shelves as shown in Fig. 26a and Fig. 28a.

The two adjacent goods shelves can be arranged adjacent to each other along a length direction of the goods shelves as shown in Fig. 2; or the two adjacent goods shelves can be arranged adjacent to each other along a height direction of the goods shelves as shown in Fig. 13a, with one goods shelf in an accommodation space at a bottom of another goods shelf; or the two adjacent goods shelves can be arranged opposite to each other as shown in Figs. 26a and 28a, with a channel for the first transfer robot to move forming between the two adjacent goods shelves.

When the two goods shelves are arranged opposite to each other, the first transfer robot is movably arranged in the channel formed between the two goods shelves; when the two goods shelves are arranged adjacent to each other along the length or height direction of the goods shelves, the first transfer robot is movably arranged on one side or both sides of the goods shelves in the length direction of the goods shelves.

In the first warehousing system provided by the embodiment of the present application, two types of transfer robots are arranged, and the two types of transfer robots work simultaneously and divide the work and cooperate. By the first transfer robot, the goods in each goods shelf are arranged, and the to-be-warehoused-out workbins that are scattered in multiple goods shelves are moved to one movable goods shelf for being transferred and warehoused-out by the second, such that the number of round trips of the second transfer robot when warehousing-out is reduced, and the warehouse operation efficiency is thus improved.

In some embodiments of the present application, one of the two adjacent goods shelves is a movable goods shelf and the other of the two adjacent goods shelves is a fixed high goods shelf.

The movable goods shelf and the fixed high goods shelf are arranged along an extension direction of an operating channel.

The fixed high goods shelf is provided with a guide rail adapted to the first transfer robot; an extension direction of the guide rail is consistent with the extension direction of the operating channel; the guide rail is arranged at the fixed high goods shelf and extends to an operating surface of the movable goods shelf.

The first transfer robot is slidably mounted to the guide rail and configured for moving along the extension direction of the guide rail to transfer a workbin between the movable goods shelf and the fixed high goods shelf.

Specifically, referring to Figs. 1 and 2 firstly, in the embodiment of the present application, the movable goods shelves and the fixed high goods shelves are arranged in sequence along the length direction of the goods shelves.

Furthermore, there may be multiple movable goods shelves and fixed high goods shelves among the goods shelves arranged in a row along the length direction. As shown in Figs. 1 and 2, in each row of goods shelves, there are 4 fixed high goods shelves and 2 movable goods shelves. The first transfer robot is configured for moving in the operating channel to transfer the workbin between the fixed high goods shelves and the movable goods shelves.

By applying the embodiments of the present application, the goods shelves include the fixed high shelf and the movable goods shelf. The fixed high shelf has a higher layer height and a larger storage capacity than the movable goods shelf, and can accommodate a larger number of workbins, such that the storage capacity of the warehousing system is increased.

In some embodiments of the present application, one of the two adjacent goods shelves is a movable goods shelf and the other of the two adjacent goods shelves is a fixed high goods shelf.

The fixed high goods shelf includes a first storage space and a first accommodation space; the first storage space is provided with multiple storage bins for storing workbins; the first accommodation space is arranged below the first storage space, and used for accommodating the movable goods shelf; the fixed high goods shelf is provided with a support frame capable of mounting the first transfer robot, so that the first transfer robot transfers the workbins between the movable goods shelf and the fixed high goods shelf.

The movable goods shelf includes a second storage space and a second accommodation space; the second storage space is provided with multiple temporary storage bins for temporarily storing workbins; the second accommodation space is arranged below the second storage space for the second transfer robot to move the movable goods shelf.

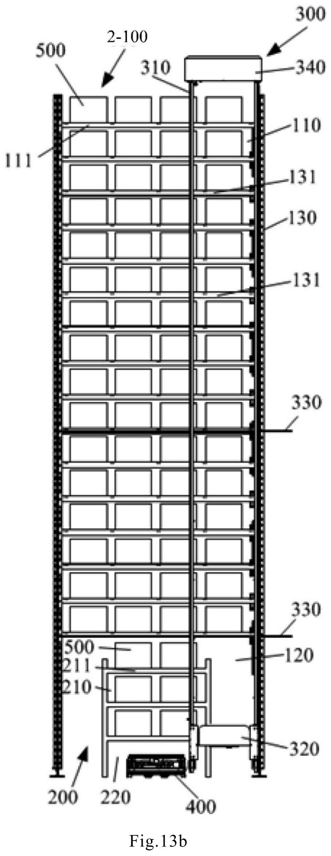

Specifically, referring to Figs 13a and 13b firstly, in the embodiment of the present application, the fixed high shelf and the movable goods shelf are arranged in sequence along the height direction of the goods shelves. The first transfer robot is movably arranged on one side of the fixed high shelf and the movable goods shelf in the length direction of the fixed high shelf and the movable goods shelf. The movable goods shelf is provided with multiple temporary storage bins, so the second transfer robot can warehouse-out or warehouse-in multiple workbins at a time, improving the warehousing-out and warehousing-in efficiency. The two types of robots divide the work and cooperate to reduce the number of round trips of the second transfer robot when warehousing-out, thus improving the warehouse operation efficiency. The movable goods shelf is arranged in the first accommodation space at the lower part of the fixed high shelf. The fixed high shelf has a higher layer height and a larger storage capacity than the movable goods shelf, and can accommodate a larger number of workbins, thus increasing the storage capacity of the warehousing system.

In some embodiments of the present application, the two adjacent goods shelves are both movable goods shelves.

Each of the movable goods shelves includes a storage space and an accommodation space; the storage space is provided with multiple storage bins for storing workbins, and the accommodation space is arranged below the storage space for the second transfer robot to move the movable goods shelf.

The first transfer robot is movably arranged beside the two adjacent movable goods shelves, and is configured for arranging workbins storing the same type of goods in the movable goods shelves into a same movable goods shelf.

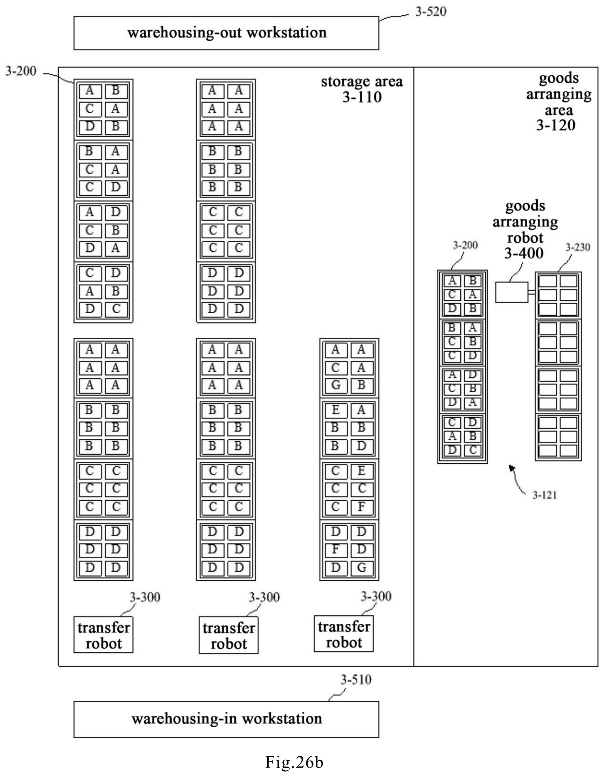

Specifically, referring to Fig. 26a and Fig. 26b firstly, in the embodiment of the present application, the goods shelves only include movable goods shelves. The goods shelves are arranged in two rows opposite to each other, and the number of goods shelves in each row is not less than 1.

The first transfer robot is movably arranged at a ground support frame between two opposite movable goods shelves; or is movably arranged on a same side of two movable goods shelves adjacently arranged in a length direction of the two movable goods shelves.

By applying the embodiment of the present application, the first transfer robot is configured for picking-up and placing workbins between the movable goods shelves and arranging the workbins storing the same type of goods into the same movable goods shelf, and the second transfer robot is configured for transferring the movable goods shelf after arranging to the destination, which realizes automated goods arranging; and when warehousing-out next time, the movable goods shelf after arranging is warehoused-out, which enables faster warehousing-out, and improves warehouse operation efficiency.

A second warehousing system provided by an embodiment of the present application is described in detail below.

In the warehousing system provided by the embodiment of the present application, the fixed high shelf is arranged in the storage area, the movable goods shelf is arranged in the goods arranging area, and the first transfer robot transfers the workbins from the fixed high shelf to the movable goods shelf, and the second transfer robot further carries the movable goods shelf to the sorting area. The two types of robots divide the work and cooperate, to reduce the number of round trips of the second transfer robot when warehousing-out, and thus improve the warehouse operation efficiency. With such an arrangement, since the fixed high shelf has a higher layer height and a larger storage capacity than the movable goods shelf and can accommodate a larger number of workbins, the storage capacity of the warehousing system is increased.

In order to make the objective, technical solutions and advantages of the present application clearer and more understandable, the technical solutions in the present application will be described in more detail and complete below with reference to the accompanying drawings in the embodiments of the present application. Obviously, the described embodiments are only some, and not all, of the embodiments of the present application. All other embodiments obtained based on the embodiments of the present application by those skilled in the art without any creative efforts fall into the scope of protection of the present application.

To facilitate the description of the embodiments of the present application, a coordinate system in the accompanying drawings is firstly defined, wherein an X-axis direction is a first direction, which is defined as a horizontal movement direction of the first transfer robot; a Y-axis direction is a second direction, which is defined as a direction in which the workbin is picked-up and placed by the first transfer robot; a Z -axis direction is a third direction, which is defined as the height direction of the first transfer robot.

As shown in Figs 1 and 2, the second warehousing system 100 provided by the embodiment of the present application includes a storage area 101, a goods arranging area 102, a sorting area 104, a first transfer robot 30 and a second transfer robot 40, wherein at least one fixed high goods shelf 10 is arranged in the storage area 101, and is fixed to the ground of the storage area 101, and the fixed high goods shelf has more storage positions and can store more workbins 60 compared with the movable goods shelf.

At least one movable goods shelf 20 is arranged in the goods arranging area 102. The movable goods shelf 20 is limited by its height and has fewer storage positions than the fixed high goods shelf 10. The movable goods shelf 20 is usually used for temporarily storing and transferring a to-be-sorted workbin or a to-be-warehoused-in workbin. A sorting workbench is arranged in the sorting area 104, and can be configured for picking items in the to-be-sorted workbins 60, so as to complete warehousing-out.

Furthermore, the movable goods shelf 20 is arranged corresponding to the fixed high goods shelf 10, and the movable goods shelf 20 can receive and temporarily store a workbin from the fixed high goods shelf 10, and further transfer the workbin to the sorting workbench to complete warehousing-out. Alternatively, the to-be-warehoused-in workbin can be temporarily stored in the movable goods shelf 20, and further transferred to the fixed high goods shelf 10, so as to complete warehousing-in.

The movable goods shelf 20 and the fixed high goods shelf 10 corresponding to the movable goods shelf 20 are located in the same operating channel 50. For example, the goods arranging area 102 is arranged on one side of the storage area 101 along the extension direction of the operating channel 50; in other words, the movable goods shelf 20 is arranged on one side or both sides of the fixed high goods shelf 10 along a warehousing-out path of the workbins 60. The first transfer robot moves in the operating channel 50 to transfer the workbin between the movable goods shelf 20 and the fixed high goods shelf 10; and/or, the first transfer robot 30 can transfer the workbins 60 between fixed high goods shelves 10; and/or, the first transfer robot 30 can transfer the workbins 60 between movable goods shelves 20.

Specifically, the first transfer robot 30 is configured as a guide-rail-type transfer robot; accordingly, the warehousing system 100 has a guide rail (not shown in the figure) adapted to the first transfer robot 30. The first transfer robot 30 is slidably mounted to the guide rail and can be configured for moving along an extension direction of the guide rail. The extension direction of the guide rail can be an arrangement direction of the movable goods shelf 20 relative to the fixed high goods shelf 10.

For example, as shown in Fig. 1, the operating channel 50 extends along the X-axis direction, and the guide rail can be horizontally arranged at the fixed high goods shelf 10, and the extension direction of the guide rail is consistent with the X-axis direction, that is, the extension direction of the guide rail is consistent with that of the operating channel 50. The guide rail can be arranged at the fixed high goods shelf 10, and the guide rail extends along the X-axis to the operating surface of the movable goods shelf, so that the first transfer robot 30 can cover the fixed high goods shelf and the movable goods shelf, and then is enabled to perform operations on the workbins in the fixed high goods shelf 10 and the movable goods shelf 20. It should be noted that the "operating surface" of the movable goods shelf 20 is defined as a plane where an entrance and exit of each storage position in the movable goods shelf 20 are located, wherein the plane is usually located on a side surface of the movable goods shelf 20.

The movable goods shelf 20 is arranged on one side of the fixed high goods shelf 10 along the extension direction of the guide rail to form the operating channel 50. A first traffic lane 81 is provided on the side of the movable goods shelf 20 away from the fixed high goods shelf 10 along the extension direction of the guide rail, and the extension direction of the first traffic lane 81 is perpendicular to that of the operating channel 50, and the first traffic lane is connected to the operating channel. It can be understood that the first transfer robot is configured for sliding along the X-axis direction within the operating channel 50, and the first traffic lane 81 can be a moving channel for the second transfer robot 40.

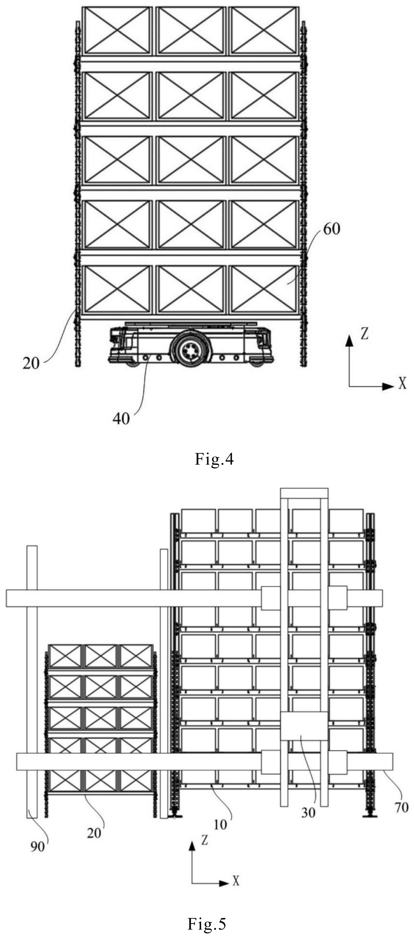

As shown in Fig. 3 and Fig. 4, in the embodiment of the present application, the second transfer robot 40 may be an AGV transfer robot, which carries the movable goods shelf and moves along the ground. For example, the second transfer robot 40 can move according to a planned path or autonomously select a path to move. The movable goods shelf 20 is arranged in cooperation with the second transfer robot 40, and the second transfer robot 40 can move to the bottom of the movable goods shelf 20, lift the movable goods shelf 20, further transfer the movable goods shelf 20 from the goods arranging area 102 to the sorting area 104, and pick the workbins 60 in the movable goods shelf 20.

As an example, the second transfer robot 40 includes an elevating mechanism, a tray, and a mobile chassis; wherein the mobile chassis serves as a carrying unit, and carries the tray and the elevating mechanism, and the mobile chassis can drive the second transfer robot 40 to move. The elevating mechanism is arranged between the tray and the chassis along the height direction of the second transfer robot 40, the elevating mechanism is retractable along the height direction, and can elevate the tray. The tray is used for carrying the movable goods shelf 20, and under an action of the elevating mechanism, the tray lifts the movable goods shelf 20 so that the movable goods shelf 20 is separated from the ground and is further moved.

In the related art, the warehousing system includes a movable goods shelf and an automated guided vehicle. The movable goods shelf is used for storing workbins. When warehousing-out and sorting, the automated guided vehicle carries the movable goods shelf to a sorting area. The to-be-sorted workbins are further sorted and warehoused-out through the sorting workbench. However, due to the limited carrying capacity of the automated guided vehicle and the limited layer height of the movable goods shelf, the current warehousing system has a small storage capacity.

In the warehousing system 100 provided by the embodiment of the present application, the fixed high shelf is arranged in the storage area 101, the movable goods shelf is arranged in the goods arranging area 102, and the first transfer robot 30 transfers the workbins 60 from the fixed high shelf 10 to the movable goods shelf 20, and the second transfer robot 40 further carries the movable goods shelf to the sorting area 104. The two types of robots divide the work and cooperates, to reduce the number of round trips of the second transfer robot 40 when warehousing-out, and thus improve the warehouse operation efficiency. With such an arrangement, since the fixed high shelf 10 has a higher layer height and a larger storage capacity than the movable goods shelf 20 and can accommodate a larger number of workbins 60, the storage capacity of the warehousing system 100 is increased.

In some embodiments, the storage area 101 in the embodiment of the present application includes multiple fixed high shelves 10, which are arranged in an array and form the above operating channel 50 and the first traffic lane 81, wherein the first traffic lane 81 is connected to the operating channel 50, wherein the operating channel 50 is configured as a moving channel for the first transfer robot, and the first traffic lane 81 is a moving channel for the second transfer robot 40.

As an example, the multiple fixed high goods shelves 10 are arranged to form multiple operating channels 50, wherein each operating channel 50 extends along the X-axis direction, and the multiple operating channels 50 are arranged along the Y-axis direction. The fixed high goods shelves 10 are arranged on both sides of the operating channels 50 along the Y-axis direction, and one first transfer robot 30 may be arranged within each operating channel 50, and the fixed high goods shelves 10 located on both sides of the operating channel 50 may share one first transfer robot 30 to pick-up and place a workbin.

As shown in Fig. 5, the first transfer robot 30 operates in the operating channel 50, and at least part of the guide rail 70 is fixed to the fixed high goods shelf 10, and the extension direction of the guide rail 70 is consistent with the length extension direction of the operating channel 50. For example, the guide rail 70 can be fixed to a crossbeam of the fixed high goods shelf 10 and arranged horizontally along the first direction. The first transfer robot 30 is slidably mounted to the guide rail 70 and configured for moving along the operating channel 50.

It should be noted that a part of the guide rail 70 extends to the goods arranging area 102 so that the first transfer robot 30 can pick-up and place the workbins 60 in the movable goods shelf 20. Based on this, the warehousing system 100 provided by the embodiment of the present application further includes a carrier frame 90, and the carrier frame 90 is used for mounting the guide rail 70 extending to the goods arranging area. The guide rail 70 includes a first part and a second part, an extension direction of the first part is consistent with that of the second part, and the first part is connected to the second part.

As an example, the first part and the second part are configured as an integral structure, or the first part and the second part are arranged horizontally and located at the same height level, so that the first transfer robot can be configured for sliding between the first part and the second part without obstacles.

The first part of the guide rail 70 located in the same operating channel 50 is mounted to the fixed high goods shelf 10. For example, the first part is fixed to a side of the fixed high goods shelf 10 facing the operating channel 50. The second part extends to the operating surface of the movable goods shelf and is fixed to the carrier frame 90; the carrier frame 90 is located on one side of the fixed high goods shelf 10 along the extension direction of the operating channel 50, and the carrier frame 90 is arranged in the goods arranging area 102.

For example, the carrier frame 90 is fixed to the ground of the goods arranging area 102, and the carrier frame 90 is located on one side of the movable goods shelf 20 along the second direction. The carrier frame 90 includes at least one column. One end of the second part is fixed to the column, and the other end of the second part can be fixed to the fixed high goods shelf 10 and connected to the first part. It can be understood that the first transfer robot 30 can be configured for sliding from the first part to the second part, or from the second part to the first part.

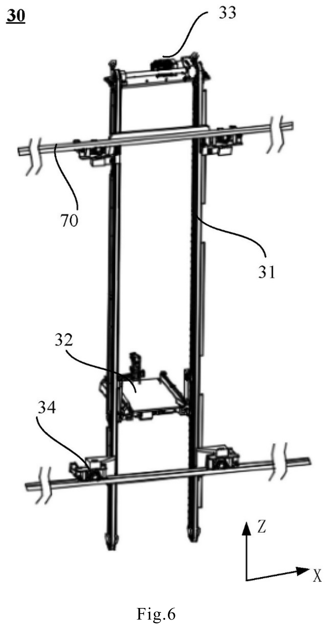

As shown in Fig. 6, the first transfer robot 30 provided by the embodiment of the present application includes a portal frame 31, a sliding mechanism 34, a lifting and lowering mechanism 33 and a picking-up mechanism 32; wherein the portal frame 31 is slidably connected to the guide rail 70, and the sliding mechanism 34 is arranged at the portal frame 31 and is used for providing a sliding force to the portal frame 31 so that the portal frame 31 can slide relative to the guide rail 70. The picking-up mechanism 32 is slidably mounted to the portal frame 31 and can be configured for sliding relative to the portal frame 31 along a height direction of the portal frame 31.

The picking-up mechanism 32 is configured to be horizontally retractable and extend into the storage position of the goods shelf to pick-up and place the workbins 60. The lifting and lowering mechanism 33 is arranged at the portal frame 31 and connected with the picking-up mechanism 32. The lifting and lowering mechanism 33 is configured to provide a lifting force to the picking-up mechanism 32 so that the picking-up mechanism 32 moves up and down relative to the portal frame 31 in the height direction, and then the picking-up mechanism 32 can operate on the workbins 60 located at different heights.

On the basis of the above embodiment, in order to improve the warehousing-out efficiency of the warehousing system 100, a gap is maintained between the bottom of the fixed high goods shelf 10 and the ground, to form a second traffic lane 82 for the second transfer robot 40 to shuttle. That is, when the second transfer robot 40 does not carry the movable goods shelf 20, it can move freely at the bottom of the fixed high goods shelf 10; of course, when the second transfer robot 40 does not carry the movable goods shelf 20, it can also move freely at the bottom of the movable goods shelf 20.

Continuing to refer to Fig. 1 and Fig. 2, in order to improve the picking efficiency, the warehousing system 100 provided by the embodiment of the present application further includes a buffer area 103, which is arranged close to the sorting area 104, and the buffer area 103 is located in a moving path of the second transfer robot 40 from the goods arranging area 102 to the sorting area 104. For example, the buffer area 103 is located between the sorting area 104 and the goods arranging area 102 near the sorting area 104.

Furthermore, the buffer area 103 is used for temporarily storing the movable goods shelf 20 to be moved to the sorting area 104. The movable goods shelf 20 queues in the buffer area 103 and waits to be picked, so that the workbins 60 of the movable goods shelf 20 to be picked can be picked in order, to improve the picking efficiency.

During picking goods, the distribution of the inventory workbins 60 affects the picking and warehousing-out efficiency. To further improve the picking efficiency, the distribution of the inventory workbins 60 in the storage area and the goods arranging area can be adjusted, especially the distribution of the inventory workbins 60 in the storage area can be adjusted to match the workbins 60 with orders that have not been picked. For example, the inventory workbins 60 to be picked can be adjusted to the goods shelves in the goods arranging area 102 to facilitate warehousing-out.

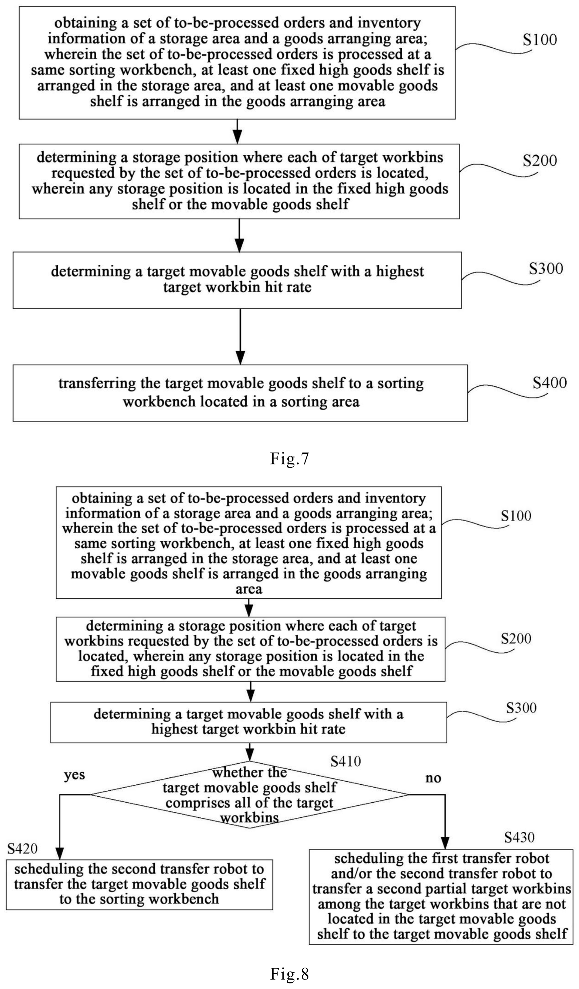

As shown in Fig. 7, an embodiment of the present application provides an order processing method, including the following steps:
S100: obtaining a set of to-be-processed orders and inventory information of a storage area 101 and a goods arranging area 102.

Specifically, the set of to-be-processed orders refers to an order set consisting of orders for picking items, and the set of to-be-processed orders is sorted at the same sorting workbench. The inventory information refers to inventory information of items stored in the storage area 101 and the goods arranging area 102, including but not limited to types of items, workbins 60 and storage positions (position information) where the items are located, etc.

Wherein, at least one fixed high goods shelf 10 is arranged in the storage area 101, and at least one movable goods shelf 20 is arranged in the goods arranging area 102; the movable goods shelf 20 is limited by its height and has fewer storage positions than the fixed high goods shelf 10, and the movable goods shelf 20 is usually used for temporarily storing and transferring a to-be-sorted workbin or a to-be-warehoused-in workbin.

Furthermore, the movable goods shelf 20 is arranged corresponding to the fixed high goods shelf 10, and the movable goods shelf 20 can receive and temporarily store the workbins 60 from the fixed high goods shelf 10, and further transfer the workbins 60 to the sorting workbench to complete warehousing-out. Alternatively, the to-be-warehoused-in workbins 60 can be temporarily stored in the movable goods shelf 20, and further transferred to the fixed high goods shelf 10, so as to complete warehousing-in.

Optionally, the movable goods shelf can also be used for storing the workbins permanently, such as those with a high popularity.

It should be noted that before adjusting the distribution of inventory workbins 60, it is necessary to firstly obtain the set of to-be-processed orders and the inventory information, so that the inventory distribution of the inventory area can be subsequently adjusted based on the set of to-be-processed orders and the inventory information, to achieve the centralized distribution of inventory workbins 60 and increase the warehousing-out efficiency.

S200: determining a storage position where each of target workbins requested by the set of to-be-processed orders is located, wherein any storage position is located in the fixed high goods shelf 10 or the movable goods shelf 20.

Specifically, each target workbin requested by the set of to-be-processed orders is obtained according to the set of to-be-processed orders, and the position of a goods shelf where each target workbin is located and the storage position in the goods shelf where each target workbin is located are further determined according to the inventory information of the storage area 101 and the goods arranging area 102, wherein the above goods shelf includes the fixed high goods shelf 10 located in the storage area 101 and the movable goods shelf 20 located in the goods arranging area 102, that is, each target workbin is located in the fixed high goods shelf 10, or in the movable goods shelf 20.

S300: determining a target movable goods shelf with a highest target workbin hit rate.

Specifically, in the embodiment of the present application, the set of to-be-processed orders corresponds to multiple target workbins, and the multiple target workbins are usually dispersed in the goods arranging area 102 and the storage area 101. For example, some of the target workbins are located in at least one movable goods shelf 20, and some of the target workbins are located in at least one fixed high goods shelf 10. If the number of target workbins in a movable goods shelf 20 accounts for the largest proportion, then the movable goods shelf 20 is the target movable goods shelf.

S400: transferring the target movable goods shelf to a sorting workbench located in a sorting area 104.

Specifically, the warehousing system 100 provided by the embodiment of the present application includes a control center, which may be a remote control computer, etc. The control center is configured for scheduling the first transfer robot 30 and the second transfer robot 40 to transfer the target workbin to be picked and transfer the target workbin to be picked to the sorting area 104 for picking, so as to complete the picking and warehousing-out of the items.

The first transfer robot 30 is a guide-rail-type transfer robot, which is configured for sliding along a length extension direction of the fixed high goods shelf 10 and can be configured for sliding to an operating surface of the movable goods shelf 20; the first transfer robot 30 is used for transferring the target workbin in the storage area 101, in the goods arranging area 102, and/or between the storage area 101 and the goods arranging area 102, that is, the first transfer robot 30 can transfer the target workbin in the storage area 101, transfer the target workbin in the goods arranging area 102, and transfer the target workbin between the storage area 101 and the goods arranging area 102.

The movable goods shelf 20 is transferred in the goods arranging area 102, and/or between the sorting area 104 and the goods arranging area 102 by the second transfer robot 40, that is, the second transfer robot 40 transfers the movable goods shelf 20 in the goods arranging area 102, and/or, transfers the movable goods shelf 20 between the goods arranging area 102 and the sorting area 104. The second transfer robot is configured for moving along the ground. When the target movable goods shelf is determined, the control center schedules the second transfer robot 40 to transfer the target movable goods shelf to the sorting workbench in the sorting area 104 for sorting, so as to complete warehousing-out.

In this way, in the order processing method provided by the embodiment of the present application, by arranging the fixed high goods shelf 10 in the storage area 101 and arranging the movable goods shelf 20 in the goods arranging area 102, the target workbin in the fixed high goods shelf 10 can be transferred to the target movable goods shelf, and further transferred to the sorting workbench in the sorting area 104 through the target movable goods shelf. Since the fixed high shelf 10 has a higher layer height and a larger storage capacity than the movable goods shelf 20 and can accommodate a larger number of workbins, the storage capacity of the warehousing system is increased.

Furthermore, the order processing method can transfer the target movable goods shelf with the highest target order hit rate to the sorting workbench, thus improving the target workbin hit rate, so that more target workbins can be hit by single transfer of the target movable goods shelf, thereby improving the warehousing-out efficiency, that is, improving the warehouse operation efficiency.

As shown in Fig. 8, in the order processing method provided by an embodiment of the present application, step S400 of transferring the target movable goods shelf to the sorting workbench located in the sorting area 104, includes:
Step S410: in response to determining that the target movable goods shelf includes all of the target workbins, performing step S420 of scheduling a second transfer robot 40 to transfer the target movable goods shelf to the sorting workbench.

Specifically, in response to determining that all of the target workbins requested by the set of to-be-processed orders are located in the target movable goods shelf, the control center can schedule the second transfer robot 40 to transfer the target movable goods shelf to the sorting workbench for sorting, so as to complete warehousing-out of all of the target workbins requested by the set of to-be-processed orders.

On the contrary, in response to determining that some target workbins among all the target workbins requested by the set of to-be-processed orders are located in the target movable goods shelf, then performing step S430 of scheduling a first transfer robot 30 and/or a second transfer robot 40 to transfer the some target workbins that are not located in the target movable goods shelf to the target movable goods shelf.

Specifically, all of the target workbins requested by the set of to-be-processed orders include a first partial target workbins and a second partial target workbins, wherein the first partial target workbins are located in the target movable goods shelf, and the second partial target workbins are not located in the target movable goods shelf. For example, if the second partial target workbins are located in the fixed high goods shelf 10 or another movable goods shelf 20, the control center schedules the first transfer robot 30 and/or the second transfer robot 40 to transfer the second partial target workbins to the target movable goods shelf.

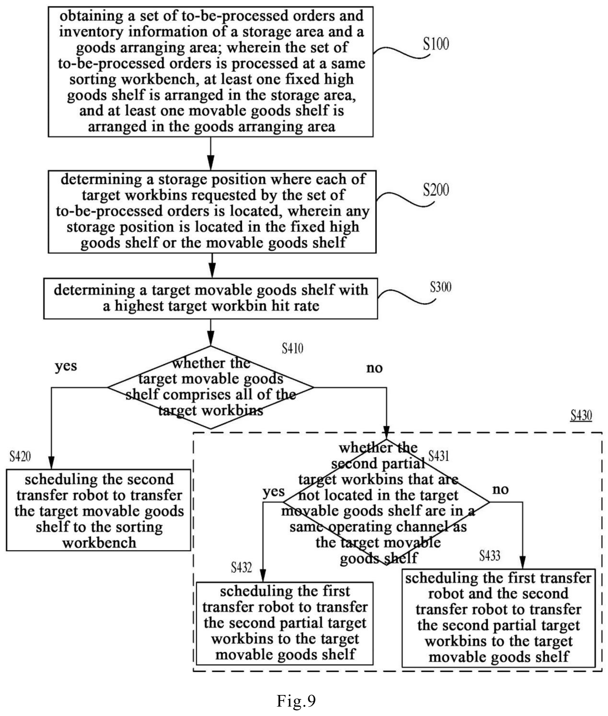

In detail, as shown in Fig. 9, step S430 includes step S431: in response to determining that storage positions where the second partial target workbins are located are in a same operating channel 50 as the target movable goods shelf, performing step S432 of scheduling the first transfer robot 30 to transfer the second partial target workbins to the target movable goods shelf.

To facilitate the description of the embodiments of the present application, the multiple operating channels 50 in Fig. 1 may be defined as a first operating channel to a fifth operating channel in sequence along the Y-axis direction, wherein the first operating channel is located at the bottom and the fifth operating channel is located at the top.

For example, the target movable goods shelf where the first partial target workbins are located is located in the second operating channel, and the storage positions where the second partial target workbins are located are also located in the second operating channel. In other words, the storage positions where the second partial target workbins are located can be picked-up and placed by the first transfer robot 30 in the second operating channel, so that the first transfer robot 30 moves along the second operating channel toward the position where the target movable goods shelf is located, and can transfer the second partial target workbins to the target movable goods shelf.

On the contrary, in response to determining that the storage positions where the second partial target workbins are located are in a different operating channel 50 from the target movable goods shelf, then performing step S433 of scheduling the first transfer robot 30 and the second transfer robot 40 to transfer the second partial target workbins to the target movable goods shelf.

In this case, the operating channel where the second partial target workbins are located is firstly determined, and then based on the operating channel where the second partial target workbins are located, the target movable goods shelf is moved to the operating channel where the second partial target workbins are located by the second transfer robot; finally, the second partial target workbins are transferred to the target movable goods shelf by the first transfer robot in the operating channel where the second partial target workbins are located.

For example, the target movable goods shelf where the first partial target workbins are located is located in the second operating channel, and the second partial target workbins are in another operating channel. The embodiment of the present application is explained by taking the second partial target workbins being located in the fixed high goods shelf 10 in the first operating channel as an example.

The control center schedules the second transfer robot to transfer the target movable goods shelf in the second operating channel to the first operating channel, and the target movable goods shelf is located on one side of the fixed high goods shelf 10 in the first operating channel. The second partial target workbins are picked up by the first transfer robot 30 in the first operating channel; after picking-up, the first transfer robot 30 is configured for moving along the first operating channel toward the position where the target movable goods shelf is located, and can transfer the second partial target workbins to the target movable goods shelf.

In some embodiments, the target movable goods shelf includes the first partial target workbins, and the storage positions in the target movable goods shelf are full at the same time. In this case, the step of scheduling the first transfer robot 30 and the second transfer robot 40 to transfer the second partial target workbins that are not located in the target movable goods shelf to the target movable goods shelf includes: transferring non-target workbins in the target movable goods shelf to a non-target movable goods shelf or a fixed high goods shelf to form free storage positions; and transferring some of the second partial target workbins to the storage positions of the target movable goods shelf.

Specifically, the first partial target workbins are in the target movable goods shelf, and all the storage positions in the target movable goods shelf are full, that is, the target movable goods shelf includes the first partial target workbins and other non-target workbins, and cannot store the second partial target workbins no longer. Therefore, it is necessary to transfer the non-target workbins in the target movable goods shelf to the storage positions of another non-target movable goods shelf 20 or the fixed high shelf 10 through the first transfer robot 30 and/or the second transfer robot 40, to form a number of free storage positions in the target movable goods shelf; further, at least one of the second partial target workbins is transferred to the free storage positions formed on the target movable goods shelf through the first transfer robot 30 and/or the second transfer robot 40.

In some embodiments, step S400 of transferring the target movable goods shelf to the sorting workbench includes: scheduling the second transfer robot to transfer the target movable goods shelf to the sorting workbench in response to determining that the target movable goods shelf includes some of the target workbins and meets an order hit rate threshold.

Specifically, the set of to-be-processed orders corresponds to multiple target workbins, some of the target workbins are located in the target movable goods shelf, and the target movable goods shelf meets the order hit rate threshold. It should be noted that the order hit rate is a ratio of the number of the some of the target workbins in the target movable goods shelf to all of the target workbins requested by the set of to-be-processed orders.

Accordingly, the control center sets the order hit rate threshold. In response to determining that the order hit rate in the target movable goods shelf is greater than or equal to the order hit rate threshold, the control center can schedule the second transfer robot 40 to transfer the target movable goods shelf to the sorting workbench for sorting. In this way, the target workbins are concentrated in the target movable goods shelf as much as possible, so that the minimum order hit rate requirement can be meet by a single transfer of the target movable goods shelf, thereby reducing the number of transfers of the target movable goods shelf and improving the warehousing-out efficiency.

In other embodiments, the set of to-be-processed orders corresponds to multiple target workbins, wherein the first partial target workbins are located in the target movable goods shelf, and the second partial target workbins are not located in the target movable goods shelf. In this case, it is necessary to schedule the first transfer robot 30 and/or the second transfer robot 40 to transfer the second partial target workbins that are not located in the target movable goods shelf to the target movable goods shelf.

Specifically, goods arranging is performed on the second partial target workbins by using the first transfer robot 30 and/or the second transfer robot 40, to transfer at least one of the second partial target workbins to the target movable goods shelf. The specific implementation solution is not described in detail here. The control center set a preset duration for the goods arranging, that is, goods arranging is performed on the second partial workbins within the preset duration.
in response to determining that the preset duration is reached, the goods arranging is stopped, and the second transfer robot 40 is scheduled to transfer the target movable goods shelf to the sorting workbench. In this way, the moving frequency at which the target movable goods shelf is transferred can be controlled, to avoid delaying warehousing-out of the target workbins due to prolonged goods arranging, which affects the warehousing-out efficiency.

A third warehousing system provided by the embodiment of the present application is described in detail below.

The third warehousing system provided by the embodiment of the present application includes a storage area, a goods arranging area, a sorting area, a first transfer robot and a second transfer robot.

At least one fixed high goods shelf is arranged in the storage area, and at least one movable goods shelf is arranged in the goods arranging area. The movable goods shelf is arranged immediately adjacent to the fixed high goods shelf.

A support frame is fixedly arranged at the fixed high goods shelf; the first transfer robot is mounted to the support frame and is configured for moving along the support frame to transfer a workbin between the storage area and the goods arranging area.

The second transfer robot is configured for transferring the movable goods shelf in the goods arranging area and/or between the goods arranging area and the sorting area.

Specifically, as shown in Fig. 1 and Fig. 2, the movable goods shelf may be located on one side or both sides of the fixed high goods shelf and be arranged immediately adjacent to the fixed high goods shelf.

As shown in Fig. 13a and Fig. 13b, the movable goods shelf may also be located at the bottom of the fixed high goods shelf and be arranged immediately adjacent to the fixed high goods shelf.

Regardless of the way for arranging the movable goods shelf, the movable goods shelf can be arranged immediately adjacent to the fixed high goods shelf.

In the third warehousing system provided by the embodiment of the present application, the fixed high shelf is arranged in the storage area, and the movable goods shelf is arranged in the goods arranging area, and the workbin is transferred from the fixed high shelf to the movable goods shelf by the first transfer robot, and further the movable goods shelf is carried to the sorting area by the second transfer robot. The two types of robots work divide the work and cooperate to reduce the number of round trips of the second transfer robot when warehousing-out, and thus improve the warehouse operation efficiency. In this arrangement, since the fixed high shelf has a higher layer height and a larger storage capacity than the movable goods shelf and can accommodate a larger number of workbins, the storage capacity of the warehousing system is increased. In addition, the movable goods shelf can be arranged immediately adjacent to the fixed high shelf in a variety of ways, making the arrangement of the movable goods shelf more flexible and suitable for more work scenarios.

In some embodiments, as shown in Fig. 5 and Fig. 13a, the support frame includes multiple crossbeams spaced apart in a vertical direction.

The first transfer robot is slidably mounted to the multiple crossbeams and configured for moving along an extension direction of the crossbeams to transfer a workbin between the storage area and the goods arranging area.

In some embodiments, as shown in Fig. 1 and Fig. 2, the movable goods shelf and the fixed high goods shelf corresponding to the movable goods shelf are arranged along the extension direction of an operating channel. A guide rail adapted to the first transfer robot is arranged at the crossbeams; an extension direction of the guide rail is consistent with the extension direction of the operating channel.

The guide rail is arranged at the fixed high goods shelf and extends to the operating surface of the movable goods shelf, so that the first transfer robot transfers the workbin between the fixed high goods shelf and the movable goods shelf.

Based on this embodiment, the first transfer robot can pick-up the workbin in the fixed high goods shelf at a first part of the guide rail, and move to a second part of the guide rail to place the workbin in the movable goods shelf, thereby realizing the transfer of the workbin between the storage area and the goods arranging area.

In some embodiments, as shown in Fig. 13a and Fig. 13b, the fixed high goods shelf includes a first storage space and a first accommodation space. The first storage space is provided with multiple storage bins for storing workbins; the first accommodation space is arranged below the first storage space for accommodating the movable goods shelf.

The movable goods shelf includes a second storage space and a second accommodation space; the second storage space is provided with multiple temporary storage bins for temporarily storing workbins; the second accommodation space is arranged below the second storage space for the second transfer robot to move the movable goods shelf.

Based on this embodiment, the first transfer robot can pick-up the workbin in the fixed high goods shelf at the upper part by moving up and down of the picking-up component, and then move to the lower part to place the workbin in the movable goods shelf, thereby realizing the transfer of workbin between the storage area and the goods arranging area, and shorting the moving distance of the first transfer robot on the guide rail.

A warehousing apparatus provided by the embodiment of the present application is described in detail below.

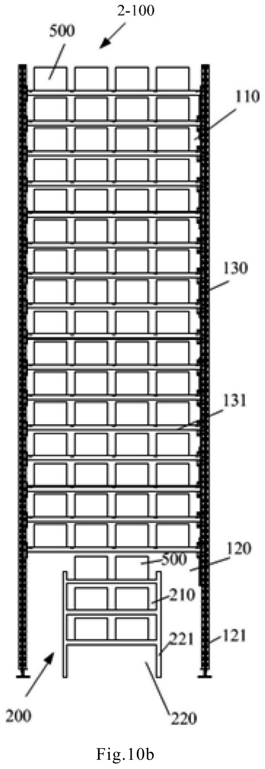

Referring to Fig. 10a and Fig. 10b, Fig. 10a is a schematic diagram of stereoscopic structural of a first embodiment of a warehousing apparatus provided by an embodiment of the present application; Fig. 10b is a side view of the warehousing apparatus shown in Fig. 10a. As shown in Fig. 10a and Fig. 10b, the warehousing apparatus includes a first robot goods shelf 2-100 and a second robot goods shelf 200. Wherein:
The first robot goods shelf 2-100 includes a first storage space 110 and a first accommodation space 120; the first storage space 110 is provided with multiple storage bins 111 for storing containers 500; the first accommodation space 120 is arranged below the first storage space 110, and is used for accommodating the second robot goods shelf 200; the first robot goods shelf 2-100 is provided with a support frame 130 capable of mounting the first robot 300; the first robot 300 is configured for picking-up and placing a container 500 between the first robot goods shelf 2-100 and the second robot goods shelf 200;

The second robot goods shelf 200 includes a second storage space 210 and a second accommodation space 220; the second storage space 210 is provided with multiple temporary storage bins 211 for temporarily storing containers 500; the second accommodation space 220 is arranged below the second storage space 210 for the second robot 400 to move the second robot goods shelf 200.

In the embodiment of the present application, the first robot 300 mounted to the first robot goods shelf 2-100 can pick-up and place the containers 500 between the first robot goods shelf 2-100 and the second robot goods shelf 200 to realize the goods arranging function; the second robot 400 can drive the second robot goods shelf 200 to move; the second robot goods shelf 200 is provided with multiple temporary storage bins 211, so that the second robot 400 can warehouse-in or warehouse-out multiple containers 500 at a time by moving the entire second robot goods shelf 200 through the second robot 400, thereby increasing the warehousing-out and warehousing-in efficiency. The two types of robots divide the work and cooperate to reduce the number of round trips of the second transfer robot when warehousing-out, and thus increase the warehouse operation efficiency. The second robot goods shelf 200 is arranged in the first accommodation space 120 at the lower part of the first robot goods shelf 2-100. Compared with the second robot goods shelf 200, the first robot goods shelf 2-100 which is a fixed high goods shelf, has a higher layer height and a larger storage capacity than the second robot goods shelf 200, and can accommodate a larger number of containers 500, thereby improving the storage capacity of the warehousing apparatus.

It should be noted that the containers in this embodiment refer to containers that can accommodate goods, such as workbins, trays, etc., which is not limited in the present application.

In some embodiments, as shown in Fig. 10a and Fig. 10b, the support frame 130 includes multiple crossbeams 131 spaced apart in the vertical direction of the first robot goods shelf 2-100, so that the first robot 300 is mounted on the outside of the first robot goods shelf 2-100 based on the crossbeams 131.

The first robot 300 can be configured for sliding along the crossbeams 131 to move horizontally along the first robot goods shelf 2-100. The specific coordination way is described in detail in the subsequent description.

It can be seen that based on this embodiment, the first robot 300 can move horizontally in the length direction of the first robot goods shelf 2-100 to pick-up and place each container 500 in the length direction. In addition, the picking-up component 322 of the first robot 300 can move up and down along the height direction of the first robot goods shelf 2-100 to pick-up and place the containers 500 at different heights in the first robot goods shelf 2-100. The specific picking-up and placing way is detailed in the subsequent description.

In this embodiment, as shown in Fig. 10a and Fig. 10b, multiple first support columns 121 are disposed below the first storage space 110 of the first robot goods shelf 2-100, and the multiple first support columns 121 extend toward the ground to form the first accommodation space 120.

Multiple second support columns 221 are disposed below the second storage space 210 of the second robot goods shelf 200, and the multiple second support columns 221 extend toward the ground to form the second accommodation space 220.

In this embodiment, the first accommodation space 120 is formed by simple first supporting columns 121, which can provide multiple channels for the second robot 400 to drive the second robot goods shelf 200 to move, making the warehousing-out and warehousing-in operations more flexible. At the same time, the second accommodation space 220 is formed by simple second supporting columns 221, which can provide multiple channels for the second robot 400 to move to the bottom of the second robot goods shelf 200, so that the second robot 400 can move to the bottom of the second robot goods shelf 200 from all directions, and the moving direction is not limited. At the same time, with the second accommodation space 220, the second robot 400 can lift the second robot goods shelf 200 off the ground, or place the second robot goods shelf 200 on the ground.

In the embodiment of the present application, the first robot goods shelf 2-100 may be a double-deep shelf or a multi-deep shelf; the second robot goods shelf 200 may also be a double-deep shelf or a multi-deep shelf, as long as it is ensured that the first accommodation space 120 of the first robot goods shelf 2-100 can provide enough moving space for the second robot 400 to drive the second robot goods shelf 200 to move.

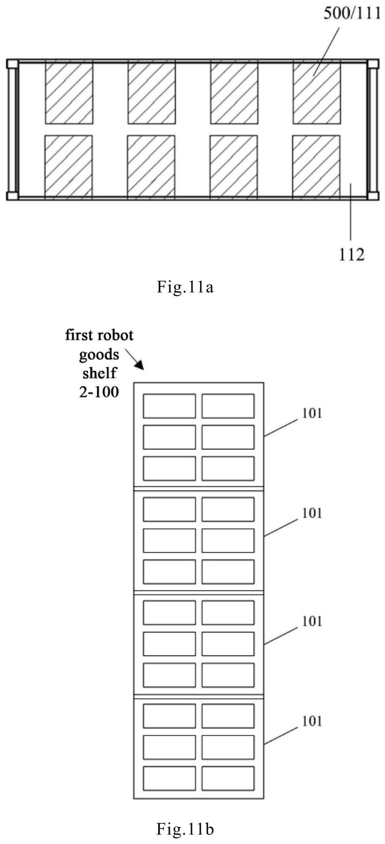

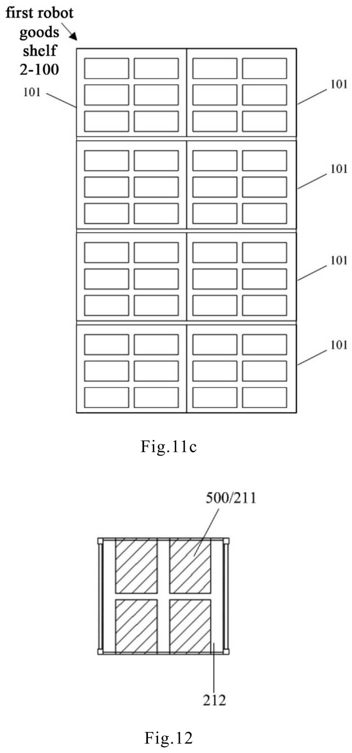

In this embodiment, both the first robot goods shelf 2-100 and the second robot goods shelf 200 can both be a double-deep shelf; the picking-up component of the first robot 300 can pick-up and place containers at double-deep. Referring to Figs. 11a and 12, Fig. 11a is a top view of the first robot goods shelf in the embodiment shown in Fig. 10a; Fig. 12 is a top view of the second robot goods shelf in the embodiment shown in Fig. 10a. As shown in Figs. 11a and 12, in this embodiment, both the first robot goods shelf 2-100 and the second robot goods shelf 200 can both be a double-deep shelf, that is, a goods shelf that can accommodated two containers 500 in the width direction. In this embodiment, the first robot goods shelf 2-100 is provided with multiple first layer-boards 112 along the height direction, and the storage bins are respectively provided on the first layer-boards 112. The length of the first robot goods shelf 2-100 is not limited. For example, as shown in Fig. 11a, four storage bins 111 are arranged on a first layer-board 112 of the first robot goods shelf 2-100 along the length direction, and each storage bin 111 can accommodate one container 500, that is, four containers 500 can be accommodated in the length direction. In this way, in the case of double-deep, eight storage bins 111 can be provided on each first layer-board 112. In other embodiments, both the first robot goods shelf 2-100 and the second robot goods shelf 200 can be a multi-deep shelf, and two, three or more storage bins 111 can be provided in the length direction of the first robot goods shelf 2-100, and two, three or more temporary storage bins 211 can be provided in the length direction of the second robot goods shelf 200, which can be configured according to actual needs.

In order to facilitate the second robot 400 to drive the second robot goods shelf 200 to move in the first accommodation space 120 of the first robot goods shelf 2-100, in this embodiment, the length of the cross-section of the first robot goods shelf 2-100 is greater than that of the cross-section of the second robot goods shelf 200; the width of the cross-section of the first robot goods shelf is greater than or equal to that of the cross-section of the second robot goods shelf. In this embodiment, the second robot goods shelf 200 is provided with multiple second layer-boards 212 along the height direction, and the temporary storage bins 211 are respectively provided on the second layer-boards 212. The number of second layer-boards 212 can be set according to the height of the first accommodation space 120 of the first robot goods shelf 2-100 and the height of the second robot. There is no limitation here. For example: as shown in Figs. 10a and 10b, the second robot goods shelf 200 may include 3 second layer-boards 212.

As shown in Fig.12, 2 temporary storage bins 211 are provided on a second layer-board 212 of the second robot goods shelf 200 along the length direction, and each temporary storage bin 211 can accommodate one container 500, that is, two containers 500 can be accommodated in the length direction. Thus, in the case of double-deep, 4 temporary storage bins 211 can be arranged on each second layer-board 212.

In addition, the first robot goods shelf 2-100 may be one integrated wide goods shelf, or may be formed by splicing multiple narrow goods shelves in sequence in one direction, or may be formed by splicing two narrow goods shelves together back to back.

In practical applications, the first robot goods shelf 2-100 includes multiple sub-goods shelves 101; the multiple sub-goods shelves 101 are arranged in sequence in one column along a length direction or width direction of the multiple sub-goods shelves; or, the multiple sub-goods shelves 101 are arranged in sequence in an array along the length direction and width direction of the multiple sub-goods shelves.

Referring to Fig. 11b, Fig. 11b is a top view of a first robot goods shelf in a second embodiment of the warehousing apparatus provided by an embodiment of the present application; in this embodiment, multiple sub-goods shelves 101 are arranged in sequence in one column along their length direction; as shown in Fig. 11b, four sub-goods shelves 101 are arranged in one column. Referring to Fig. 11c, Fig. 11c is a top view of a first robot goods shelf in a third embodiment of the warehousing apparatus provided by an embodiment of the present application; in this embodiment, multiple sub-goods shelves 101 are arranged in sequence in an array along their length direction and width direction; as shown in Fig. 11c, the multiple sub-goods shelves 101 are arranged in an array of 4*2.

In addition, for the embodiment shown in Fig. 11c, in the case of such channel layout, when the first robot goods shelf 2-100 is composed of two columns of narrow goods shelves (i.e., the sub-goods shelves 101 in Fig. 11c) spliced together back to back, the goods shelf width of the second robot goods shelf 200 can be equal to the width of a narrow goods shelf (i.e., a sub-goods shelf 101 in Fig. 11c) in the first robot goods shelf 2-100. In this way, while ensuring that the second robot 400 drives the second robot goods shelf 200 to pass through the first accommodation space 120 of the first robot goods shelf 2-100, the first accommodation space 120 of the first robot goods shelf 2-100 can accommodate a larger number of the second robot goods shelves 200, and the second robot goods shelf 200 can accommodate a larger number of containers 500.

By application of the warehousing apparatus shown in Fig. 11 b and Fig. 11c, the storage capacity of the warehousing apparatus can further be improved.

A fourth warehousing system provided by an embodiment of the present application is described in detail below.

Referring to Fig. 13a and Fig. 13b, Fig. 13a is a schematic diagram of stereoscopic structure of a first embodiment of the fourth warehousing system provided by the embodiment of the present application; Fig. 13b is a side view of the fourth warehousing system shown in Fig. 13a. As shown in Fig. 13a and Fig. 13b, the warehousing system includes a first robot goods shelf 2-100, a second robot goods shelf 200, a first robot 300 and a second robot 400; wherein:
The first robot goods shelf 2-100 includes a first storage space 110 and a first accommodation space 120; the first storage space 110 is provided with multiple storage bins 111 for storing containers 500; the first accommodation space 120 is arranged below the first storage space 110, and is used for accommodating the second robot goods shelf 200; the first robot goods shelf 2-100 is provided with a supporting frame 130 capable of mounting the first robot 300.

The second robot goods shelf 200 includes a second storage space 210 and a second accommodation space 220; the second storage space 210 is provided with multiple temporary storage bins 211 for temporarily storing containers 500; the second accommodation space 220 is arranged below the second storage space 210 for the second robot 400 to move the second robot goods shelf 200.

The first robot 300 is mounted to the first robot goods shelf 2-100 based on the support frame 130, and is configured for moving a container 500 in a storage bin 111 of the first robot goods shelf 2-100 to a temporary storage bin 211 of the second robot goods shelf 200, or move the container 500 in the temporary storage bin 211 of the second robot goods shelf 200 to the storage bin 111 of the first robot goods shelf 2-100;
the second robot 400 is configured for carrying the second robot goods shelf 200 that carries the to-be-warehoused-out containers 500 to a destination, or carrying the second robot goods shelf 200 that carries the to-be-warehoused-in containers 500 to the first accommodation space 120 of the first robot goods shelf 2-100.

In the fourth warehousing system provided by the embodiment of the present application, the first robot goods shelf 2-100 can accommodate the second robot goods shelf 200; the first robot 300 mounted to the first robot goods shelf 2-100 can pick-up and place the containers 500 between the first robot goods shelf 2-100 and the second robot goods shelf 200 to realize the goods arranging function; the second robot 400 can drive the second robot goods shelf 200 to move between the first robot goods shelf 2-100 and the destination to realize the warehousing-out and warehousing-in functions of the containers 500. In the embodiment of the present application, the second robot goods shelf 200 is provided with multiple temporary storage bins 211. Therefore, by driving the second robot goods shelf 200 by means of the second robot 400 to move between the first robot goods shelf 2-100 and the destination, the second robot 400 is enabled to warehouse-out or warehouse-in-the multiple containers 500 at a time, thereby improving the efficiency of warehousing-in and warehousing-out. The two types of robots divide the work and cooperate, to reduce the number of round trips of the second transfer robot when warehousing-out, and thus improve the warehouse operation efficiency. The second robot goods shelf 200 is arranged in the first accommodation space 120 at the lower part of the first robot goods shelf 2-100. Compared with the second robot goods shelf 200, the first robot goods shelf 2-100 which is a fixed high goods shelf, has a higher layer height and a larger storage capacity than the second robot goods shelf 200, and can accommodate a larger number of the containers 500, thereby increasing the storage capacity of the warehousing apparatus.

It should be noted that the first robot goods shelf 2-100 and the second robot goods shelf 200 in this embodiment constitute the aforementioned warehousing apparatus, and the specific structure of the warehousing apparatus may be the same as that of the aforementioned embodiment, which will not be described in detail here.

In the following, the first robot 300, the second robot 400, and the specific method for warehousing-in and warehousing-out in the warehousing system provided by the embodiment of the present application are described in detail.

As shown in Fig. 13a, the support frame 130 includes multiple crossbeams 131 spaced apart in a vertical direction of the first robot goods shelf 2-100.

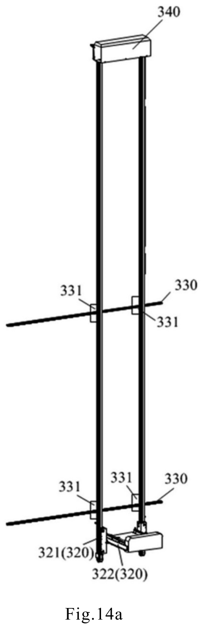

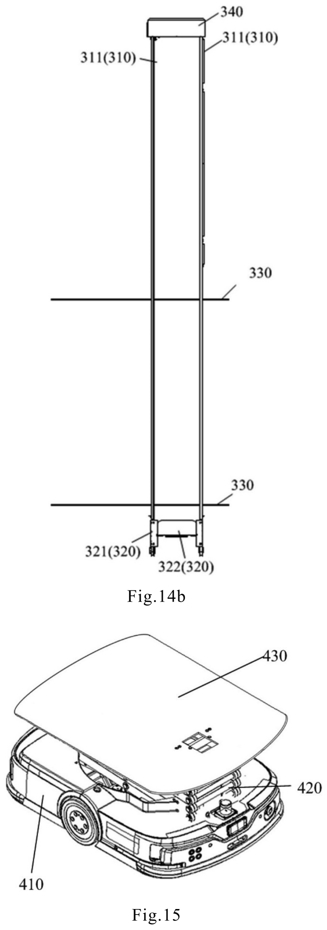

Referring to Fig. 13a, Fig. 13b, Fig. 14a and Fig. 14b, Fig. 14a is a schematic structural diagram of the first robot in the embodiment shown in Fig. 13a from a first angle of view; Fig. 14b is a schematic structural diagram of the first robot in the embodiment shown in Fig. 13a from a second angle of view. As shown in Fig. 14a and Fig. 14b, the first robot 300 includes a column portal frame 310, a transfer mechanism 320 and at least one sliding guide rail 330. The column portal frame 310 is mounted along a vertical direction of the first robot goods shelf 2-100; the transfer mechanism 320 is arranged at the column portal frame 310, and is used for picking-up and placing containers 500 at different heights in the first robot goods shelf 2-100; the at least one sliding guide rail 330 is fixedly mounted to the crossbeams 131. The column portal frame 310 is slidably connected to the at least one sliding guide rail 330, so that the column portal frame 310 and the transfer mechanism 320 can be configured for sliding horizontally along the crossbeams 131 to pick-up and place different containers 500 in the length direction of the first robot goods shelf 2-100.

In this embodiment, as shown in Fig. 13a and Fig. 13b, multiple crossbeams 131 vertically spaced apart from each other are arranged along the vertical direction on the side surface of the first robot goods shelf 2-100 in the length direction. In order to ensure the stable mounting of the first robot 300, two sliding guide rails 330 are arranged for the first robot 300, and are respectively fixed to the two crossbeams 131 (for example, fixed to the crossbeams by screws). The column portal frame 310 is slidably connected with the two crossbeams 131 to realize the movement along the horizontal direction of the first robot goods shelf 2-100.

Specifically, as shown in Fig. 14a, the two door posts 311 fixed to the column portal frame 310 are provided with sliders 331; the sliders 331 can drive the column portal frame 310 and the transfer mechanism 320 disposed between the two door posts 311 to slide horizontally along the sliding guide rails 330. Since the sliding guide rails 330 are fixedly connected to the crossbeams 131 of the first robot goods shelf 2-100, the column portal frame 310 and the transfer mechanism 320 disposed between the two door posts 311 can move horizontally along the crossbeams 131 of the first robot goods shelf 2-100. In other embodiments, rollers can be provided at the two door posts 311 to replace the sliders 331, to increase the horizontal movement speed of the first robot goods shelf 2-100.

As shown in Figs. 14a and 14b, in this embodiment, the transfer mechanism 320 includes a lifting and lowering component 321 and a picking-up component 322; the lifting and lowering component 321 is arranged at the column portal frame 310, and is configured for driving the picking-up component 322 to move up and down along the vertical direction of the first robot goods shelf 2-100; the picking-up component 322 is mounted to the lifting and lowering component 321, and is used for extending out of the column portal frame 310 to pick-up and place the container 500.

In this embodiment, the lifting and lowering component 321 may include a driving motor, a driving wheel, a driven wheel and two synchronous belts. The driving motor and the driving wheel are arranged in the top housing 340, the driven wheel is arranged at the bottom of the two door posts 311, and the two synchronous belts are sleeved outside the driving wheel, the door posts 311 and the driven wheel. The picking-up component 322 is connected to the two synchronous belts through the connecting blocks on both sides.

In this way, the two synchronous belts of the lifting and lowering component 321 can drive the picking-up component 322 to move up and down by driving the connecting blocks to move up and down, to realize the up and down movement of the picking-up component 322 along the vertical direction of the first robot goods shelf 2-100.

The picking-up component 322 may include a telescopic mechanism, and extend into the first robot goods shelf 2-100 or the second robot goods shelf 200 though the telescopic mechanism to pick-up and place the container 500 located at the single-deep and/or multi-deep.

In this embodiment, the form of the picking-up component 322 includes but is not limited to a fork arm type, a suction cup type, a roller type, a hook arm type, etc.

In this embodiment, the first robot 300 can pick-up and place the containers 500 in the first robot goods shelf 2-100 and/or the second robot goods shelf 200 in the horizontal direction based on the relative sliding between the sliders 331 and the sliding guide rails 330 fixedly arranged at the crossbeams 131 at the first robot goods shelf 2-100; and can pick-up and place the containers 500 in the first robot goods shelf 2-100 and/or the second robot goods shelf 200 in the up and down direction based on the lifting and lowering component 321.

Referring to Fig. 15, which is a schematic structural diagram of the second robot in the embodiment shown in Fig. 13a. As shown in Fig. 15, the second robot 400 is a lifting-type movable robot. As shown in Fig. 13a and Fig. 13b, the height of the second accommodation space 220 of the second robot goods shelf 200 is higher than that of the lifting-type movable robot, so that the lifting-type movable robot can move to the interior of the second accommodation space 220, and lift the second robot goods shelf 200 to move or place the second robot goods shelf 200 on the ground.

As shown in Fig.15, the second robot 400 includes a mobile chassis 410, a elevating mechanism 420 and a lifting platform 430. The mobile chassis 410 is arranged at the bottom of the second robot 400 and may include universal wheels to achieve multi-directional movement; the elevating mechanism 420 and the lifting platform 430 are arranged at the top of the mobile chassis 410. When the second robot 400 is located in the second accommodation space 220 of the second robot goods shelf 200, the elevating mechanism 420 can lift the lifting platform 430 to a certain height, so that the second robot goods shelf 200 can be lifted off the ground as a whole and move with the second robot 400.

Specifically, as shown in Figs. 13a and 13b, the height of the second accommodation space 220 of the second robot goods shelf 200 is higher than that of the lifting-type movable robot. In this way, the lifting-type movable robot can move to the interior of the second accommodation space 220, to lift the lifting platform 430 through the elevating mechanism 420 to enable the lifting platform 430 to contact the top of the second accommodation space 220, and further lift the entire second robot goods shelf 200 and drive the entire second robot goods shelf 200 to move, or lower the lifting platform 430 through the elevating mechanism 420 to place the second robot goods shelf 200 on the ground.

As shown in Fig. 13a and Fig. 13b, in this embodiment, the height of the first accommodation space 120 of the first robot goods shelf 2-100 is higher than the height at which the second robot goods shelf 200 carrying the container 500 is lifted by the second robot 400. In this way, the second robot 400 can drive the second robot goods shelf 200 carrying the containers 500 to move in the first accommodation space 120 of the first robot goods shelf 2-100.

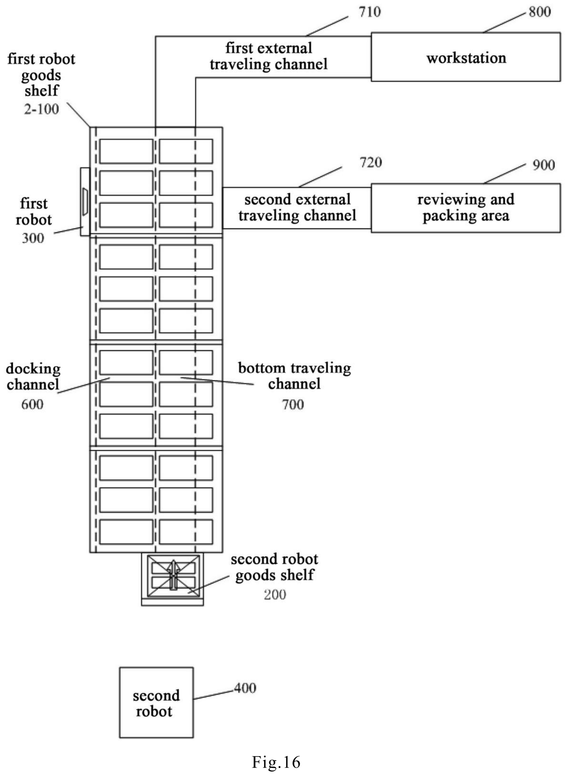

Referring to Fig. 16, which is a schematic top view of a second embodiment of the fourth warehousing system provided by an embodiment of the present application. In some embodiments, at the bottom of the first accommodation space 120 of the first robot goods shelf 2-100, a docking channel 600 and a bottom traveling channel 700 that are interconnected are arranged along the length direction of the first robot goods shelf 2-100. The docking channel 600 is used for accommodating the second robot goods shelf 200, and the second robot 400 is configured for traveling along the bottom traveling channel 700, so that after the second robot goods shelf 200 reaches the specified docking position in the docking channel 600, the first robot 300 moves a container 500 in a temporary storage bin 211 of the second robot goods shelf 200 to the first robot goods shelf 2-100, or moves a container 500 in the first robot goods shelf 2-100 to the second robot goods shelf 200.

In this embodiment, the second robot goods shelf 200 is placed in the docking channel 600. When the second robot 400 is unloaded, it can also be configured for travelling along the docking channel 600, and needs to avoid the second support columns 221 of the second robot goods shelf 200 during travel.

Since the first robot 300 needs to pick-up and place the containers 500 in the first robot goods shelf 2-100 and in the second robot goods shelf 200, it is required that the column portal frame 310 of the first robot 300 extends from the first storage space 110 to the first accommodation space 120 in the vertical direction, and the height of the column portal frame 310 of the first robot 300 can ensure that the picking-up component 322 of the first robot 300 can pick-up and place the container 500 at the bottom of the second robot goods shelf 200. In actual application, the first robot 300 is mounted at the position of the first robot goods shelf 2-100, and needs to avoid the docking channel 600, to prevent the second robot 400 from being unable to move the second robot goods shelf 200 out of the first robot goods shelf 2-100 due to interference with the docking channel 600. For example, the docking channel 600 can be set to extend from one end to the other end of the first robot goods shelf 2-100 along the length direction of the first robot goods shelf 2-100; the first robot 300 is mounted to the outer side surface of the first robot goods shelf 2-100 close to the docking channel 600 in the length direction of the first robot goods shelf 2-100, so that the column portal frame 310 of the first robot 300 is not set in the docking channel 600, and will not prevent the second robot 400 from moving the second robot goods shelf 200 out of the first robot goods shelf 2-100.

In some embodiments, a one-way or two-way traveling channel for the second robot 400 to travel may be provided between the first robot goods shelf 2-100 and the destination.

In practical applications, the destination of the second robot 400 may be a workstation or a reviewing and packing area. Specifically, as shown in Fig.16, the traveling channel between the first robot goods shelf 2-100 and the destination may include a first external traveling channel 710 with the destination being the workstation 800 and a second external traveling channel 720 with the destination being the reviewing and packing area 900.

In this way, the second robot 400 can transfer the to-be-warehoused-out second robot goods shelf 200 to the workstation 800 for picking and warehousing-out, or can transfer the to-be-warehoused-in second robot goods shelf 200 to the first robot goods shelf 2-100 for container warehousing-in, along the first external traveling channel 710.

Moreover, the second robot 400 can also move the to-be-warehoused-out second robot goods shelf 200 to the reviewing and packing area 900 along the second external traveling channel 720 to pack all goods in containers 500 of the second robot goods shelf 200 for warehousing-out.

The process of warehousing-out and warehousing-in is described in detail based on the embodiment shown in Fig. 16 below.

In the warehousing system of this embodiment, a control device may also be provided, wherein the control device is in communication with the first robot 300 and the second robot 400, to instruct the first robot 300 to pick-up and place the containers 500, and instruct the second robot 400 to move the second robot goods shelf 200, so as to complete the goods arranging function and warehousing-in and warehousing-out functions.

Specifically, the process of warehousing-out can be instructed by the control device, and specifically includes the following steps:
Step A, selecting a closest second robot goods shelf 200 according to a position of a storage bin 111 where a to-be-warehoused-out container 500 in the first robot goods shelf 2-100 is located, and determining an optimal docking position in the docking channel 600.

Here, the selected second robot goods shelf 200 may be one that carries no container 500, that is, is completely empty, or may be a second robot goods shelf 200 that has carried some containers 500 and has a free temporary storage bin 211, as long as the second robot goods shelf 200 can carry the to-be-warehoused-out container 500. Optionally, the optimal docking position may be a position of the second robot goods shelf 200 capable of carrying the to-be-warehoused-out container 500, which is closest to the to-be-warehoused-out container and in the docking channel 600.

In some embodiments, multiple operating areas for the first robot 300 may be obtained by dividing according to the distribution of to-be-warehoused-out containers 500 in the first robot goods shelf 2-100, that is, an area where the to-be-warehoused-out containers 500 are relatively concentrated in distribution is divided as one operating area, and each operating area corresponds to one docking position 600.

In some embodiments, the principle for determining the optimal docking position is as follows: a position where the second robot goods shelf 200 having a free temporary storage bin 211 and closer to the operating area is located, is preferentially selected as the optimal docking position; in response to determining that there is no such second robot goods shelf 200 in the docking channel 600, the second robot goods shelf 200 that can carry the container 500 is transferred by the second robot 400 to a position closest to the operating area for the first robot 300 to place a container.

Step B, instructing the second robot 400 to drive the selected second robot goods shelf 200 to move to the optimal docking position.

Step C, instructing the first robot 300 to move to a position of a storage column where the to-be-warehoused-out container 500 is located based on the support frame 130. Wherein the storage column refers to a column formed by multiple storage bins 111 in the up and down direction.

Step D, instructing the first robot 300 to move the picking-up component 322 up and down along the height direction of the first robot goods shelf 2-100 by using the lifting and lowering component 321, to enable the picking-up component 322 to move to the height corresponding to the storage bin 111 where the to-be-warehoused-out container 500 is located, and pick-up the to-be-warehoused-out container 500 by using the picking-up component 322 and move the to-be-warehoused-out container 500 to the free temporary storage bins 211 of the second robot goods shelf 200.

When there are multiple to-be-warehoused-out containers 500, a new optimal docking position can be determined according to the position of a to-be-warehoused-out container 500 in the first robot goods shelf 2-100, and the above steps B to D are repeated, to move all the to-be-warehoused-out containers 500 to the free temporary storage bins 211 of the second robot goods shelf 200.

Step F, after the second robot goods shelf 200 is full or a predetermined duration is reached, instructing the second robot 400 to move the second robot goods shelf 200 to a destination along the traveling channel.

When the to-be-warehoused-out goods are in the to-be-warehoused-out container 500 and there are goods that do not need to be warehoused-out in the to-be-warehoused-out container 500, the second robot 400 is instructed to drive to the workstation 800 along the first external traveling channel 710.

At the workstation 800, the to-be-warehoused-out goods can be picked out manually and warehoused-out, and other goods that do not need to be warehoused-out can be retained in the original container 500. At the same time, the to-be-warehoused-in goods can be added to the original container 500 which is used as one to-be-warehoused-in container 500. The second robot 400 transfers the second robot goods shelf 200 to the first accommodation space 120 of the first robot goods shelf 2-100, and then the first robot 300 transfers the goods to the first storage space 110 for warehousing-in.

When the to-be-warehoused-out container 500 needs to be warehoused-out as a whole, that is, when all the goods in to-be-warehoused-out containers 500 are to be warehoused-out, the second robot 400 is instructed to drive along the second external traveling channel 720 to the reviewing and packing area 900, and warehousing-out is directly performed after completing automatic review and packing.

During the warehousing-in process, firstly, the goods are manually transferred to the second robot goods shelf 200. Specifically, at the workstation 800, the to-be-warehoused-in goods can be manually placed in the to-be-warehoused-in container 500. The to-be-warehoused-in container 500 is placed in the free temporary storage bin 211 of the second robot 400. Then, the control device can instruct to perform the following steps:
Step E, allocating a free storage bin 111 to the second robot goods shelf 200 according to positions of the free storage bins 111 of the first robot goods shelf 2-100 and based on the principle of from the near free storage bin 111 of the first robot goods shelf 2-100 to the far free storage bin 111 of the first robot goods shelf 2-100 and/or the number of to-be-warehoused-in containers 500 in the second robot goods shelf 200 <_ the number of multiple free storage bins 111 whose positions are concentrated, of the first robot goods shelf 2-100.

The second robot goods shelf 200 in this step may be a second robot goods shelf 200 that has been fully loaded at the workstation 800, or may be a second robot goods shelf 200 that is not fully loaded, as long as it carries a to-be-warehoused-in container 500.

Step F, determining the optimal docking position in the docking channel 600 according to the position of the allocated free storage bin.

Step G, instructing the second robot 400 to drive the second robot goods shelf 200 carrying the to-be-warehoused-in container 500 to move to the optimal docking position.

Step H, instructing the first robot 300 to move to the position of a storage column where the free storage bin 111 is located based on the support frame 130.

Step I, instructing the first robot 300 to move the picking-up component 322 up and down along the height direction of the first robot goods shelf 2-100 by using the lifting and lowering component 321, to enable the picking-up component 322 to move to the height corresponding to the to-be-warehoused-in container 500 at the second robot 400, and carry the to-be-warehoused-in container 500 into the picking-up component 322 by using the picking-up component 322 to; and move the picking-up component 322 upward along the height direction of the first robot goods shelf 2-100 by using the lifting and lowering component 321, to enable the carried to-be-warehoused-in container 500 to move to the height corresponding to the free storage bin 111, and move the to-be-warehoused-in container 500 to the free storage bin 111 of the first robot goods shelf 2-100 by using the picking-up component 322.

When there are multiple to-be-warehoused-in containers 500, a new optimal docking position can be determined according to the position of a to-be-warehoused-in container 500 in the first robot goods shelf 2-100, and the above steps G to I are repeated to move all the to-be-warehoused-in containers 500 to the free storage bins 111 of the first robot goods shelf 2-100, to complete the warehousing-in operation.

By applying the above embodiments, the following beneficial effects can be obtained:
First, in this embodiment, the first robot 300 is used for goods arranging, and can move the container 500 in the first robot goods shelf 2-100 to the second robot goods shelf 200, or store the container 500 in the second robot goods shelf 200 into the first robot goods shelf 2-100. The second robot goods shelf 200 is transferred only by the second robot 400 to the workstation for picking in piece or entire workbin warehousing-out, which improves the goods arranging efficiency of the first robot 300.

Second, in this embodiment, by goods arranging via the first robot 300, the container 500 containing goods that need to be warehoused-out can be transferred to the second robot goods shelf 200, and goods that do not need to be warehoused-out can be retained in the first robot goods shelf 2-100, so that all of containers 500 in the second robot goods shelf 200 transferred by the second robot 400 need to be warehoused-out, which improves the goods shelf hit rate of the second robot 400, reduces the number of transferring times of the second robot 400, and improving the transferring efficiency of the second robot 400.

Third, in this embodiment, containers 500 stored on both the first robot goods shelf 2-100 and the second robot goods shelf 200 can be transferred by the second robot 400 by means of the second robot goods shelf 200, and the second robot goods shelf 200 is provided with multiple temporary storage bins 211, so that multiple containers 500 can be transferred during one transfer process of the second robot 400, thus improving the transferring efficiency. In addition, in this embodiment, the first robot goods shelf 2-100 and the second robot goods shelf 200 are used for storing and transfer the containers 500, and compared with the solution in which only the second robot goods shelf is used to store and transfer the containers 500, the existence of the first robot goods shelf 2-100 increases the vertical storage space.

Fourth, in this embodiment, for the scenario of entire workbin warehousing-out, that is, the scenario where all the goods in the container 500 need to be warehoused-out, the first robot 300 can move the container 500 from the first robot goods shelf 2-100 to the second robot goods shelf 200, and then the second robot 400 can move the second robot goods shelf 200 to the reviewing and packing area. After the process is completed, the second robot 400 is triggered to move the second robot goods shelf 200 back. Therefore, the second robot goods shelf 200 can play the dual role of transferring and caching.

Fifth, in this embodiment, for the scenario of entire workbin warehousing-out, the container 500 is transferred from the first robot goods shelf 2-100 to the picking area of the workstation 800 and warehoused-out. Since entire workbin warehousing-out does not require manual picking, unmanned picking can be achieved, which has the effect of reducing costs and increasing efficiency.

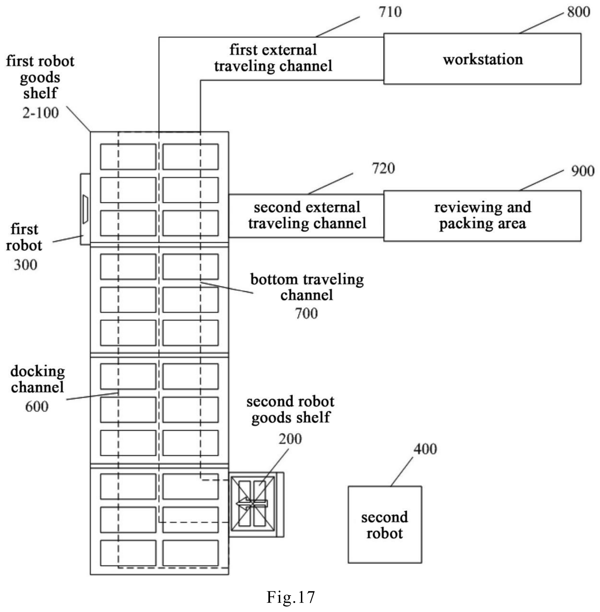

In the embodiment shown in Fig.16, the second robot 400 carries the second robot goods shelf 200 from the side of the first robot goods shelf 2-100 in the width direction of the first robot goods shelf 2-100 into the docking channel 600 of the first robot goods shelf 2-100. In other embodiments, referring to Fig.17, Fig.17 is a schematic top view of a third embodiment of the fourth warehousing system provided by an embodiment of the present application; as shown in Fig.17, the second robot 400 can also carry the second robot goods shelf 200 from the side of the first robot goods shelf 2-100 in the length direction of the first robot goods shelf 2-100 into the docking channel 600 of the first robot goods shelf 2-100.

In can be seen from the embodiments shown in Fig. 16 and Fig. 17 that in the warehousing system provided by the embodiment of the present application, the way in which the second robot 400 enters the first robot goods shelf 2-100 can be flexibly set according to the actual warehousing site, thereby improving practicality.

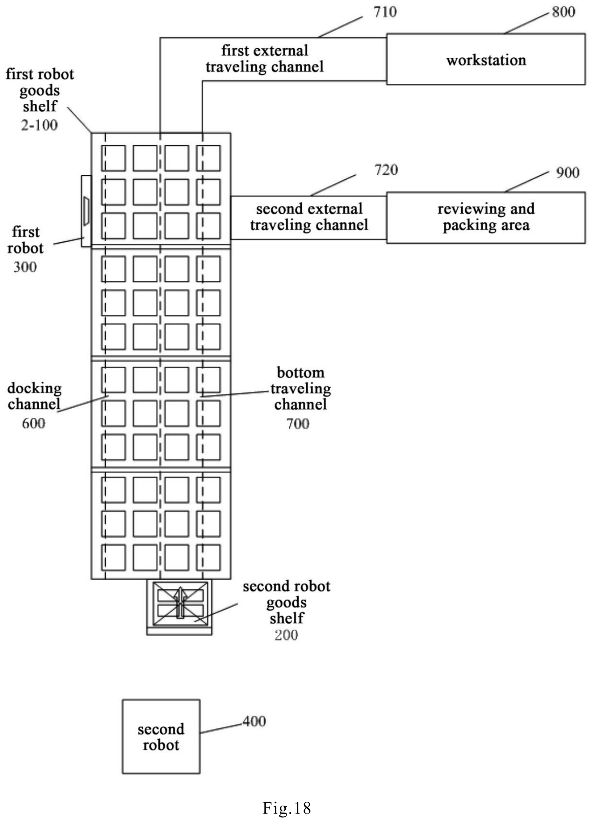

In addition, as mentioned above, the first robot goods shelf 2-100 can be a double-deep shelf or a multi-deep shelf. For example, referring to Fig. 18, Fig. 18 is a schematic top view of a fourth embodiment of the fourth warehousing system provided by an embodiment of the present application. In this embodiment, the first robot goods shelf 2-100 is a four-deep shelf that can store more containers 500.

A warehousing-in method provided by an embodiment of the present application is described in detail below.

The warehousing-in method provided by the embodiment of the present application is applied to a control device, and the control device is in communication connection with the first robot and the second robot of the aforementioned fourth warehouse system.

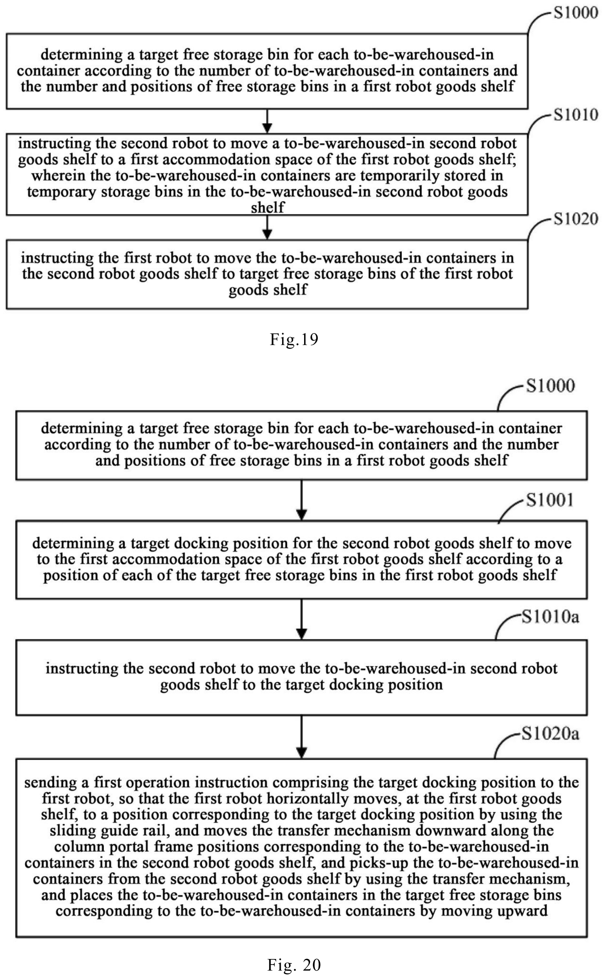

Referring to Fig. 19, Fig. 19 is a flow chart of a first embodiment of a warehousing-in method provided by an embodiment of the present application; the flow chart includes the following steps:
Step S1000, determining a target free storage bin for each to-be-warehoused-in container according to the number of to-be-warehoused-in containers and the number and positions of free storage bins in a first robot goods shelf;
Step S1010, instructing the second robot to move a to-be-warehoused-in second robot goods shelf to a first accommodation space of the first robot goods shelf; wherein the to-be-warehoused-in containers are temporarily stored in temporary storage bins in the to-be-warehoused-in second robot goods shelf;
Step S1020, instructing the first robot to move the to-be-warehoused-in containers in the second robot goods shelf to target free storage bins of the first robot goods shelf.

This embodiment is applied to the above warehousing system. The method instructs the second robot that temporarily stores the to-be-warehoused-in container to move to the accommodation space at the bottom of the first robot goods shelf, and instructs the first robot to move the to-be-warehoused-in container in the second robot goods shelf to the target free storage bin of the first robot goods shelf. The second robot can drive the second robot goods shelf to move, so as to realize the warehousing-in function of the container. Moreover, in the embodiment of the present application, the second robot goods shelf is provided with multiple temporary storage bins. Therefore, the second robot can enable warehousing-in of multiple containers at a time, thus improving the warehousing-in efficiency, that is, improving the warehouse operation efficiency.

It should be noted that the container in this embodiment refers to a container that can accommodate goods, such as a workbin, a tray, etc., and the present application does not limit this.

In some embodiments, in order to improve the efficiency of picking-up goods, a target docking position where the second robot goods shelf is docked at the first robot goods shelf can be determined firstly. Specifically, referring to Fig. 20, Fig. 20 is a flow chart of a second embodiment of the warehousing-in method provided by an embodiment of the present application; the first robot in this embodiment includes a column portal frame, a transfer mechanism and at least one sliding guide rail.

The flow chart includes the following steps:
Step S1000, determining a target free storage bin for each to-be-warehoused-in container according to the number of to-be-warehoused-in containers and the number and positions of free storage bins in a first robot goods shelf;
In this step, the number of to-be-warehoused-in containers input by the user can be received through a human-computer interaction interface; and then the number and positions of the free storage bins in the first robot goods shelf can be obtained based on a storage record of the first robot goods shelf.

Then, the target free storage bin for each to-be-warehoused-in container is determined according to the number of the to-be-warehoused-in containers and the number and the positions of the free storage bins in the first robot goods shelf.

Step S1001: determining a target docking position for the second robot goods shelf to move to the first accommodation space of the first robot goods shelf according to a position of each of the target free storage bins in the first robot goods shelf.

Step S1010a, instructing the second robot to move the to-be-warehoused-in second robot goods shelf to the target docking position.

After the second robot moves the to-be-warehoused-in second robot goods shelf to the target docking position, the second robot can place the second robot goods shelf at the target docking position and leave, or the second robot can temporarily stay at the target docking position and wait for the next movement instruction. It is set according to the principle of which manner is more efficient in practice, and there is no limitation here.

Step S1020a, sending a first operation instruction including the target docking position to the first robot, so that the first robot horizontally moves, at the first robot goods shelf, to a position corresponding to the target docking position by using the sliding guide rail, and moves the transfer mechanism downward along the column portal frame to positions corresponding to the to-be-warehoused-in containers in the second robot goods shelf, and picks-up the to-be-warehoused-in containers from the second robot goods shelf by using the transfer mechanism, and places the to-be-warehoused-in containers in the target free storage bins corresponding to the to-be-warehoused-in containers by at least moving upward.

In this embodiment, after determining the target free storage bin, the target docking position for the second robot goods shelf to move to the first accommodation space of the first robot goods shelf is further determined according to the position of the target free storage bin in the first robot goods shelf. For example, if target free storage bins are concentrated in the lower right corner of the first robot goods shelf, the target docking position can be set at a position close to the lower right corner to facilitate the first robot to move the to-be-warehoused-in containers to the target free storage bins, such that the moving distance of the first robot is reduced, and the efficiency of the first robot in moving and picking-up and placing the to-be-warehoused-in container is increased.

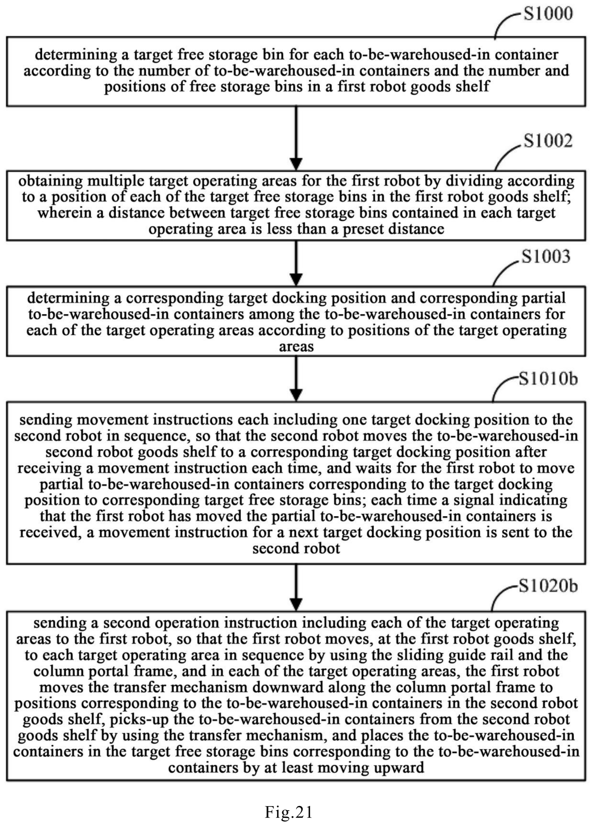

In some embodiments, in order to adapt to a case where the target free storage bins are not concentrated in one area of the first robot goods shelf, multiple target operating areas for the first robot can be obtained by dividing firstly, so that the first robot performs warehousing-in operations in different target operating areas. Specifically, referring to Fig. 21, Fig. 21 is a flow chart of a third embodiment of the warehousing-in method provided by an embodiment of the present application;

The flow chart includes the following steps:
Step S1000, determining a target free storage bin for each to-be-warehoused-in container according to the number of to-be-warehoused-in containers and the number and positions of free storage bins in a first robot goods shelf;
In this step, the target free storage bin for each to-be-warehoused-in container can be determined based on a principle that the moving distance of the second robot from a starting point is from near to far and/or a principle that the target free storage bins are concentrated in the first robot goods shelf.

For example, at a first position closest to the starting point of the second robot, there are several relatively concentrated free storage bins in the first robot goods shelf; at an upper left corner of the second position slightly farther from the starting point of the second robot, there are several relatively concentrated free storage bins. In response to determining that the number of to-be-warehoused-in containers does not exceed that of the several relatively concentrated free storage bins at the first position, then adjacent free storage bins whose number is equal to the number of the several free storage bin, among the serval relatively concentrated free storage bins at the first position, are determined as target free storage bins.

In response to determining that the number of the to-be-warehoused-in containers exceeds that of the several relatively concentrated free storage bins at the first position, then the several relatively concentrated free storage bins at the first position are all determined as target free storage bins; adjacent free storage bins whose number is equal to the number of the remaining to-be-warehoused-in containers, among the serval relatively concentrated free storage bins at the first position are also determined as target free storage bins.
Step S1002, obtaining multiple target operating areas for the first robot by dividing according to a position of each of the target free storage bins in the first robot goods shelf; wherein a distance between target free storage bins contained in each target operating area is less than a preset distance;
In this step, each target free storage bin is concentrated at different positions in the first robot goods shelf, and a different position area where target free storage bins are concentrated can be divided as one target operating area. As in the previous example, the first position can be divided as one target operating area, and the second position can be divided as another target operating area. Of course, the number of divided target operating areas is based on the concentration of the target free storage bins in the first robot goods shelf, and there is no limitation here.
Step S1003, determining a corresponding target docking position and corresponding partial to-be-warehoused-in containers among the to-be-warehoused-in containers for each of the target operating areas according to positions of the target operating areas;
In this step, in order to facilitate the first robot to move the to-be-warehoused-in containers, the corresponding target docking position and the corresponding partial to-be-warehoused-in containers are determined for each target operating area. As in the previous example, two target operating areas can correspond to two target docking positions.

Step S1010b, sending movement instructions each including one target docking position to the second robot in sequence; so that the second robot moves the to-be-warehoused-in second robot goods shelf to a corresponding target docking position after receiving a movement instruction each time, and waits for the first robot to move partial to-be-warehoused-in containers corresponding to the target docking position to corresponding target free storage bins; and each time a signal indicating that the first robot has moved the partial to-be-warehoused-in containers is received, a movement instruction including a next target docking position is sent to the second robot.

Since multiple target docking positions are determined in the previous step, in this step, it is necessary to send movement instructions each including one target docking position to the second robot in sequence. Each time the second robot receives a movement instruction, the second robot moves to a target docking position, puts down the second robot goods shelf, and waits for the first robot to move the partial to-be-warehoused-in containers corresponding to the target docking position to the corresponding target free storage bins. Then, the second robot receives the next movement instruction which is sent by the control device each time the control device receives a signal indicating that the first robot has moved the partial to-be-warehoused-in containers, then lifts the second robot goods shelf, and moves the second robot goods shelf to the next target docking position, and so on.

Step S1020b, sending a second operation instruction including each of the target operating areas to the first robot, so that the first robot moves, at the first robot goods shelf, to each of the target operating areas in sequence by using the sliding guide rail and the column portal frame, and in each of the target operating areas, the first robot moves the transfer mechanism downward along the column portal frame to positions corresponding to the to-be-warehoused-in containers in the second robot goods shelf, picks-up the to-be-warehoused-in containers from the second robot goods shelf by using the transfer mechanism, and places the to-be-warehoused-in containers in the target free storage bins corresponding to the to-be-warehoused-in containers by at least moving upward.

In this step, the first robot moves to each target operating area in sequence according to the second operation instruction, and performs the warehousing-in operation in each target operating area until all the to-be-warehoused-in containers are moved to the first robot goods shelf. As in the previous example, the first robot can firstly move to the target operating area corresponding to the first position to perform the warehousing-in operation; and after the second robot goods shelf moves to another target docking position, the first robot moves to the target operating area corresponding to the second position to perform the warehousing-in operation.

In this embodiment, the target free storage bins can be determined from one or more concentrated areas in the first robot goods shelf, and the multiple target operating areas for the first robot are obtained by dividing based on the different positions where the target free storage bins are differently concentrated, and a corresponding target docking position is determined for each target operating area. In this way, the distance between each of the multiple target operating areas and each corresponding target docking position is as close as possible. The first robot is enabled to realize the partition-based warehousing-in operation, which improves the warehousing-in efficiency to a certain extent compared with the irregular and disorderly warehousing-in operation.

In another embodiment, the target docking position can be dynamically updated during the process of the first robot performing the warehousing-in operation.

Specifically, after the target docking position is determined and before the warehousing-in operation is performed, it is allowed to predict a predicted operation duration required for the first robot to move all of the to-be-warehoused-in containers to the target free storage bins in a case that the target docking position remains unchanged, based on the position of each of the target free storage bins and the position of the target docking position;
in response to determining that the predicted operation duration is not greater than a preset threshold, instruct the first robot to move all of the to-be-warehoused-in containers in the second robot goods shelf to corresponding target free storage bins in the first robot goods shelf respectively;
in response to determining that the predicted operation time is greater than the preset threshold, instruct the first robot to move some of the to-be-warehoused-in containers in the second robot goods shelf to corresponding target free storage bins in the first robot goods shelf respectively;
update the target docking position based on positions of target free storage bins corresponding to the remaining to-be-warehoused-in containers;
instruct the second robot to move to the updated target docking position;
instruct the first robot to move the remaining to-be-warehoused-in containers in the second robot goods shelf to corresponding target free storage bins in the first robot goods shelf.

In this embodiment, the target docking position can be dynamically updated during the first robot performing the warehousing-in operation, and the operation mode is relatively flexible, but the interaction between the control device and the first robot and the second robot is slightly more compared with the previous embodiment. It can be selected according to the actual needs of the system, and there is no limitation here.

A warehousing-out method provided by an embodiment of the present application is described in detail below.

The warehousing-out method provided by the embodiment of the present application is applied to a control device, and the control device is in communication connection with the first robot and the second robot of the aforementioned fourth warehousing system.

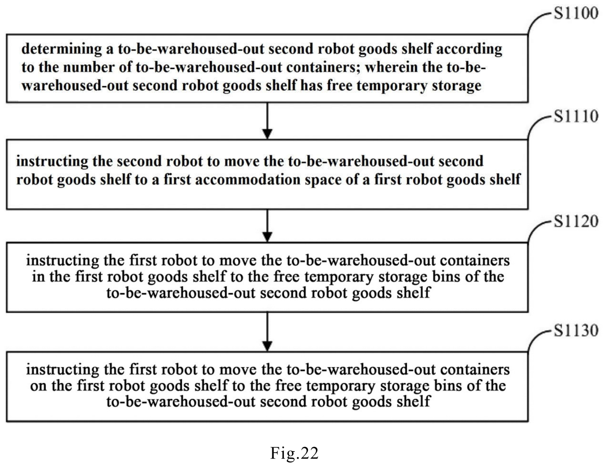

Referring to Fig. 22, Fig. 22 is a flow chart of a first embodiment of the warehousing-out method provided by an embodiment of the present application; the flow chart includes the following steps:
Step S1100, determining a to-be-warehoused-out second robot goods shelf according to the number of to-be-warehoused-out containers; wherein the to-be-warehoused-out second robot goods shelf has free temporary storage bins;
Step S1110, instructing a second robot to move the to-be-warehoused-out second robot goods shelf to a first accommodation space of a first robot goods shelf;
Step S1120, instructing the first robot to move the to-be-warehoused-out containers in the first robot goods shelf to the free temporary storage bins of the to-be-warehoused-out second robot goods shelf;
Step S1130, instructing the second robot to drive the to-be-warehoused-out second robot goods shelf to move to a destination.

This embodiment is applied to the above warehousing system. The method instructs the first robot to move the to-be-warehoused-out containers from the first robot goods shelf to the free temporary storage bins of the second robot goods shelf, and instructs the second robot to drive the to-be-warehoused-out second robot goods shelf to the destination, such that the warehousing-out function of the containers is realized by the second robot driving the second robot goods shelf to the destination. Moreover, in the embodiment of the present application, the second robot goods shelf is provided with multiple temporary storage bins. Therefore, the second robot can warehouse-out multiple containers at a time, thus increasing the warehousing-out efficiency, that is, increasing the warehouse operation efficiency.

It should be noted that the container in this embodiment refers to a container that can accommodate goods, such as a workbin, a tray, etc., and the present application does not limit this. In addition, in this embodiment, the destination may be a workstation or a reviewing and packing area.

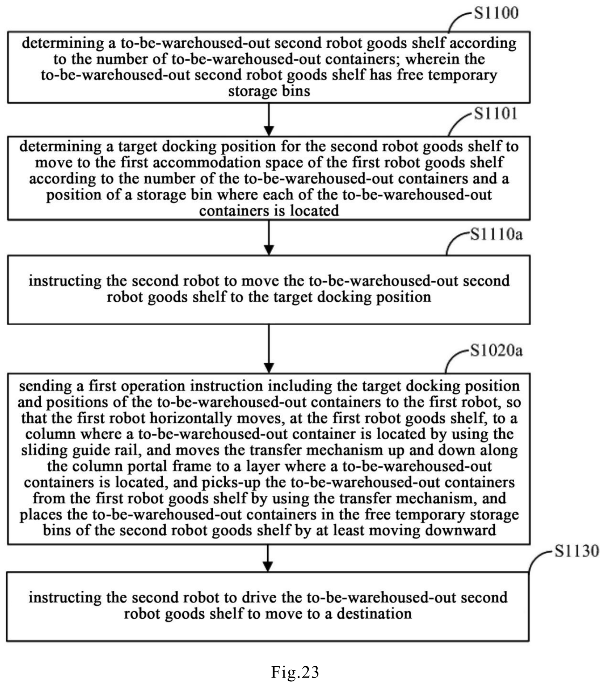

In some embodiments, in order to improve the efficiency of picking up goods, a target docking position where the second robot goods shelf is docked at the first robot goods shelf can be determined firstly. Specifically, referring to Fig. 23, Fig. 23 is a flow chart of a second embodiment of the warehousing-out method provided by an embodiment of the present application; the first robot in this embodiment includes a column portal frame, a transfer mechanism and at least one sliding guide rail.

The flow chart includes the following steps:
Step S1100, determining a to-be-warehoused-out second robot goods shelf according to the number of to-be-warehoused-out containers; wherein the to-be-warehoused-out second robot goods shelf has free temporary storage bins;
In this step, in response to determining that there are free temporary storage bins in a second robot goods shelf in the first accommodation space of the first robot goods shelf, and the number of to-be-warehoused-out containers is less than or equal to the number of the free temporary storage bins, the second robot goods shelf is determined as the to-be-warehoused-out second robot goods shelf. In response to determining that the second robot goods shelf is full, the second robot can be firstly instructed to move the full second robot goods shelf to another position, and one second robot goods shelf with free temporary storage bins whose number is greater than or equal to the number of to-be-warehoused-out containers, is selected as the to-be-warehoused-out second robot goods shelf.

Step S1101: determining a target docking position for the second robot goods shelf to move to the first accommodation space of the first robot goods shelf according to the number of to-be-warehoused-out containers and a position of a storage bin where each of the to-be-warehoused-out containers is located.

Step S1110a, instructing the second robot to move the to-be-warehoused-out second robot goods shelf to the target docking position.

After the second robot moves the to-be-warehoused-out second robot goods shelf to the target docking position, the second robot can place the second robot goods shelf at the target docking position and leave, or the second robot can temporarily stay at the target docking position and wait for the movement instruction to move the second robot goods shelf to the destination. It is set according to the actual principle of high efficiency and there is no limitation here.

In this embodiment, the destination may be a workstation or a reviewing and packing area.

Step S1120a, sending a first operation instruction including the target docking position and positions of the to-be-warehoused-out containers to the first robot, so that the first robot horizontally moves, at the first robot goods shelf, to a column where a to-be-warehoused-out container is located by using the sliding guide rail, and moves the transfer mechanism up and down along the column portal frame to a layer where a to-be-warehoused-out container is located, and picks-up the to-be-warehoused-out containers from the first robot goods shelf by using the transfer mechanism, and places the to-be-warehoused-out containers in the free temporary storage bins of the second robot goods shelf by at least moving downward.

Step S1130, instructing the second robot to drive the to-be-warehoused-out second robot goods shelf to move to a destination.

In this embodiment, the target docking position for the second robot goods shelf to move to the first accommodation space of the first robot goods shelf is determined according to the number of to-be-warehoused-out containers and the positions of the storage bins where the to-be-warehoused-out containers are located. For example, in response to determining that the storage bins where the to-be-warehoused-out containers are located are concentrated in the lower right corner of the first robot goods shelf, the target docking position can be set at a position close to the lower right corner to facilitate the first robot to move the to-be-warehoused-out containers to the free temporary storage bins of the second robot goods shelf, thus reducing the moving distance of the first robot and improving the efficiency of the first robot in moving and picking-up and placing the to-be-warehoused-out containers.

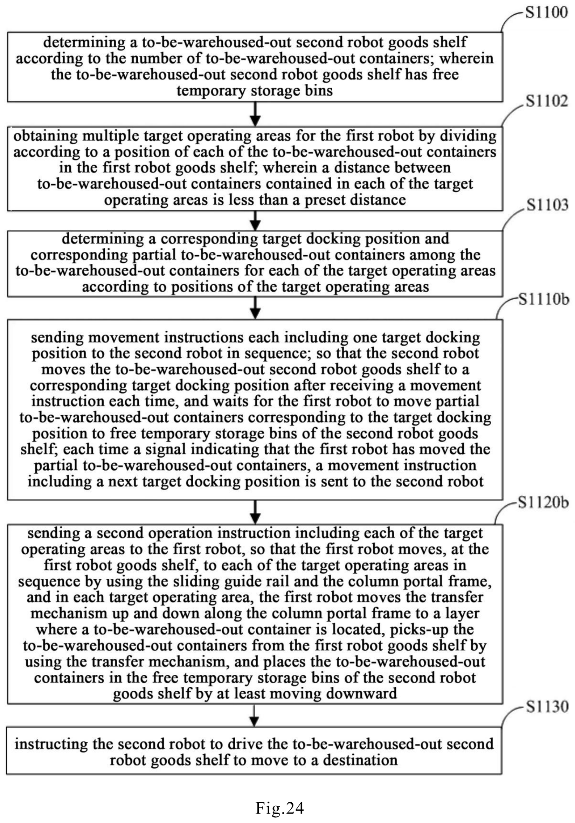

In some embodiments, in order to adapt to a case that the to-be-warehoused-out containers are not concentrated in one area of the first robot goods shelf, multiple target operating areas for the first robot can be obtained by dividing firstly, so that the first robot performs warehousing-out operations in different target operating areas. Specifically, referring to Fig. 24, Fig. 24 is a flow chart of a third embodiment of the warehousing-out method provided by an embodiment of the present application.

The flow chart includes the following steps:
Step S1100, determining a to-be-warehoused-out second robot goods shelf according to the number of to-be-warehoused-out containers; wherein the to-be-warehoused-out second robot goods shelf has free temporary storage bins.
Step S1102, obtaining multiple target operating areas for the first robot by dividing according to a position of each of the to-be-warehoused-out containers in the first robot goods shelf; wherein a distance between to-be-warehoused-out containers contained in each target operating area is less than a preset distance.

In this step, in response to determining that the to-be-warehoused-out containers are concentrated in two areas in the first robot goods shelf, multiple target operating areas for the first robot are obtained correspondingly by dividing for the two areas. Of course, the number of divided target operating areas is based on the concentration of the positions of the to-be-warehoused-out containers in the first robot goods shelf, and there is no limitation here.

Step S1103, determining a corresponding target docking position and corresponding partial to-be-warehoused-out containers among the to-be-warehoused-out containers for each of the target operating areas according to positions of the target operating areas;

In this step, in order to facilitate the first robot to move the to-be-warehoused-out containers, the corresponding target docking position and the corresponding partial to-be-warehoused-out containers are determined for each target operating area. As in the previous example, two target operating areas can correspond to two target docking positions.

Step S1110b, sending movement instructions each including one target docking position to the second robot in sequence; so that the second robot moves the to-be-warehoused-out second robot goods shelf to a corresponding target docking position after receiving a movement instruction each time, and waits for the first robot to move partial to-be-warehoused-out containers corresponding to the target docking position to free temporary storage bins of the second robot goods shelf; and each time a signal indicating that the first robot has moved the partial to-be-warehoused-out containers is received, a movement instruction including a next target docking position is sent to the second robot.

In this step, a movement way of the second robot at each target docking position can refer to the description of the third embodiment of the aforementioned warehousing-in method, which will not be repeated here.

Step S1120b, sending a second operation instruction including each of the target operating areas to the first robot, so that the first robot moves, at the first robot goods shelf, to each of the target operating areas in sequence by using the sliding guide rail and the column portal frame, and in each target operating area, the first robot moves the transfer mechanism up and down along the column portal frame to a layer where a to-be-warehoused-out container is located, picks-up the to-be-warehoused-out containers from the first robot goods shelf by using the transfer mechanism, and places the to-be-warehoused-out containers in the free temporary storage bins of the second robot goods shelf by at least moving downward.

In this step, the first robot moves to each target operating area in sequence according to the second operation instruction, and performs a warehousing-out operation in each target operating area until all of the to-be-warehoused-out containers are moved to the second robot goods shelf.

Step S1130, instructing the second robot to drive the to-be-warehoused-out second robot goods shelf to move to a destination.

In this embodiment, multiple target operating areas for the first robot can be divided from one or more concentrated areas in the first robot goods shelf where the to-be-warehoused-out containers are concentrated, and a target docking position can be determined correspondingly for each target operating area. In this way, the distance between each of the multiple target operating areas and each target docking position is as close as possible. The first robot is enabled to realize the partition-based warehousing-out operation, which improves the warehousing-out efficiency to a certain extent compared with the irregular and disorderly warehousing-out operation.

Similar to the warehousing-in method, in another embodiment, the target docking position can be dynamically updated during the process of the first robot performing the warehousing-out operation.

Specifically, after the target docking position is determined and before the warehousing-out operation is performed, it is allowed to predict a predicted operation duration required for the first robot to move all of the to-be-warehoused-out containers to the free temporary storage bins in a case that the target docking position remains unchanged, based on positions of storage bins where the to-be-warehoused-out containers are located and the position of the target docking position;
in response to determining that the predicted operation duration is not greater than a preset threshold, instruct the first robot to move all of the to-be-warehoused-out containers in the first robot goods shelf to the free temporary storage bins in the second robot goods shelf respectively;
in response to determining that the predicted operation time is greater than the preset threshold, instruct the first robot to move some of the to-be-warehoused-out containers in the first robot goods shelf to some of the free temporary storage bins in the second robot goods shelf respectively;
update the target docking position based on positions of storage bins where the remaining to-be-warehoused-out containers are located;
instruct the second robot to move to the updated target docking position;
instruct the first robot to move the remaining to-be-warehoused-out containers in the first robot goods shelf to remaining free temporary storage bins in the second robot goods shelf.

In this embodiment, the target docking position can be dynamically updated during the first robot performing the warehousing-out operation, and the operation mode is relatively flexible, but the interaction between the control device and the first robot and the second robot is slightly more compared with the previous embodiment. It can be selected according to the actual needs of the system, and there is no limitation here.

In addition, an embodiment of the present application further provides a control device, as shown in Fig. 25, including:
a memory 1601, configured for storing a computer program;
a processor 1602, configured for carrying out, when executing the program stored on the memory 1601, the above order processing method including:
   obtaining a set of to-be-processed orders and inventory information of a storage area and a goods arranging area; wherein the set of to-be-processed orders is processed at the same sorting workbench, at least one fixed high goods shelf is arranged in the storage area, and at least one movable goods shelf is arranged in the goods arranging area;
   determining a storage position where each target workbin requested by the set of to-be-processed orders is located, wherein any storage position is located in the fixed high goods shelf or the movable goods shelf;
   determining a target movable goods shelf with a highest target workbin hit rate;
   transferring the target movable goods shelf to a sorting workbench located in a sorting area.

Alternatively, the processor 1602 is configured for carrying out, when executing the program stored on the memory 1601, the above warehousing-in method including:
determining a target free storage bin for each to-be-warehoused-in container according to the number of to-be-warehoused-in containers and the number and positions of free storage bins in a first robot goods shelf;
instructing a second robot to move a to-be-warehoused-in second robot goods shelf to a first accommodation space of the first robot goods shelf; wherein the to-be-warehoused-in containers are temporarily stored in temporary storage bins in the to-be-warehoused-in second robot goods shelf;
instructing a first robot to move the to-be-warehoused-in containers in the second robot goods shelf to the target free storage bins of the first robot goods shelf.

Alternatively, the processor 1602 is configured for carrying out, when executing the program stored on the memory 1601, the above warehousing-out method including:
determining a to-be-warehoused-out second robot goods shelf according to the number of to-be-warehoused-out containers; wherein the to-be-warehoused-out second robot goods shelf has free temporary storage bins;
instructing a second robot to move the to-be-warehoused-out second robot goods shelf to a first accommodation space of a first robot goods shelf;
instructing the first robot to move the to-be-warehoused-out containers in the first robot goods shelf to the free temporary storage bins of the to-be-warehoused-out second robot goods shelf;
instructing the second robot to drive the to-be-warehoused-out second robot goods shelf to move to a destination.

Furthermore, the electronic device may further include a communication bus and/or a communication interface, and the processor 1602, the communication interface, and the memory 1601 communicate with each other through the communication bus.

In addition, the control device can be implemented by a computer, and can also include a communication module, such as a wired network card or a wireless network card for communication connection with a first transfer vehicle and a second transfer vehicle.

The communication bus mentioned in the above electronic device can be a Peripheral Component Interconnect (PCI) bus or an Extended Industry Standard Architecture (EISA) bus, etc. The communication bus can be divided into an address bus, a data bus, a control bus, etc. For ease of representation, only one thick line is used in the figure, but it does not mean that there is only one bus or one type of bus.

The communication interface is used for communication between the above electronic device and other devices.

The memory may include a random access memory (RAM) or a non-volatile memory (NVM), such as at least one disk memory. Optionally, the memory may also be at least one storage device located away from the aforementioned processor.

The above processor can be a general-purpose processor, including a central processing unit (CPU), a network processor (NP), etc.; it can also be a digital signal processor (DSP), an application specific integrated circuit (ASIC), a field programmable gate array (FPGA) or other programmable logic devices, discrete gate or transistor logic devices, discrete hardware components.

In yet another embodiment provided by the present application, a computer-readable storage medium is further provided, which has stored thereon a computer program, which, when executed by a processor, carries out any of the order processing methods, warehousing-in methods or warehousing-out methods in the above embodiments.

In yet another embodiment provided by the present application, a computer program product containing instructions is further provided, which, when running on a computer, causes the computer to carry out any of the order processing methods, warehousing-in methods or warehousing-out methods in the above embodiments in the above embodiments.

In the above embodiments, it may be implemented in whole or in part by software, hardware, firmware or any combination thereof. When implemented in software, it can be implemented in whole or in part in the form of a computer program product. The computer program product includes one or more computer instructions. When the computer program instructions are loaded and executed on a computer, the processes or functions described in the embodiments of the present application are generated in whole or in part. The computer may be a general purpose computer, special purpose computer, computer network, or other programmable device. The computer instructions may be stored in a computer readable storage medium or transmitted from one computer readable storage medium to another computer readable storage medium, for example, the computer instructions may be transmitted from a website, computer, server or data center to another website, computer, server, or data center by wire (such as coaxial cable, fiber optic, digital subscriber line (DSL)) or wirelessly (such as infrared, wireless, microwave, etc.). The computer-readable storage medium may be any usable medium that can be accessed by a computer or a data storage device such as a server and a data center and the like that includes an integration of one or more available medium. The usable media may be magnetic media (such as a floppy disk, a hard disk, a magnetic tape), optical media (such as DVD), or solid state disk (SSD) and the like.

A fifth warehousing system provided by an embodiment of the present application is described in detail below.

Referring to Fig. 26a and Fig. 26b, Fig. 26a is a schematic top view of a first embodiment of the fifth warehousing system provided by an embodiment of the present application; Fig. 26b is a schematic top view of a second embodiment of the fifth warehousing system provided by an embodiment of the present application. As shown in Fig. 26a and Fig. 26b, the warehousing system includes a storage area 3-110, a goods arranging area 3-120, multiple movable goods shelves 3-200, a transfer robot 3-300 and a goods arranging robot 3-400. Wherein, the storage area 3-110 is used for storing the movable goods shelves 3-200; the goods arranging area 3-120 is used for arranging the movable goods shelves 3-200 in this area.

Each movable goods shelf 3-200 includes a storage space 3-210 and an accommodation space 3-220; the storage space 3-210 is provided with multiple storage bins 3-211 for storing containers 3-600; the accommodation space 3-220 is arranged below the storage space 3-210 for the transfer robot 3-300 to move the movable goods shelf 3-200.

The transfer robot 3-300 is used for moving a movable goods shelf waiting goods arranging 3-200 in the storage area 3-110 to the goods arranging area 3-120; or to transfer the arranged movable goods shelf 3-200 in the goods arranging area 3-120 to the storage area 3-110.

The goods arranging robot 3-400 is movably arranged in the goods arranging area 3-120, and is used for arranging containers 3-600 storing the same type of goods in the movable goods shelves 3-200 in the goods arranging area 3-120 into a same movable goods shelf 3-200.

The warehousing system provided by the embodiment of the present application uses the transfer robot 3-300 to move the movable goods shelf waiting goods arranging 3-200 in the storage area 3-110 to the goods arranging area 3-120; in the goods arranging area 3-120, the warehousing system uses the goods arranging robot 3-400 picking-up and placing containers 3-600 between the movable goods shelves 3-200, and arranging containers 3-600 storing the same type of goods into the same movable goods shelf 3-200; and then the warehousing system uses the transfer robot 3-300 for transferring the movable goods shelf after arranging 3-200 to the storage area 3-110, so that automated goods arranging is realized, and the movable goods shelf after arranging 3-200 is warehoused-out in the next warehousing-out, thus enabling faster warehoused-out, and improving the warehouse operation efficiency.

Moreover, the solution in the present application utilizes the goods arranging robot 3-400 to perform goods arranging in the dedicated goods arranging area 3-120, which has the advantages of low cost, no occupation of manual stations during the goods arranging, and saving labor costs. In addition, as shown in Fig. 26a and Fig. 26b, in this embodiment, one goods arranging robot 3-400 can perform goods arranging on multiple movable goods shelves 3-200, such that multiple-to-multiple goods arranging and higher goods arranging efficiency are achieved.

In the embodiments shown in Fig. 26a and Fig. 26b, in order to store more containers 3-600, the movable goods shelf 3-200 is a double-deep movable goods shelf, and the corresponding goods arranging robot 3-400 is a robot that can pick-up and place containers 3-600 in the double-deep shelf. In other embodiments, the movable goods shelf 3-200 can also be a triple-deep or single-deep movable goods shelf, and the corresponding goods arranging robot 3-400 can pick-up and place containers 3-600 on the respective triple-deep or single-deep movable goods shelf.

In the embodiment shown in Fig. 26a, the goods arranging robot 3-400 is a guile-rail-type container transferring device, and moves horizontally along the length direction of the movable goods shelf 3-200 based on a ground support frame 3-1210, for goods arranging. The specific structure and implementation are detailed in the subsequent description.

In the embodiment shown in Fig. 26b, the goods arranging robot 3-400 is a container transfer robot driven by a mobile chassis, which is configured for moving along a goods arranging channel 3-121 for goods arranging. The specific structure and implementation are described in detail in the subsequent description.

It should be noted that the container in this embodiment refers to a container that can accommodate goods, such as a workbin, a tray, etc., and this application does not limit this.

In a specific application, as shown in Fig. 26a and Fig. 26b, in this embodiment, a goods arranging channel 3-121 for the goods arranging robot 3-400 to perform goods arranging operations is arranged at a preset position in the goods arranging area 3-120; when goods arranging is required, the transfer robot 3-300 moves a target goods shelf 3-230 and the movable goods shelf waiting goods arranging 3-200 in the storage area 3-110 to the goods arranging area 3-120, so that the movable goods shelf waiting goods arranging 3-200 and the target goods shelf 3-230 are located on both sides of the goods arranging channel 3-121 in the length direction of the goods arranging channel 3-121; wherein, the target goods shelf 3-230 is an empty goods shelf, or a movable goods shelf 3-200 with free storage bins 3-211.

In the embodiments shown in Fig. 26a and Fig. 26b, the movable goods shelf waiting goods arranging 3-200 and the target goods shelf 3-230 are located on both sides of the goods arranging channel 3-121 in the length direction of the goods arranging channel 3-121. In other embodiments, the movable goods shelf 3-200 waiting goods arranging and the target goods shelf 3-230 are located on one side of the goods arranging channel 3-121 in the length direction of the goods arranging channel 3-121, which is not limited here.

As shown in Fig. 26a and Fig. 26b, in this embodiment, the goods arranging robot 3-400 can configured for moving along the length direction of the goods arranging channel 3-121, and can arrange, based on its own lifting and lowering function, the containers 3-600 storing the same type of goods in movable goods shelves waiting goods arranging 3-200 into the same target goods shelf 3-230 and/or the same movable goods shelf waiting goods arranging 3-200 along the length direction and the vertical direction.

In this embodiment, by presetting the goods arranging channel 3-121 in the goods arranging area 3-120, the goods arranging area 3-120 is more tidy, the goods arranging process is more regular and orderly, and the goods arranging space of the goods arranging area 3-120 can be effectively utilized.

Referring to Fig. 27, which is a schematic partial top view of the goods arranging area in the embodiment shown in Fig. 26b, Fig. 27 shows the goods arranging robot 3-400 performing goods arranging in the goods arranging channel 3-121.

Taking the container transfer robot driven by the mobile chassis shown in Fig. 26b as an example, as shown in Fig. 27, the goods arranging robot 3-400 in this embodiment can pick-up a container 3-600 in the movable goods shelf 3-200, and transfer it to another storage bin 3-211 through horizontal and/or vertical movement (each position in Fig. 27 corresponds to one storage bin 3-211). For example:
1) the goods arranging robot 3-400 transfers the container 3-600 from a storage bin 3-211 of a certain movable goods shelf 3-200 to a storage bin 3-211 in a movable goods shelf on the other side of the goods arranging channel 3-121 (i.e., the target goods shelf 3-230 in Fig. 27), for example: from position 1 to position 2.
2) the goods arranging robot 3-400 transfers the container 3-600 from a storage bin 3-211 of a certain movable goods shelf 3-200 to a storage bin 3-211 in another movable goods shelf 3-200 on the same side of the goods arranging channel 3-121, for example: from position 1 to position 3.
3) the goods arranging robot 3-400 transfers the container 3-600 from a storage bin 3-211 of a certain movable goods shelf 3-200 to another storage bin 3-211 of the same goods shelf, wherein the another storage bin 3-211 may be on the same layer as the storage bin 3-211 or on a different layer form storage bin 3-211, for example from position 1 to position 4.

In addition, since the present embodiment is a double-deep movable multi-layer goods shelf, the goods arranging robot 3-400 in the present embodiment can support double-deep picking-up and placing accordingly, that is, simultaneously support picking-up and placing goods at a first depth or a second depth.

The goods arranging robot 3-400 in this embodiment can be a container transfer robot driven by a mobile chassis that can realize vertical container transferring as shown in Fig. 26b and can also support horizontal transferring; the goods arranging robot 3-400 can also be a guide-rail-type container transferring device that can realize a horizontal movement within a limited range and vertical container transferring as shown in Fig. 26a, which will be described in detail later.

In can be seen from the above embodiments, the goods arranging robot 3-400 in this embodiment can be a guide-rail-type container transferring device or a container transfer robot driven by a mobile chassis, and can be set according to the actual application site of the warehousing system, with strong flexibility.

In the following, the warehousing systems is described in detail respectively for the two implementation ways of the goods arranging robot 3-400.

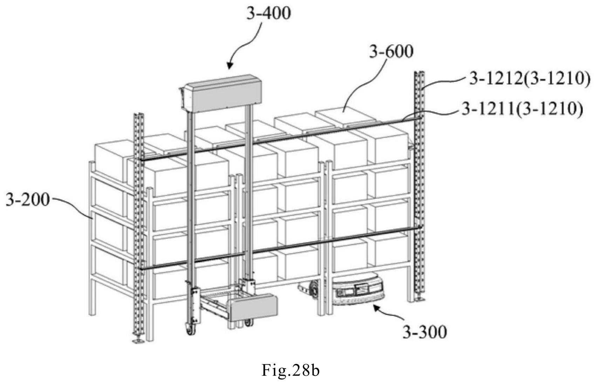

In the case that the goods arranging robot 3-400 is a guide-rail-type container transferring device, referring to Fig. 28a and Fig. 28b. Fig. 28a is a stereoscopic schematic diagram of a positional relationship between a transfer robot shown in Fig. 26a and a movable goods shelf; Fig. 28b is a schematic diagram of Fig. 28a from another angle of view (excluding the movable goods shelf on the right side of Fig. 28a). As shown in Figs. 28a and 28b, in order to adopt the guide-rail-type container transferring device, a ground support frame 3-1210 arranged along the length direction of the movable goods shelf 3-200 can be arranged in the goods arranging channel 3-121.

Wherein, the goods arranging robot 3-400, that is, the guide-rail-type container transferring device, is arranged at the ground support frame 3-1210, and the goods arranging robot 3-400 can move horizontally at the ground support frame 3-1210 along the length direction of the movable goods shelf 3-200, and can realize the picking-up and placing of the container 3-600 in the movable goods shelf 3-200 along the length direction and the vertical direction based on its own lifting and lowering function.

As shown in Fig. 28a and Fig. 28b, the ground support frame 3-1210 may be a gantry including multiple support crossbeams 3-1211 and support vertical beams 3-1212. The support crossbeams 3-1211 are spaced apart along the vertical direction of the movable goods shelf 3-200, and the support vertical beams 3-1212 are fixed on the ground and spaced apart, and the support crossbeams 3-1211 span between the support vertical beams 3-1212. The first robot 300 is mounted to the support crossbeams 3-1211 and is movably connected to the support crossbeams 3-1211, so that the goods arranging robot 3-400 moves along a horizontal direction of the movable goods shelf 3-200 based on the support crossbeams 3-1211.

As shown in Fig. 28a and Fig. 28b, in this embodiment, the ground support frame 3-1210 is provided with two vertically spaced-apart support crossbeams 3-1211 in the length direction of the movable goods shelf 3-200, and the goods arranging robot 3-400 is movably connected to the two support crossbeams 3-1211 to enable the goods arranging robot 3-400 to move along a horizontal direction of the ground support frame 3-1210.

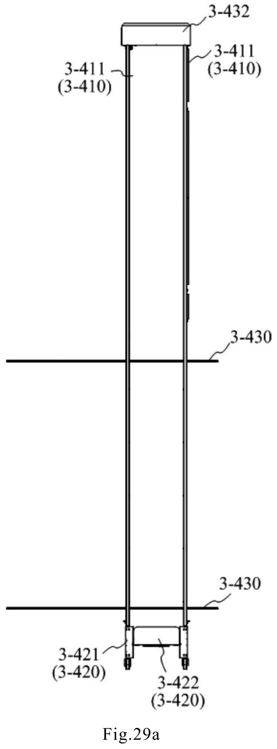

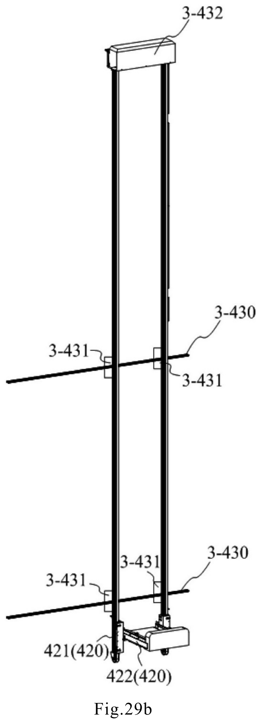

Referring to Fig. 28a, Fig. 28b, Fig. 29a and Fig. 29b, Fig. 29a is a schematic structural diagram of the goods arranging robot in the embodiment shown in Fig. 28a form a first angle of view; Fig. 29b is a schematic structural diagram of a goods arranging robot in the embodiment shown in Fig. 28a from a second angle of view. As shown in Figs. 28a, 28b, 29a and 29b, the goods arranging robot 3-400 includes a first column portal frame 3-410, a first transfer mechanism 3-420 and at least one guide rail 3-430; the first column portal frame 3-410 is mounted along the vertical direction of the ground support frame 3-1210; the first transfer mechanism 3-420 is arranged at the first column portal frame 3-410, and has a lifting and lowering function, and is used for picking-up and placing containers 3-600 at different heights in the movable goods shelf 3-200; the at least one guide rail 3-430 is fixedly mounted to the support crossbeams 3-1211 of the ground support frame 3-1210; the first column portal frame 3-410 is movably connected to the at least one guide rail 3-430, so that the first column portal frame 3-410 and the first transfer mechanism 3-420 can move horizontally along the support crossbeams 3-1211 to pick-up and place different containers 3-600 in the length direction of the movable goods shelf 3-200.

In this embodiment, in order to ensure that the goods arranging robot 3-400 is mounted stably, the goods arranging robot 3-400 is provided with two guide rails 3-430, and are respectively fixed to the two supporting crossbeams 3-1211 of the ground support frame 3-1210 (for example, they can be fixed to the supporting crossbeams by screws). The first column portal frame 3-410 is movably connected to the two supporting beams 3-1211, to move along the horizontal direction of the ground support frame 3-1210.

Specifically, as shown in Fig. 29a, rollers 3-431 are arranged at two door posts 3-411 fixed to the first column portal frame 3-410; the rollers 3-431 can drive the first column portal frame 3-410 and the first transfer mechanism 3-420 arranged between the two door posts 3-411 to move horizontally along the guide rails 3-430. Since the guide rails 3-430 are fixedly connected to the support crossbeams 3-1211 of the ground support frame 3-1210, the first column portal frame 3-410 and the first transfer mechanism 3-420 arranged between the two door posts 3-411 can move horizontally along the support crossbeams 3-1211 of the ground support frame 3-1210.

In this embodiment, as shown in Fig. 29a and Fig. 29b, the first transfer mechanism 3-420 includes a first lifting and lowering component 3-421 and a first picking-up component 3-422; the first lifting and lowering component 3-421 is arranged at the first column portal frame 3-410, and used for driving the first picking-up component 3-422 to move up and down along the vertical direction of the ground support frame 3-1210; the first picking-up component 3-422 is mounted to the first lifting and lowering component 3-421, and is used for extending out of the first column portal frame 3-410 to pick-up and place containers 3-600 at different heights in two adjacent movable goods shelves 3-200.

In practical applications, one end of the first picking-up component 3-422 may be provided with a baffle plate for blocking the container 3-600 and prevent the container 3-600 from falling during movement. In this case, in order to pick-up and place the containers 3-600 in two movable goods shelves 3-200, a rotating component may be arranged at the bottom of the first picking-up component 3-422 of the first transfer mechanism 3-420 so that the first picking-up component 3-422 can switch the direction of picking-up and placing goods, and at the same time, can extend to different lengths by the telescopic mechanism, to pick-up and place the containers 3-600 at different depths of the two adjacent movable goods shelves 3-200. Of course, if the first picking-up component 3-422 is not provided with the baffle plate, the first picking-up component 3-422 can also extend to different lengths only by the telescopic mechanism to pick-up and place the containers 3-600 at different depths of the two adjacent movable goods shelves 3-200.

In this embodiment, the first lifting and lowering component 3-421 may include a driving motor, a driving wheel, a driven wheel and two synchronous belts, wherein the driving motor and the driving wheel are arranged in the top housing 3-432, the driven wheel is arranged at the bottom of the two door posts 3-411, and the two synchronous belts are sleeved outside the driving wheel, the door posts 3-411 and the driven wheel. The first picking-up component 3-422 is connected to the two synchronous belts through connecting blocks on both sides.

In this way, the two synchronous belts of the first lifting and lowering component 3-421 can drive the first picking-up component 3-422 to move up and down by driving the connecting blocks to move up and down, to realize the up and down movement of the first picking-up component 3-422 along vertical direction of the ground support frame 3-1210. The first picking-up component 3-422 can include a telescopic mechanism, and extend into the movable goods shelf 3-200 through the telescopic mechanism to pick-up and place containers located at a single-depth and/or multiple-depth. In this embodiment, the extension distance that the telescopic mechanism can extend can be designed based on the distance between the two adjacent movable goods shelves and the length for the depth of the goods shelves, and there is no limitation here.

In this embodiment, the form of the first picking-up component 3-422 includes but is not limited to a fork arm type, a suction cup type, a roller type, a hook arm, etc.

In this embodiment, the goods arranging robot 3-400 can pick-up and place the containers 3-600 in the two adjacent movable goods shelves 3-200 in the horizontal direction based on the relative rolling between the rollers 3-431 and the guide rails 3-430 fixedly arranged at the support crossbeams 3-1211; and can pick-up and place the containers 3-600 in the two adjacent movable goods shelves 3-200 in the up and down direction based on the first lifting and lowering component 3-421.

In this embodiment, in the goods arranging robot 3-400, the rollers are used to drive the entire goods arranging robot 3-400 to move at the guide rails 3-430, which enables the faster moving speed, and can improve the efficiency of picking-up and placing goods. Of course, in other embodiments, the sliders can also be used to drive the entire goods arranging robot 3-400 to move at the guide rails 3-430, which enables a relatively slower moving speed compared with the case of using the rollers, which will not be described in detail here.

In this embodiment, since the goods arranging robot 3-400 is a guide-rail-type container transferring device to pick-up and place the containers, the goods arranging robot 3-400 is arranged at a ground support frame 3-1210, and the ground support frame 3-1210 is arranged in the goods arranging channel 3-121, which can ensure the picking-up and placing of the containers in the horizontal and vertical directions, and relatively stable operations of picking-up and placing the container.

In other embodiments, the goods arranging robot 3-400 may be a container transfer robot driven by a mobile chassis.

Next, an implementation in which the goods arranging robot 3-400 is a container transfer robot driven by a mobile chassis is described.

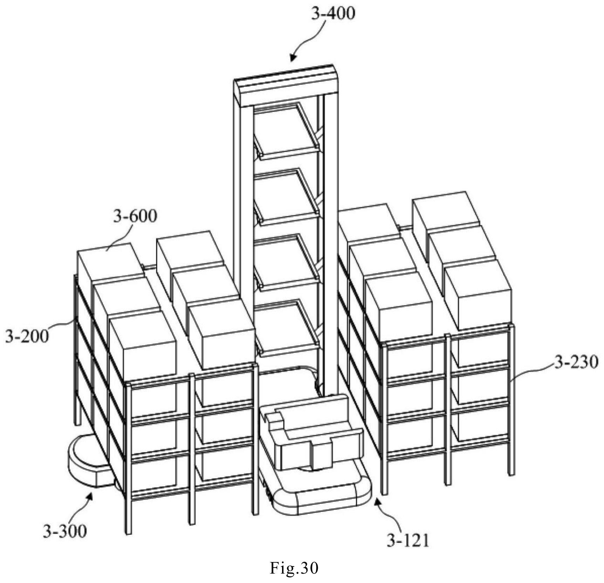

In the case that the goods arranging robot 3-400 is a container transfer robot driven by a mobile chassis, referring to Fig. 30, Fig. 30 is a schematic diagram of stereoscopic structure of a positional relationship between another transfer robot shown in Fig. 26b and a movable goods shelf. As shown in Fig. 30, in this embodiment, it is not necessary to provide a ground support frame 3-1210 in the goods arranging channel 3-121. Instead, the goods arranging robot 3-400 directly uses the chassis to move in the goods arranging channel 3-121. In this case, the goods arranging robot 3-400 is used for moving along the goods arranging channel 3-121 and picking-up and placing the container 3-600 between the movable goods shelves 3-200 on both sides or the same side of the goods arranging channel 3-121.

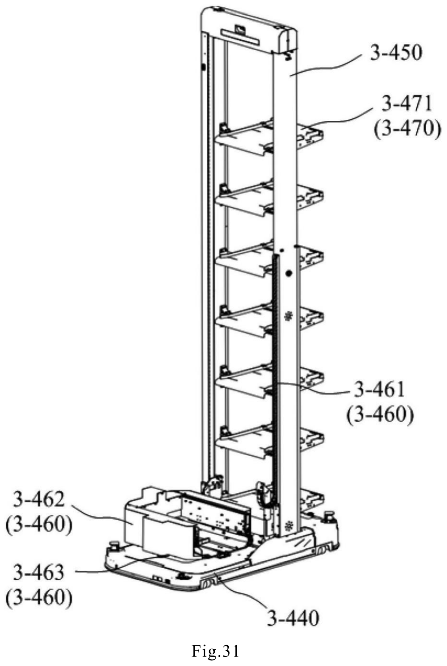

Specifically, referring to Fig. 31, which is a schematic diagram of stereoscopic structure of the goods arranging robot in the embodiment shown in Fig. 30. In this embodiment, the goods arranging robot 3-400 includes a first mobile chassis 3-440, a second column portal frame 3-450, and a second transfer mechanism 3-460, wherein, the first mobile chassis 3-440 is used for driving the goods arranging robot 3-400 to move along the goods arranging channel 3-121; the second column portal frame 3-450 is mounted to the first mobile chassis 3-440 in the vertical direction; the second transfer mechanism 3-460 is movably connected to the second column portal frame 3-450 in the up and down direction for moving vertically at the second column portal frame 3-450 to pick-up and place the containers 3-600 at different heights in the movable goods shelves 3-200 on one side or both sides of the goods arranging channel 3-121.

In this embodiment, the second transfer mechanism 3-460 includes a second lifting and lowering component 3-461, a second picking-up component 3-462 and a rotating component 3-463; wherein the second lifting and lowering component 3-461 is arranged at the second column portal frame 3-450, and used for driving the second picking-up component 3-462 to move up and down along the vertical direction of the second column portal frame 3-450; the second picking-up component 3-462 is mounted to the second lifting and lowering component 3-461, and is used for extending out the second column portal frame 3-450 to pick-up and place the containers 3-600 at different heights in the movable goods shelves 3-200 on one side or both sides of the goods arranging channel 3-121.

In this embodiment, the second lifting and lowering component 3-461 and the second picking-up component 3-462 can have the same structure as the aforementioned first lifting and lowering component 3-421 and the first picking-up component 3-422, or can have the different structure from the aforementioned first lifting and lowering component 3-421 and the first picking-up component 3-422. As shown in Fig. 31, the second picking-up component 3-462 of the goods arranging robot 3-400 in this embodiment can be a drawer-type second picking-up component, which extends by a telescopic fork.

In this embodiment, as shown in Fig. 31, the rotating component 3-463 is arranged at the bottom of the second picking-up component 3-462, and is used for driving the second picking-up component 3-462 to rotate, so as to face the movable goods shelves 3-200 on different sides, and then pick-up and place the containers in different movable goods shelves 3-200.

In this embodiment, as shown in Fig. 31, the goods arranging robot 3-400 further includes a temporary storage unit 3-470. The temporary storage unit 3-470 is fixedly arranged at the second column portal frame 3-450; the temporary storage unit 3-470 includes multiple storage layer-boards 3-471 arranged in sequence along the second column portal frame 3-450; each of the storage layer-boards 3-471 is used for temporarily storing one to-be-moved container 3-600.

In this way, the goods arranging robot 3-400 is also used for moving the to-be-moved containers 3-600 in the movable goods shelf 3-200 on one side or both sides of the goods arranging channel 3-121 to the storage layer-boards 3-471, and then move containers 3-600 storing the same type of goods on the storage layer-boards 3-471 to the same movable goods shelf 3-200.

Specifically, the spacing between storage layer-boards 3-471 is greater than the height of the container 3-600. When there are multiple to-be-moved containers 3-600, the goods arranging robot 3-400 can firstly pick-up the containers 3-600 from the storage bins 3-211 of the movable goods shelf waiting goods arranging 3-200 and place them on the storage layer-boards 3-471, and then move containers 3-600 storing the same type of goods on the storage layer-boards 3-471 to the same movable goods shelf 3-200 as the target goods shelf.

In this embodiment, the goods arranging robot 3-400 uses a container transfer robot driven by a mobile chassis for goods arranging. It is not necessary to provide a support frame separately, and only a operation channel needs to be arranged, which simplifies the system setting. In addition, when goods arranging is not required, the goods arranging robot 3-400 can be docked at the corner of the goods arranging area 3-120, or even docked outside the storage area 3-110 and the goods arranging area 3-120, so that the storage area 3-110 and the goods arranging area 3-120 is more concise in structure and more flexible in goods arranging. At the same time, by the application of the temporary storage unit 3-470 for goods arranging, multiple containers 3-600 can be picked-up and placed at a time, which improves the goods arranging efficiency.

In the embodiment of the present application, in order to enable the transfer robot 3-300 to transfer the movable goods shelf 3-200, an accommodation space 3-220 is arranged at the bottom of the transfer movable goods shelf 3-200 for the transfer robot 3-300 to move the movable goods shelf 3-200.

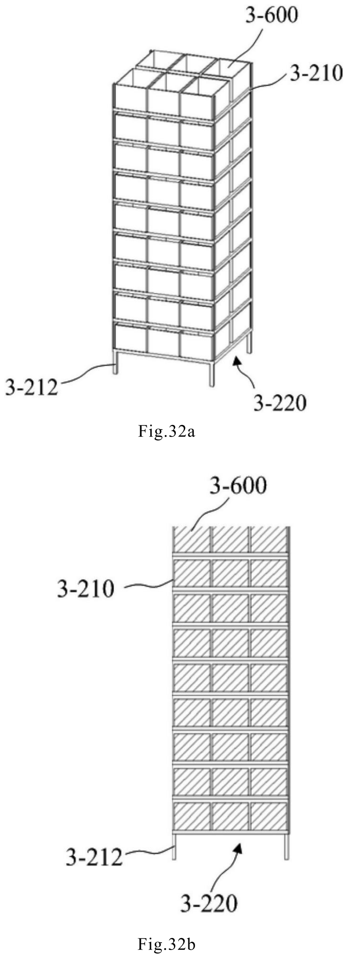

Specifically, referring to Fig. 32a and Fig. 32b, Fig. 32a is a schematic diagram of stereoscopic structure of a movable goods shelf in an embodiment of the present application; Fig. 32b is a schematic structural diagram of a first side surface of the movable goods shelf shown in Fig. 32a. As shown in Figs. 32a and 32b, the movable goods shelf 3-200 in the embodiment of the present application can be a 3*2*9 movable goods shelf with a length being cable of accommodating three containers, and a width being cable of accommodating two containers (i.e., double-deep), and a height set to 9 layers. In actual applications, the length, width, and height of the movable goods shelf 3-200 can be set according to the actual warehouse site conditions and the transferring capacity of the transfer robot 3-300, and there is no limitation here.

As shown in Fig. 32a and Fig. 32b, multiple support columns 3-212 may be arranged at the bottom of the movable goods shelf 3-200, and the multiple support columns 3-212 extend toward the ground to form the accommodation space 3-220; the accommodation space 3-220 is used for the transfer robot 3-300 to move the movable goods shelf 3-200.

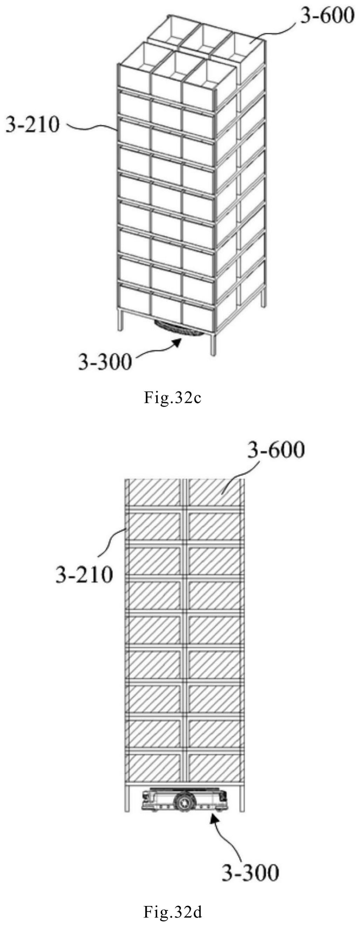

Referring to Fig. 32c and Fig. 32d, Fig. 32c is a schematic diagram of stereoscopic structure of the movable goods shelf shown in Fig. 32a cooperating with a transfer robot; Fig. 32d is a schematic structural diagram of a second side of the embodiment shown in Fig. 32c. As shown in Fig. 32c and Fig. 32d, the transfer robot 3-300 can move into the accommodation space 3-220 at the bottom of the movable goods shelf 3-200, and then transfer the entire movable goods shelf 3-200.

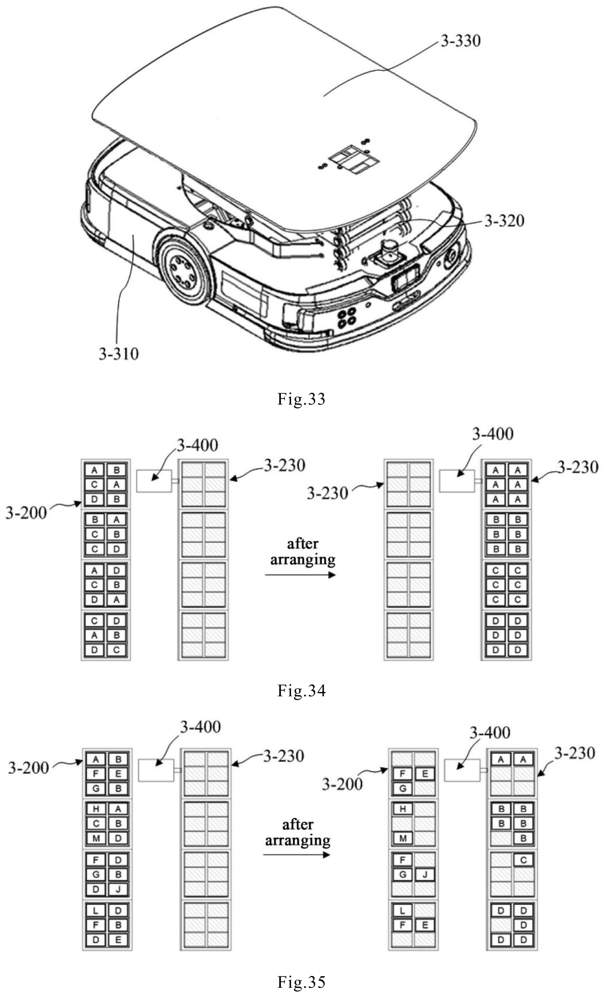

Referring to Fig. 32c, 32d and 33, Fig. 33 is a schematic diagram of stereoscopic structure of the transfer robot in the embodiment shown in Fig. 28a; as shown in Fig. 33, in this embodiment, the transfer robot 3-300 is a lifting-type movable robot; the height of the accommodation space 3-220 of the movable goods shelf 3-200 is higher than that of the lifting-type movable robot, so that the lifting-type movable robot can move to the interior of the accommodation space 3-220, lift the movable goods shelf 3-200 to move or place the movable goods shelf 3-200 on the ground.

Specifically, as shown in Fig. 33, the transfer robot 3-300 includes a second mobile chassis 3-310, a elevating mechanism 3-320 and a lifting platform 3-330, wherein the second mobile chassis 3-310 is arranged at the bottom of the transfer robot 3-300 and may include universal wheels to achieve multi-directional movement; the elevating mechanism 3-320 and the lifting platform 3-330 are arranged at the top of the second mobile chassis 3-310. When the transfer robot 3-300 is located in the accommodation space 3-220 of the movable goods shelf 3-200, the elevating mechanism 3-320 can lift the lifting platform 3-330 to a certain height so that the movable goods shelf 3-200 can be lifted off the ground as a whole and move with the transfer robot 3-300.

As shown in Fig. 32c and Fig. 32d, the height of the storage space 3-220 of the movable goods shelf 3-200 is higher than that of the lifting movable robot; in this way, the lifting-type movable robot can move to the interior of the accommodation space 3-220, lift the lifting platform 3-330 through the elevating mechanism 3-320 to enable the lifting platform 3-330 to contact the top of the accommodation space 3-220, and then lift the entire movable goods shelf 3-200 and drive the entire movable goods shelf 3-200 to move, or lower the lifting platform 3-330 through the elevating mechanism 3-320 to place the movable goods shelf 3-200 on the ground.

In this embodiment, the transfer robot 3-300 may be an automatic guided vehicle (AGV).

In the above embodiment, the goods arranging robot 3-400 cooperates with the transfer robot 3-300 to perform goods arranging using the following steps:
First, the transfer robot 3-300 moves the movable goods shelf waiting goods arranging 3-200 and the target goods shelf 3-230 to the goods arranging area 3-120;
Then, the transfer robot 3-300 arranges the movable goods shelf waiting goods arranging 3-200 and the target goods shelf 3-230 into a first column along one side of the goods arranging channel 3-121 in the length direction of the goods arranging channel 3-121. Alternatively, as shown in Fig. 26a and Fig. 26b, the transfer robot 3-300 arranges the movable goods shelf waiting goods arranging 3-200 into a second column along the first side of the goods arranging channel 3-121 in the length direction of the goods arranging channel 3-121, and arranges the target goods shelf 3-230 into a third column along the second side of the goods arranging channel 3-121 in the length direction of the goods arranging channel 3-121.

Then, the goods arranging robot 3-400 can be configured for moving along the length direction of the goods arranging channel 3-121, and arrange containers 3-600 storing the same type of goods in the movable goods shelf waiting goods arranging 3-200 in the first column into the same target goods shelf 3-230 in the first column, or, as shown in Fig. 26a and Fig. 26b, arrange containers 3-600 storing the same type of goods in the movable goods shelf waiting goods arranging 3-200 in the second column on the left side of the goods arranging channel 3-121 into the same target goods shelf 3-230 in the third column on the right side of the goods arranging channel 3-121.

Finally, the transfer robot 3-300 can transfer, to the storage area 3-110, the target goods shelf 3-230 after arranging and/or the movable goods shelf waiting arranging 3-200 after arranging, as the movable goods shelf 3-200 after arranging.

It should be noted that, in actual application, in response to determining that all containers 3-600 in the movable goods shelf waiting arranging 3-200 are moved to the target goods shelf 3-230 after the goods arranging task has been completed, the movable goods shelf waiting arranging 3-200 becomes a completely empty goods shelf.

Then, in this case, the transfer robot 3-300 only needs to transfer the target goods shelf 3-230 to the storage area 3-110, and the completely empty goods shelf can be retained in the goods arranging area 3-120, or can be concentrated at docketing point in the goods arranging area 3-120 by the transfer robot 3-300 or at a docketing point outside the storage area 3-110 and the goods arranging area 3-120 and close to the storage area 3-110, so that the transfer robot 3-300 can quickly transfer it to the storage area 3-110 when performing the goods arranging task next time, thereby further improving the warehousing-out speed and warehouse operation efficiency.

Of course, in some cases, after the goods arranging task has been completed, it is also possible that some of the containers 3-600 are moved to the target goods shelf 3-230, and some of the containers 3-600 are still left in the movable goods shelf waiting arranging 3-200. In this case, the transfer robot 3-300 can transfer both the target goods shelf 3-230 and the movable goods shelf waiting arranging 3-200 that still has some of the containers 3-600 (i.e., not empty) to the storage area 3-110. It can be set according to the actual situation and is not limited here.

Specifically, goods arranging can be performed through at least the following modes.

Taking the warehousing system shown in Fig. 26b as an example, several examples of the modes are given for explanation below.

Mode 1, transferring all containers 3-600 in movable goods shelves waiting goods arranging 3-200 to target goods shelves 3-230.

The following description is given by taking a case there are multiple movable goods shelves waiting goods arranging 3-200, target goods shelves 3-230 are empty goods shelves, and the number of the target goods shelves 3-230 is the same as the number of the movable goods shelves waiting goods arranging 3-200. Referring to Fig. 34, Fig. 34 is a schematic structural diagram of a first goods arranging mode of a goods arranging robot in an embodiment of the present application. Each movable goods shelf waiting arranging 3-200 on the left side, among the movable goods shelves 3-200 on both sides of the goods arranging channel 3-121 stores containers thereon; the target goods shelves 3-230 on the right side of the goods arranging channel 3-121 are completely empty; the goods arranging robot 3-400 arranges containers 3-600 storing the same type of goods in the movable goods shelves waiting goods arranging 3-200 into the respective target goods shelf 3-230 respectively.

It should be noted that, in this embodiment, Fig. 34 only takes the transferring from a full shelf to a target goods shelf as an example. In practice, before the goods arranging, the left movable goods shelf waiting arranging 3-200 does not need to be full, as long as the left movable goods shelf waiting arranging 3-200 stores a container waiting goods arranging. Similarly, after the goods arranging, the right target goods shelf 3-230 does not need to be full, as long as the goods arranging task is completed.

As mentioned above, after arranging, in response to determining that the movable goods shelf waiting arranging 3-200 is completely empty, the movable goods shelf waiting goods arranging 3-200 no longer needs to be transferred back to the storage area 3-110. In response to determining that the movable goods shelf waiting goods arranging 3-200 is not completely empty, the movable goods shelf 3-200 waiting goods arranging needs to be transferred back to the storage area 3-110 like the target goods shelf 3-230.

In practical applications, a control device and a workstation 3-500 are further provided in the warehousing system. The control device is in communication connection with the aforementioned transferring robot 3-300 and the goods arranging robot 3-400 , and is configured for instructing the transfer robot 3-300 to move the movable goods shelves waiting goods arranging 3-200 in the storage area 3-110 to the goods arranging area 3-120, or to move the movable goods shelves waiting arranging 3-200 in the goods arranging area 3-120 to the storage area 3-110; and to transfer the movable goods shelves 3-200 between the storage area 3-110 and the workstation 3-500; and for instructing the goods arranging robot 3-400 to arrange the containers 3-600 storing the same type of goods in the movable goods shelves 3-200 in the goods arranging area 3-120 into the same movable goods shelf 3-200. The workstation 3-500 includes a warehousing-in workstation 3-510 and a warehousing-out workstation 3-520.

The goods arranging process in mode 1 is described below.

Specifically, the goods arranging task can be completed by performing the following steps via the controlling device:
Step A, based on a current goods arranging task, instructing a transfer robot 3-300 to move the target goods shelves 3-230 and the movable goods shelves waiting goods arranging 3-200 in the storage area 3-110 to the goods arranging area 3-120, wherein, the goods arranging task is generated by the system according to business needs.

In this embodiment, the target goods shelves 3-230 may be empty goods shelves or movable goods shelves 3-200 with free storage bins 3-211. The empty goods shelves may be transferred from a preset docketing point by the transfer robot 3-300, and the movable goods shelves 3-200 with free storage bins 3-211 may be transferred from the storage area 3-110 by the transfer robot 3-300. Of course, the empty goods shelves may also be empty goods shelves retained in the goods arranging area 3-120 after the previous goods arranging task is completed.

As shown on the left of Fig. 34, in this example, the transfer robot 3-300 transfers the movable goods shelves waiting goods arranging 3-200 and the target goods shelves 3-230 to the left and right sides of the goods arranging robot 3-400 in the goods arranging channel 3-121, and the goods arranging robot 3-400 can pick-up and place containers in the movable goods shelves waiting goods arranging 3-200 and the target goods shelves 3-230.

In an actual application, the transfer robot 3-300 takes a movable goods shelf 3-200 as a unit, and one transfer robot 3-300 transfers one movable goods shelf 3-200 at a time. In order to improve the goods arranging efficiency of the goods arranging robot 3-400, in this example, four movable goods shelves waiting goods arranging 3-200 are arranged in a left column, and four empty target goods shelves 3-230 are arranged in a right column.

In addition, in this embodiment, one transfer robot 3-300 may be instructed to transfer each of the movable goods shelves waiting arranging 3-200 and the target goods shelves 3-230 in sequence, or multiple transfer robots 3-300 may be instructed to transfer each of the movable goods shelves 3-200 and the target goods shelves 3-230 to improve efficiency.

Step B, instructing the goods arranging robot 3-400 to pick-up containers 3-600 of the same type of goods from the movable goods shelves waiting goods arranging 3-200, and place the containers 3-600 one by one into the same target goods shelf 3-230.

Step C, instructing the transfer robot 3-300 to transfer each target goods shelf 3-230 after arranging that is full of containers 3-600 back to the storage area 3-110. In this step, taking the goods arranging robot 3-400 moving all containers to the target goods shelves 3-230 as an example, it is only necessary to transfer each target goods shelf 3-230 back to the storage area 3-110. In response to determining that there is still a container in a movable goods shelf waiting goods arranging 3-200, it is also necessary for the transfer robot 3-300 to move the movable goods shelf waiting goods arranging 3-200 back to the storage area 3-110.

As shown on the left of Fig. 34, before goods arranging, the movable goods shelf waiting goods arranging 3-200 messily store containers 3-600 storing different types of goods. There are four types of goods: A/B/C/D. As shown on the right of Fig. 34, after goods arranging, each target goods shelf 3-230 is full of containers 3-600 storing one type of goods respectively, and the types of goods stored in the four target goods shelves 3-230 arranged along the length direction of the target goods shelves 3-230 are A/B/C/D respectively.

In this way, automated goods arranging is realized. When warehousing-out next time, in response to determining that a certain type of goods needs to be warehoused-out, the transfer robot 3-300 directly moves a movable goods shelf 3-200 with containers 3-600 storing this type of goods to the warehousing-out workstation 3-520, which enables the faster warehousing-out, and improves the warehouse operation efficiency.

Mode 2, transferring some of the containers 3-600 in movable goods shelves waiting goods arranging 3-200 to target goods shelves 3-230.

**In** this mode, the transfer robot 3-300 firstly moves the first number of movable goods shelves waiting goods arranging 3-200 and the second number of target goods shelves 3-230 to the goods arranging area 3-120; the first number is the same as or different from the second number.

The goods arranging robot 3-400 tallies the goods according to the specified goods type, and moves containers 3-600 storing the specified goods type in the movable goods shelves waiting goods arranging 3-200 to the respective target goods shelf 3-230 respectively, so that each target goods shelf 3-230 stores containers 3-600 storing only one specified type of goods; containers 3-600 storing a non-specified type of goods are retained in the movable goods shelves waiting goods arranging 3-200.

When the target goods shelves 3-230 are not full and there is a next batch of movable goods shelves waiting goods arranging, the transfer robot 3-300 further transfers the movable goods shelves waiting goods arranging 3-200 with the containers 3-600 retained therein back to the storage area 3-110, and moves the first number of next batch of movable goods shelves waiting goods arranging 3-200 to the goods arranging area 3-120 for the goods arranging robot 3-400 to perform goods arranging according to the specified goods type, and moves containers 3-600 storing the specified type of goods in the movable goods shelves waiting goods arranging 3-200 to the respective target goods shelf 3-230 respectively; and when at least one of the target goods shelves 3-230 is full or the goods arranging task is completed, the transfer robot 3-300 moves the full target goods shelf 3-230 or a target goods shelf 3-230 that is still not full when the goods arranging task is completed to the storage area 3-110. After the full target goods shelf 3-230 is moved to the storage area 3-110, in response to determining that the goods arranging task has not been completed, the goods arranging robot 3-400 continues to perform goods arranging between the movable goods shelves waiting goods arranging 3-200 and a target goods shelf 3-230 that is not full or for which the goods arranging task has not completed. That is, when there is a target goods shelf 3-230 that is full or for which the goods arranging task has completed, it can be firstly transferred to the storage area 3-110 by the transfer robot 3-300, and the remaining target goods shelves 3-230 continue to stay in the goods arranging area 3-120, which can improve the goods arranging efficiency.

Referring to Fig. 35, which is a schematic structural diagram of a second goods arranging mode of a goods arranging robot in an embodiment of the present application.

Before the goods arranging robot 3-400 performs goods arranging, the transfer robot 3-300 transfers each movable goods shelf waiting arranging 3-200 storing containers to the left side of the goods arranging channel 3-121; transfers each completely empty target goods shelf 3-230 to the right side of the goods arranging channel 3-121; the goods arranging robot 3-400 tallies containers 3-600 storing the specified type of goods in the movable goods shelves waiting goods arranging 3-200 according to the specified type of goods, and moves the containers 3-600 to the respective target goods shelf 3-230 respectively; containers 3-600 storing a non-specified type of goods are retained in the movable goods shelves waiting arranging 3-200.

In this embodiment, Fig. 35 only takes the transfer of some of containers from a full goods shelf as an example. In practice, before the goods arranging, it is not necessary for a left movable goods shelf waiting goods arranging 3-200 to be full, as long as the left movable goods shelf waiting goods arranging 3-200 stores a container.

Specifically, the goods arranging task can be completed by performing the following steps via the controlling device:
Step A, based on a current goods arranging task, instructing a transfer robot 3-300 to move empty target goods shelves 3-230 and movable goods shelves waiting goods arranging 3-200 in the storage area 3-110 to the goods arranging area 3-120 respectively.

As shown in Fig. 35, in this example, the transfer robot 3-300 transfers the movable goods shelves waiting goods arranging 3-200 to the left side of the goods arranging channel 3-121, and transfers the target goods shelves 3-230 to the right side of the goods arranging channel 3-121. The goods arranging robot 3-400 can pick-up and place containers in the movable goods shelves waiting goods arranging 3-200 and the target goods shelves 3-230 on the left and right sides of the goods arranging channel 3-121.

Step B, instructing the goods arranging robot 3-400 to pick-up containers 3-600 storing a specified type of goods from the movable goods shelves waiting goods arranging 3-200, and place the containers 3-600 one by one in the same empty target goods shelf 3-230.

As shown in the left figure of Fig. 35, before goods arranging, the movable goods shelf waiting goods arranging 3-200 messily store containers 3-600 storing different types of goods. There are 11 types of goods: A/B/C/D/E/F/G/H/J/L/M. For example, the specified type is A/B/C/D. As shown on the right of Fig. 35, after goods arranging, the types of the goods stored in the four target goods shelves 3-230 arranged along the length direction on the right are A/B/C/D respectively. Since the number of containers 3-600 storing each of these four types of goods in the movable goods shelves waiting goods arranging 3-200 is less than the number of storage bins 3-211 of one movable goods shelf 3-200, each of the four target goods shelves 3-230 on the right is not full; except for the containers 3-600 storing these four types of goods in the movable goods shelves waiting goods arranging 3-200 on the left, the other containers 3-600 storing goods E/F/G/H/J/L/M are still retained in the original positions in the movable goods shelves waiting goods arranging 3-200.

Step C, instructing the transfer robot 3-300 to transfer the movable goods shelves waiting goods arranging 3-200 after arranging on the left back to the storage area 3-110.

Step D, when the target goods shelves 3-230 on the right are not full and there is a next batch of movable goods shelves waiting goods arranging 3-200, instructing the transfer robot 3-300 to move to the storage area 3-110 to transfer the next batch of movable goods shelves waiting goods arranging 3-200 to the goods arranging area 3-120, and repeat the above steps B-D.

Step E, when each of the four target goods shelves 3-230 on the right is full or the goods arranging task is completed, instructing the transfer robot 3-300 to transfer the four target goods shelves 3-230 on the right to the storage area 3-110.

In response to determining that there is still a container in a movable goods shelf waiting goods arranging 3-200, it is also necessary to instruct the transfer robot 3-300 to transfer the movable goods shelf waiting goods arranging 3-200 to the storage area 3-110.

By applying the above embodiment, in Mode 2, not only automatic goods arranging can be achieved, but also goods arranging based on specified goods type can be achieved.

Mode 3, using a dedicated backup temporary storage goods shelf to transfer containers 3-600 between movable goods shelves waiting goods arranging 3-200.

In a case that there are multiple movable goods shelves waiting goods arranging 3-200 and there are one or more target goods shelves 3-230, when goods arranging is required, the transfer robot 3-300 arranges the movable goods shelves waiting goods arranging 3-200 and the target goods shelves 3-230 into a first column along one side of the goods arranging channel 3-121 in the length direction of the goods arranging channel 3-121; or, arranges some of the movable goods shelves waiting goods arranging 3-200 into a second column along the first side of the goods arranging channel 3-121 in the length direction of the goods arranging channel 3-121, and arranges the remaining movable goods shelves waiting goods arranging 3-200 and the target goods shelves 3-230 into a third column along the second side of the goods arranging channel 3-121 in the length direction of the goods arranging channel 3-121; and after goods arranging, the transfer robot 3-300 transfers the movable goods shelves waiting goods arranging 3-200 after arranging back to the storage area 3-110;

In this mode, the goods arranging robot 3-400 is configured for moving along the length direction of the goods arranging channel 3-121. Furthermore, based on the lifting and lowering function of the goods arranging robot 3-400 itself, for each movable goods shelf waiting goods arranging 3-200 in sequence, the goods arranging robot 3-400 retains containers 3-600 storing the same type of goods in this movable goods shelf waiting goods arranging 3-200, moves other containers 3-600 in this movable goods shelf waiting goods arranging 3-200 to the target goods shelves 3-230 for temporary storage, and moves containers 3-600 storing said same type of goods in other movable goods shelves waiting goods arranging 3-200 and the target goods shelves 3-230 to this movable goods shelf waiting goods arranging 3-200, so that each movable goods shelf waiting goods arranging 3-200 is arranged to store containers 3-600 storing only one type of goods. In actual applications, after arranging, each goods shelf can store different types of goods. If the number of a certain type of goods is large, two or more goods shelves may store the type of goods, which is not limited here.

Specifically, the target goods shelves 3-230 may be one or more dedicated backup temporary storage goods shelves.

Next, the goods arranging process in the third mode is described.

In this embodiment, the goods arranging task can be completed by performing the following steps via the controlling device:
Step A, based on a current goods arranging task, instructing a transfer robot 3-300 to transfer empty target goods shelves 3-230 and a movable goods shelf waiting goods arranging 3-200 in the storage area 3-110 to the goods arranging area 3-120 respectively.

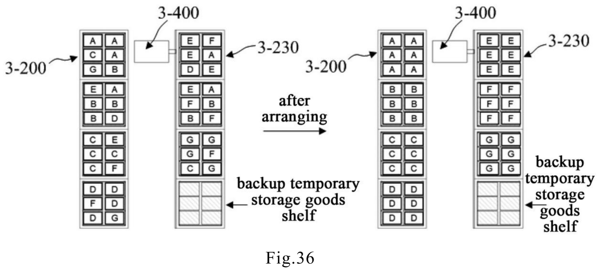

Referring to Fig. 36, Fig. 36 is a schematic structural diagram of a third goods arranging mode of the goods arranging robot in an embodiment of the present application. As shown on the left of Fig. 36, the goods arranging task includes 7 movable goods shelves waiting goods arranging 3-200, wherein 4 movable goods shelves waiting goods arranging 3-200 among the 7 movable goods shelves waiting goods arranging 3-200 are arranged in sequence on the left side of the goods arranging channel 3-121 along the length direction, and the other 3 movable goods shelves waiting goods arranging 3-200 and the empty target goods shelf (i.e., the backup temporary storage goods shelf in the figure) are arranged in sequence on the right side of the goods arranging channel 3-121 along the length direction.

As shown on the left of Fig. 36, in this example, the transfer robot 3-300 arranges 4 movable goods shelves waiting goods arranging 3-200 on the left side of the goods arranging channel 3-121, and the other 3 movable goods shelves waiting goods arranging 3-200 and the empty target goods shelf (i.e., the backup temporary storage goods shelf in the figure) are arranged in sequence on the right side of the goods arranging channel 3-121 along the length direction. The movable goods shelves waiting goods arranging 3-200 messily store containers 3-600 storing 7 types of goods A/B/C/D/E/F/G.

Step B, instructing the goods arranging robot 3-400 to use the backup temporary storage goods shelf to move back and forth and pick-up and place containers 3-600 among the movable goods shelves 3-200 on both sides of the goods arranging channel 3-121, so that except for the backup temporary storage goods shelf being empty, each movable goods shelf waiting goods arranging 3-200 stores containers 3-600 storing one type of goods.

Specifically, the goods arranging robot 3-400 can configured for moving along the length direction of the goods arranging channel 3-121. Furthermore, based on the lifting and lowering function of the goods arranging robot 3-400 itself, for each movable goods shelf waiting goods arranging 3-200 in sequence, the goods arranging robot 3-400 retains containers 3-600 storing the same type of goods in this movable goods shelf waiting goods arranging 3-200, moves other containers 3-600 to the backup temporary storage goods shelf for temporary storage, and moves containers 3-600 storing said same type of goods in other movable goods shelves waiting goods arranging 3-200 and the backup temporary storage goods shelf to this movable goods shelf waiting goods arranging 3-200, so that each movable goods shelf waiting goods arranging 3-200 is arranged to store containers 3-600 storing only one type of goods.

Referring to the right of Fig. 36, in this example, after arranging, the four movable goods shelves waiting goods arranging 3-200 on the left are loaded with four types of goods A/B/C/D respectively, and the three movable goods shelves waiting goods arranging 3-200 on the right are loaded with three types of goods E/F/G respectively, and the backup temporary storage goods shelf is empty.

Step C, instructing the transfer robot 3-300 to transfer the movable goods shelves waiting goods arranging 3-200 full of containers 3-600 back to the storage area 3-110.

It should be noted that when applying mode 3 for goods arranging, there can be multiple backup temporary storage goods shelves, which can set according to the actual goods arranging task and is not limited here.

By applying the above embodiment, in mode 3, not only can the automatic goods arranging among the multiple movable goods shelves 3-200 be realized, but also the goods arranging based on a single movable goods shelf 3-200 can be realized, which enables the more flexible goods arranging.

It should be noted that the above example is illustrated using top view plane example for ease of understanding. In actual applications, the movable goods shelf has multiple layers.

In addition, in practical applications, the above goods arranging process can be applied to but not limited to the following scenarios:
1) based on known future order requirements, the same type of goods to be warehoused-out are concentrated in a small number of goods shelves, and then the transfer robot 3-300, for example AGV, transfers the goods to the warehousing-out workstation 3-520, and the goods are warehoused-out manually at the warehousing-out workstation 3-520, which can improve the warehousing-out hit rate of goods to human.
2) based on known past order information and the frequency of warehousing-out and warehousing-in of different types of goods, the popularity of the inventory goods is analyzed, the goods with a similar popularity are concentrated in a small number of goods shelves, and then AGV stores them in the warehouse according to the popularity gradient (such as storing the goods with higher popularity in an area closer to the warehousing-out workstation 3-520), which can further improve the warehouse operation efficiency.
3) based on known past order information, the correlation between different types of goods is analyzed and the highly correlated goods are stored in the same goods shelf (or on the same side of the same goods shelf) to improve the warehousing-out hit rate of goods to human.
4) After the warehouse has been running for a period of time, many half-empty goods shelves will be occur, which can be automatically arranged to produce the completely empty goods shelves.

For example, multiple half-empty movable goods shelves can be moved to the goods arranging area, and a goods arranging robot can be used for moving and picking-up and placing goods among the half-empty movable goods shelves. Containers storing the same type of goods can be concentrated into one movable goods shelf. After the movable goods shelf is full, it can be moved to the storage area by a transfer robot.

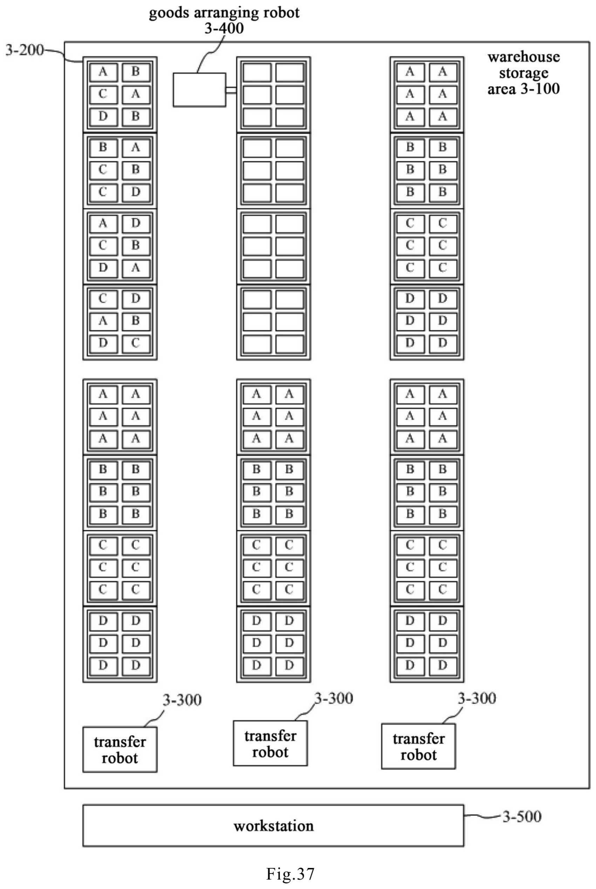

Referring to Fig. 37, Fig. 37 is a top view of schematic structural diagram of a third embodiment of the fifth warehousing system provided by an embodiment of the present application; the warehousing system includes a warehouse storage area 3-100, multiple movable goods shelves 3-200, a transfer robot 3-300, a goods arranging robot 3-400 and a workstation 3-500; a goods arranging channel 3-121 for the goods arranging robot 3-400 to perform goods arranging operations is arranged at a preset position in the warehouse storage area 3-100;
each of the movable goods shelves 3-200 includes a storage space 3-210 and an accommodation space 3-220; wherein the storage space 3-210 is provided with multiple storage bins 3-211 for storing containers 3-600; the accommodation space 3-220 is arranged below the storage space 3-210, and is used for the transfer robot 3-300 to move the movable goods shelf 3-200;
the transfer robot 3-300 is used for transferring the multiple movable goods shelves 3-200 from the workstation 3-500 to one or both sides of the goods arranging channel 3-121 in the length direction of the goods arranging channel 3-121, and for transferring the movable goods shelves 3-200 after arranging to the workstation 3-500;
the goods arranging robot 3-400 is movably arranged in the goods arranging channel 3-121 of the warehouse storage area 3-100, and is used for moving along the length direction of the goods arranging channel 3-121, and the goods arranging robot 3-400 arranges, based on its own lifting and lowering function, containers 3-600 storing the same type of goods in the movable goods shelves 3-200 into the same movable goods shelf 3-200 along the length direction and the vertical direction.

The warehousing system in this embodiment picks-up and places a container between the movable goods shelves by using the goods arranging robot, and arranges the containers storing the same type of goods into the same movable goods shelf; and transfers the movable goods shelves between the warehouse storage area and the workstation by using the second transfer robot, such that automated goods arranging is realized, and when warehousing-out next time, the movable goods shelf after arranging is warehoused-out, which enables the faster warehousing-out, and improves the warehouse operation efficiency.

The difference between this embodiment and the aforementioned first embodiment is that no special goods arranging area is set for goods arranging, so the goods arranging channel 3-121 is directly set in the warehouse storage area 3-100.

As in the aforementioned first embodiment, the goods arranging robot 3-400 in this embodiment can be a guide-rail-type container transferring device capable of transferring a container in the vertical direction and realizing horizontal movement within a limited range; or a container transfer robot driven by a mobile chassis capable of transferring a container in the vertical direction and supporting horizontal transferring, which will be described in detail later. The specific setting and structure can be the same as in the first embodiment, and will not be repeated here.

In some embodiments, some movable goods shelves 3-200 in the warehousing system may also include a fixed goods shelf 3-240, and the goods arranging robot 3-400 may also transfer goods between the movable goods shelves 3-200 and the fixed goods shelves 3-240.

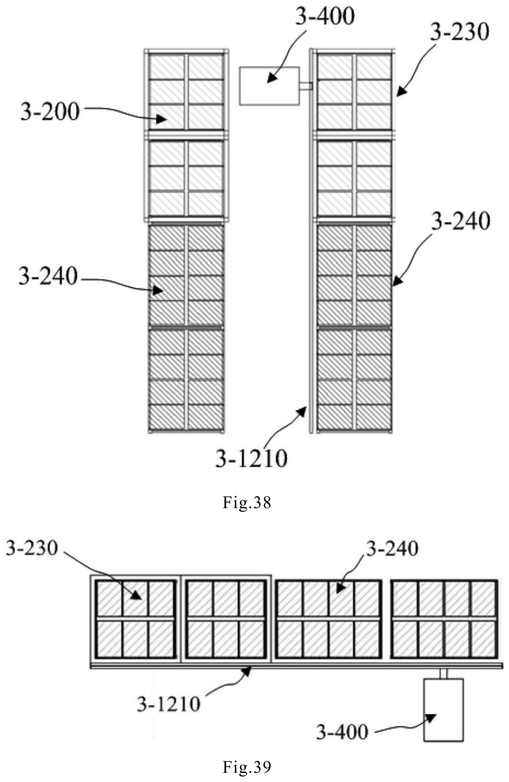

Specifically, in the fourth embodiment, referring to Fig. 38, Fig. 38 is a top view of a positional relationship between a goods arranging robot and movable goods shelves in a fourth embodiment of the fifth warehousing system provided by an embodiment of the present application; as shown in Fig. 38, the warehousing system includes multiple movable goods shelves 3-200 and multiple fixed goods shelves 3-240;
the transfer robot 3-300 is also used for transferring the movable goods shelves 3-200 with the free storage bins 3-211 to one end of the fixed goods shelves 3-240 in the length direction of the fixed goods shelf 3-240, so that the movable goods shelves 3-200 and the fixed goods shelves 3-240 are arranged in sequence in the length direction;
the goods arranging robot 3-400 is also used for arranging containers 3-600 storing the same type of goods located in the fixed goods shelves 3-240 into the same movable goods shelf 3-200.

As shown in Fig. 38, the transfer robot 3-300 can transfer the multiple movable goods shelves 3-200 to one end of the multiple fixed goods shelves 3-240, and the multiple movable goods shelves 3-200 and the multiple fixed goods shelves 3-240 can be arranged in one column on each of the left and right sides of the goods arranging channel 3-121. The goods arranging robot 3-400 can be movably arranged in the goods arranging channel 3-121.

In this way, the goods arranging robot 3-400 can configured for moving along the length direction of the goods arranging channel 3-121, and can arrange, based on its own lifting and lowering function, containers 3-600 storing the same type of goods into the same movable goods shelf 3-200 along the length direction and the vertical direction.

Specifically, the containers 3-600 storing the same type of goods in the fixed goods shelves 3-240 can be arranged into the same movable goods shelf 3-200. In this way, the movable goods shelf after arranging 3-200 stores only one type of container, and when warehousing-out, the transfer robot 3-300 directly transfers the movable goods shelf after arranging 3-200 to the workstation 3-500 for warehousing-out. This improves the speed of warehousing-out and the operating efficiency of the warehousing system.

In the fifth embodiment, referring to Fig. 39, Fig. 39 is a top view of a positional relationship between a goods arranging robot and movable goods shelves in a fifth embodiment of the fifth warehousing system provided by an embodiment of the present application; as shown in Fig. 39, the transfer robot 3-300 can transfer the multiple movable goods shelves 3-200 to one end of multiple fixed goods shelves 3-240, and the multiple movable goods shelves 3-200 and multiple fixed goods shelves 3-240 can be arranged in one column on the same side of the goods arranging channel 3-121, and the goods arranging robot 3-400 is arranged on one side of the movable goods shelf 3-200 and the fixed goods shelf 3-240 in their length direction.

In this way, the goods arranging robot 3-400 can arrange the containers 3-600 storing the same type of goods in the fixed goods shelves 3-240 into the same movable goods shelf 3-200. The movable goods shelf 3-200 after arranging can be transferred to the workstation 3-500 by the transfer robot 3-300; or, in response to determining that the movable goods shelf 3-200 is not full, this movable goods shelf 3-200 can be firstly transferred to one side of other fixed goods shelves 3-240 by the transfer robot 3-300, and then the goods arranging robot 3-400 moves the containers 3-600 storing the same type of goods in these fixed goods shelves 240 to this movable goods shelf 3-200, until this movable goods shelf 3-200 is full or the goods arranging task is completed, and then the transfer robot 3-300 transfers this movable goods shelf 3-200 to the workstation 3-500.

In addition, the goods arranging robot 3-400 in the embodiments shown in Fig. 38 and Fig. 39 may be a guide-rail-type container transferring device. As shown in Fig. 38 and Fig. 39, the guide-rail-type container transferring device may be mounted to a ground support frame 3-1210. Consistent with the aforementioned embodiments, in other embodiments including a fixed goods shelf 3-240, the goods arranging robot 3-400 may also be a container transfer robot driven by a mobile chassis. In this case, it is not necessary to provide a ground support frame 3-1210, and goods arranging is more convenient. The specific structure as well as picking-up and placing operations of the goods arranging robot 3-400 may be the same as those described above. This will not be repeated here.

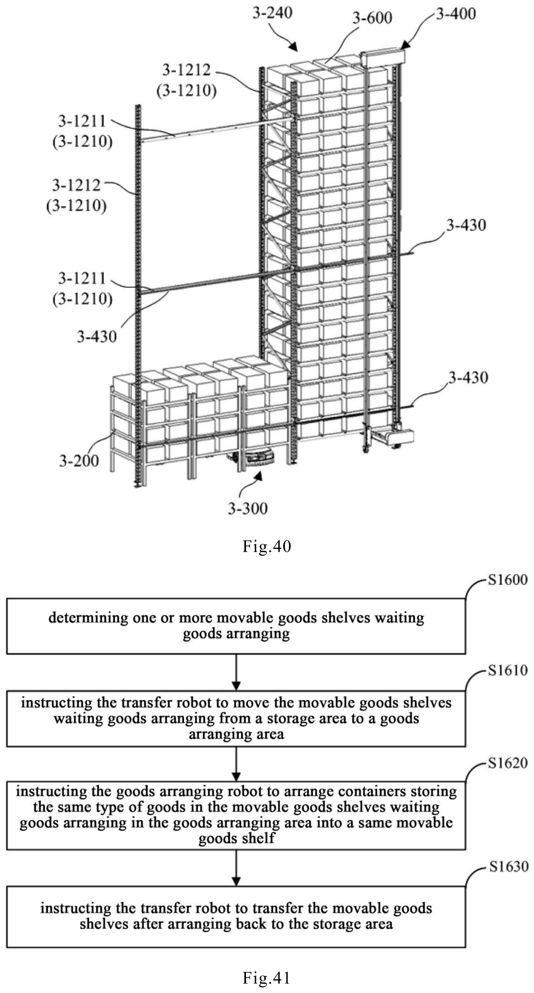

Refer to Fig. 40, Fig. 40 is a schematic diagram of specific stereoscopic structure of the embodiment shown in Fig. 39. As shown in Fig. 40, in this embodiment, the goods arranging robot 3-400 is a guide-rail-type container transferring device. The goods arranging robot 3-400 is mounted on one side of the fixed goods shelves 3-240 and the movable goods shelves 3-200 in the length direction of the fixed goods shelves 3-240 and the movable goods shelves 3-200 through the ground support frame 3-1210. As shown in Fig. 40, guide rails 3-430 for the goods arranging robot 3-400 are mounted to the support crossbeams 3-1211 of the support frame 3-1210, so that the goods arranging robot 3-400 can move in the horizontal direction along the support crossbeams 3-1211.

In this way, the goods arranging robot 3-400 can move containers 3-600 storing the same type of goods in the fixed goods shelves 3-240 to the same movable goods shelf 3-200 which is then be transferred away by the transfer robot 3-30. Of course, the goods arranging robot 3-400 can also arrange containers 3-600 in the fixed goods shelves 3-240 by means of the movable goods shelves 3-200. For example, the containers 3-600 storing the same type of goods can be concentrated on one or more layers of the fixed goods shelf 3-240. In this way, the goods can be picked-up and placed in a centralized manner during the next warehousing-out.

In the warehousing system of the embodiment shown in Fig. 38 to Fig. 40, the warehouse storage area 3-100 does not need to be separately provided with a goods arranging area, and the fixed goods shelves 3-240 can be arranged at a fixed position in the warehouse storage area 3-100, and the movable goods shelves 3-200 can be movably arranged in sequence with the fixed goods shelves 3-240. The movable goods shelf 3-200 can store the containers 3-600, and can also be used as a transit shelf for goods arranging to temporarily store the containers 3-600. This makes the warehousing-in and warehousing-out of the warehousing system more flexible.

In can be seen from the embodiments shown in Figs. 38 to 40, the goods arranging robot 3-400 can transfer the goods (which can be in the unit of a container) in the fixed goods shelves 3-240 to the movable goods shelves 3-200, and then the transfer robot 3-300 can transfer the movable goods shelves 3-200 for warehousing-out. Since the fixed goods shelf 3-240 is usually high, and can store more goods, that is, has the high warehouse capacity utilization rate. Therefore, before each warehousing-out, the goods are transferred to the movable goods shelves 3-200 in advance and transferred out of the warehouse by the transfer robot 3-300 (for example: AGV), which can improve the warehousing-out hit rate for the transfer robot 3-300 in a single transfer and improve the overall warehouse operation efficiency.

Two goods arranging methods provided by embodiments of the present application are described in detail below.

Specifically, a first goods arranging method provided by an embodiment of the present application is applied to a control device, and the control device is in communication connection with the transfer robot 3-300 and the goods arranging robot 3-400 in the first embodiment of the aforementioned fifth warehousing system. Referring to Fig. 41, which is a first flow chart of a first goods arranging method provided by an embodiment of the present application. As shown in Fig. 41; the method includes:
Step S1600, determining one or more movable goods shelves waiting goods arranging;
Step S1610, instructing the transfer robot to move the movable goods shelves waiting goods arranging from a storage area to a goods arranging area;
Step S1620, instructing the goods arranging robot to arrange containers storing the same type of goods in the movable goods shelves waiting goods arranging in the goods arranging area into a same movable goods shelf;
Step S1630, instructing the transfer robot to transfer the movable goods shelves after arranging back to the storage area.

As can be seen from the embodiment shown in Fig. 41, in the first goods arranging method provided by the embodiment of the present application, the movable goods shelves waiting goods arranging in the storage area are moved to the goods arranging area by using a transfer robot; in the goods arranging area, by using the goods arranging robot, containers are picked-up and placed between the movable goods shelves and the containers storing the same type of goods are arranged into the same movable goods shelf; the movable goods shelves after arranging are transferred to the storage area by using the transfer robot, thereby realizing automated goods arranging. When warehousing-out next time, the movable goods shelves after arranging are warehoused-out, which enables the faster warehousing-out, and improves warehouse operation efficiency.

In some embodiments, an empty goods shelf or a movable goods shelf with a free storage bin may be used for goods arranging.

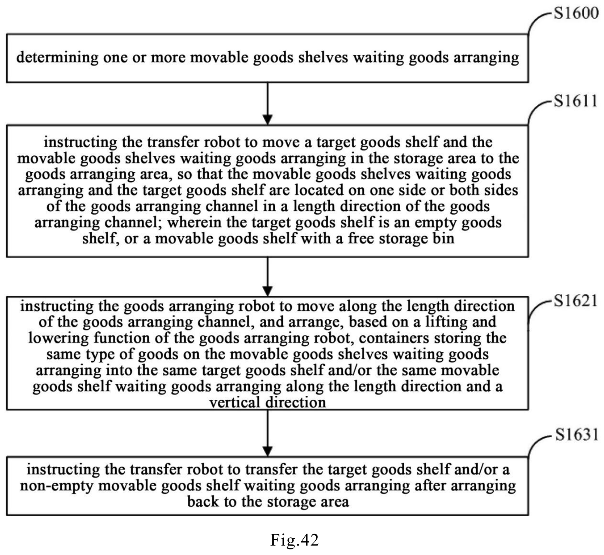

Specifically, in one implementation, referring to Fig. 42, Fig. 42 is a second flow chart of the first goods arranging method provided by an embodiment of the present application. As shown in Fig. 42, the flow chart includes:
Step S1600, determining one or more movable goods shelves waiting goods arranging;

In this step, the movable goods shelves waiting goods arranging can be determined according to types of goods stored in movable goods shelves in the storage area, or according to a type of goods to be warehoused-out together later predicted based on an order. For example, there are four types of goods, i.e., A/B/C/D, in the storage area, each container stores one type of goods, and containers are messily stored in different movable goods shelves. At this time, a movable goods shelves with a container storing A/B/C/D type of goods can be used as the movable goods shelf waiting goods arranging. For specific cases, the left of Figs. 34-36 can be referred. For another example, types of goods to be warehoused-out together later predicted based on an order include type A and type B, then each movable goods shelf with a container storing type A of goods and a container storing type B of goods can be used as a movable goods shelf waiting goods arranging. In fact, the movable goods shelves waiting goods arranging can be specifically determined according to the actual case, and there is no limitation here.
Step S1611, instructing the transfer robot to move a target goods shelf and the movable goods shelves waiting goods arranging in the storage area to the goods arranging area, so that the movable goods shelves waiting goods arranging and the target goods shelf are located on one side or both sides of the goods arranging channel in a length direction of the goods arranging channel; wherein the target goods shelf is an empty goods shelf, or a movable goods shelf with a free storage bin;
Step S1621, instructing the goods arranging robot to move along the length direction of the goods arranging channel, and arrange, based on a lifting and lowering function of the goods arranging robot, containers storing the same type of goods on the movable goods shelves waiting goods arranging into the same target goods shelf and/or the same movable goods shelf waiting goods arranging along the length direction and a vertical direction;
Step S1631, instructing the transfer robot to transfer the target goods shelf and/or a non-empty movable goods shelf waiting goods arranging after arranging back to the storage area.

By applying this embodiment, automated goods arranging can be realized. In warehousing-out next time, when a certain type of goods needs to be warehoused-out, the transfer robot can directly move the movable goods shelf with containers storing this type of goods to the warehousing-out workstation, which enables the faster warehousing-out, and improves the warehouse operation efficiency. At the same time, in this embodiment, an empty goods shelf or a movable goods shelf with a free storage bin serves as the target goods shelf, so that the goods arranging robot can perform goods arranging on one side or both sides of the multiple movable goods shelves, and the goods arranging way is more flexible.

In some embodiments, the control device may instruct the transfer robot and the goods arranging robot to perform operations by sending instructions to them.

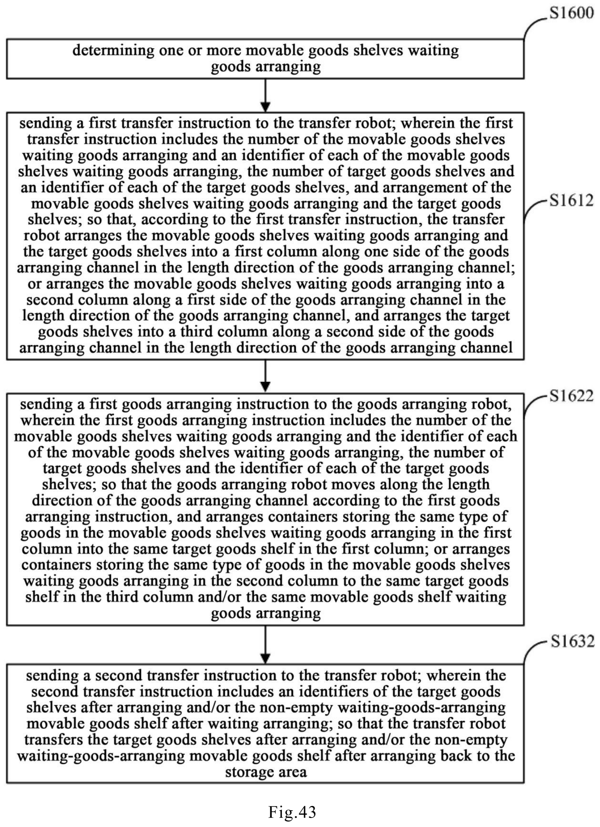

Specifically, referring to Fig. 43, Fig. 43 is a third flow chart of the first goods arranging method provided by an embodiment of the present application. As shown in Fig. 43, the flow chart includes:
Step S1600, determining one or more movable goods shelves waiting goods arranging;
Step S1612, sending a first transfer instruction to the transfer robot; wherein the first transfer instruction includes the number of the movable goods shelves waiting goods arranging and an identifier of each of the movable goods shelves waiting goods arranging, the number of target goods shelves and an identifier of each of the target goods shelves, and arrangement of the movable goods shelves waiting goods arranging and the target goods shelves; so that, according to the first transfer instruction, the transfer robot arranges the movable goods shelves waiting goods arranging and the target goods shelves into a first column along one side of the goods arranging channel in the length direction of the goods arranging channel; or arranges the movable goods shelves waiting goods arranging into a second column along a first side of the goods arranging channel in the length direction of the goods arranging channel, and arranges the target goods shelves into a third column along a second side of the goods arranging channel in the length direction of the goods arranging channel.
Step S1622, sending a first goods arranging instruction to the goods arranging robot, wherein the first goods arranging instruction includes the number of the movable goods shelves waiting goods arranging and the identifier of each of the movable goods shelves waiting goods arranging, the number of target goods shelves and the identifier of each of the target goods shelves; so that the goods arranging robot moves along the length direction of the goods arranging channel according to the first goods arranging instruction, and arranges containers storing the same type of goods in the movable goods shelves waiting goods arranging in the first column into the same target goods shelf in the first column; or arranges containers storing the same type of goods in the movable goods shelves waiting goods arranging in the second column to the same target goods shelf in the third column and/or the same movable goods shelf waiting goods arranging.
Step S1632, sending a second transfer instruction to the transfer robot; wherein the second transfer instruction includes an identifiers of the target goods shelves after arranging and/or the non-empty waiting-goods-arranging movable goods shelf after arranging; so that the transfer robot transfers the target goods shelves after arranging and/or the non-empty waiting-goods-arranging movable goods shelf after arranging back to the storage area.

In this embodiment, the control device can send instructions including information about the movable goods shelves waiting goods arranging and the target goods shelves to the transfer robot and the goods arranging robot, so that the transfer robot and the goods arranging robot can accurately complete transfer and goods arranging tasks.

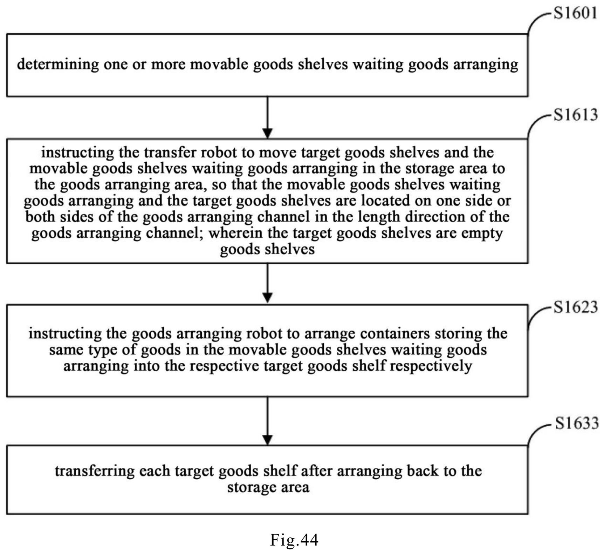

In some embodiments, referring to Fig. 44, which is a fourth flow chart of the first goods arranging method provided by an embodiment of the present application. As shown in Fig. 44, the flow chart includes:
Step S1601, determining multiple movable goods shelves waiting goods arranging;
Step S1613, instructing the transfer robot to move target goods shelves and the movable goods shelves waiting goods arranging in the storage area to the goods arranging area, so that the movable goods shelves waiting goods arranging and the target goods shelves are located on one side or both sides of the goods arranging channel in the length direction of the goods arranging channel; wherein the target goods shelves are empty goods shelves.

In this step, the number of the target goods shelves is the same as the number of movable goods shelves waiting goods arranging.

Step S1623, instructing the goods arranging robot to arrange containers storing the same type of goods in the movable goods shelves waiting goods arranging into the respective target goods shelf respectively.

Step S1633: transferring each target goods shelf after arranging back to the storage area.

In this embodiment, the number of the empty goods shelves served as the target goods shelves is the same as the number of the movable goods shelves waiting goods arranging, so that after goods arranging is completed, all containers in the movable goods shelves waiting goods arranging are arranged into the target goods shelves. It is only necessary to transfer each target goods shelf after arranging back to the storage area. The emptied movable goods shelf waiting goods arranging can be used as the target goods shelf later and retained in the goods arranging area or transferred by the transfer robot to a preset empty goods shelf docketing point, to facilitate the next goods arranging.

It can be seen that in this embodiment, all containers in the movable goods shelves waiting goods arranging can be arranged into the empty goods shelf as the target goods shelves, which further improves the goods arranging efficiency.

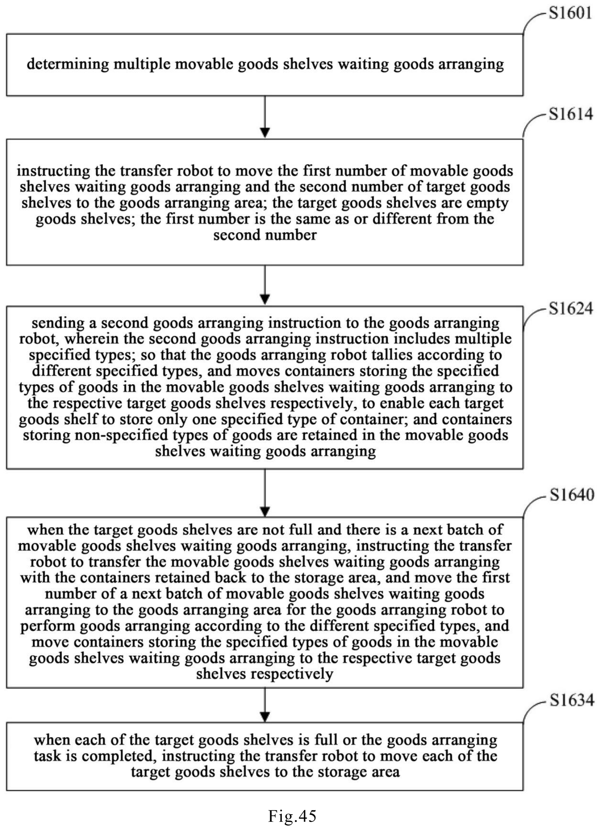

In some embodiments, the goods can be arranged in multiple batches for a specified goods type. Specifically, referring to Fig. 45, Fig. 45 is a fifth flow chart of the first goods arranging method provided by an embodiment of the present application; as shown in Fig. 45, the flow chart includes:
Step S1601, determining multiple movable goods shelves waiting goods arranging;
Step S1614, instructing the transfer robot to move the first number of movable goods shelves waiting goods arranging and the second number of target goods shelves to the goods arranging area; the target goods shelves are empty goods shelves; the first number is the same as or different from the second number.

In this embodiment, the first number is less than the number of all of the movable goods shelves waiting goods arranging, so that the goods arranging can be performed in multiple batches for a specified goods type.

Step S1624, sending a second goods arranging instruction to the goods arranging robot, wherein the second goods arranging instruction includes multiple specified types; so that the goods arranging robot tallies according to different specified types, and moves containers storing the specified types of goods in the movable goods shelves waiting goods arranging to the respective target goods shelves respectively, to enable each target goods shelf to store only one specified type of container; and containers storing non-specified types of goods are retained in the movable goods shelves waiting goods arranging.

For the specific case, Fig. 45 and the above description can be referred, which will not be repeated here.

Step S1640, when the target goods shelves are not full and there is a next batch of movable goods shelves waiting goods arranging, instructing the transfer robot to transfer the movable goods shelves waiting goods arranging with the containers retained back to the storage area, and move the first number of a next batch of movable goods shelves waiting goods arranging to the goods arranging area for the goods arranging robot to perform goods arranging according to the different specified types, and move containers storing the specified types of goods in the movable goods shelves waiting goods arranging to the respective target goods shelves respectively.

In the case of a large number of batches, this step may need to be performed until the target goods shelves are all full or the goods arranging task has been completed.

In fact, the total number of the movable goods shelves waiting goods arranging does not have to be an integer multiple of the first number, and the number of a last batch of movable goods shelves waiting goods arranging may be less than the first number.

Step S1634, when each of the target goods shelves is full or the goods arranging task is completed, instructing the transfer robot to move each of the target goods shelves to the storage area.

By applying the embodiment shown in Fig. 45, not only automatic goods arranging can be achieved, but also batch goods arranging based on specified goods types can be achieved.

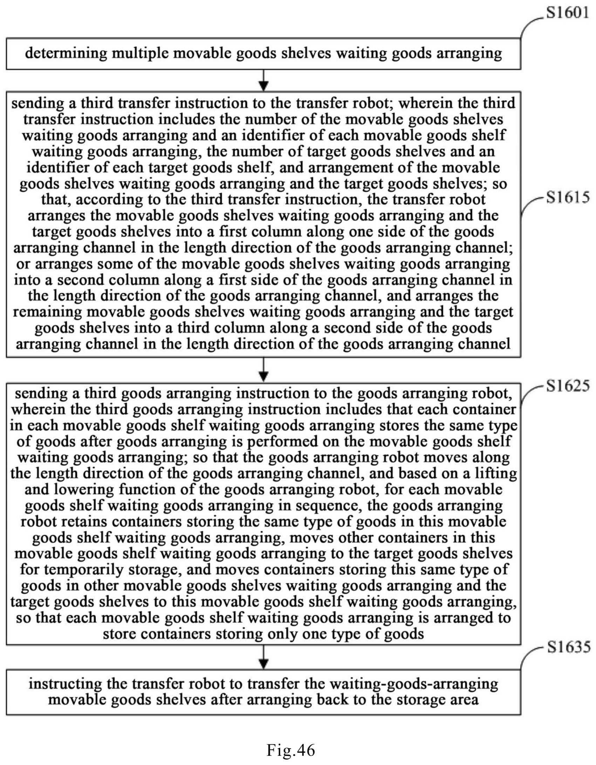

In some embodiments, the target goods shelf may be one or more dedicated backup temporary storage goods shelves. Specifically, referring to Fig. 46, Fig. 46 is a sixth flow chart of the first goods arranging method provided by an embodiment of the present application. As shown in Fig. 46, the flow chart includes:
Step S1601, determining multiple movable goods shelves waiting goods arranging;
Step S1615, sending a third transfer instruction to the transfer robot; wherein the third transfer instruction includes the number of the movable goods shelves waiting goods arranging and an identifier of each movable goods shelf waiting goods arranging, the number of target goods shelves and an identifier of each target goods shelf, and arrangement of the movable goods shelves waiting goods arranging and the target goods shelves; so that, according to the third transfer instruction, the transfer robot arranges the movable goods shelves waiting goods arranging and the target goods shelves into a first column along one side of the goods arranging channel in the length direction of the goods arranging channel; or arranges some of the movable goods shelves waiting goods arranging into a second column along a first side of the goods arranging channel in the length direction of the goods arranging channel, and arranges the remaining movable goods shelves waiting goods arranging and the target goods shelves into a third column along a second side of the goods arranging channel in the length direction of the goods arranging channel.
Step S1625, sending a third goods arranging instruction to the goods arranging robot, wherein the third goods arranging instruction includes that each container in each movable goods shelf waiting goods arranging stores the same type of goods after goods arranging is performed on the movable goods shelf waiting goods arranging; so that the goods arranging robot moves along the length direction of the goods arranging channel, and based on a lifting and lowering function of the goods arranging robot, for each movable goods shelf waiting goods arranging in sequence, the goods arranging robot retains containers storing the same type of goods in this movable goods shelf waiting goods arranging, moves other containers in this movable goods shelf waiting goods arranging to the target goods shelves for temporarily storage, and moves containers storing this same type of goods in other movable goods shelves waiting goods arranging and the target goods shelves to this movable goods shelf waiting goods arranging, so that each movable goods shelf waiting goods arranging is arranged to store containers storing only one type of goods.

In this embodiment, the target goods shelf serves as a backup temporary storage goods shelf, and there can be one or more target goods shelves. For the case where there is only one backup temporary storage goods shelf, Fig. 36 and the above description can be referred, which will not be repeated here.

Step S1635, instructing the transfer robot to transfer the waiting-goods-arranging movable goods shelves after arranging back to the storage area.

In this embodiment, since the target goods shelf serves as a backup temporary storage goods shelf, the temporary storage goods shelf is an empty goods shelf after the goods arranging task has been completed. In actual applications, the backup temporary storage goods shelf can always be retained in the goods arranging area or can be transferred to a centralized docking point by the transfer robot. There is no limitation here.

A second goods arranging method provided by an embodiment of the present application is described in detail below.

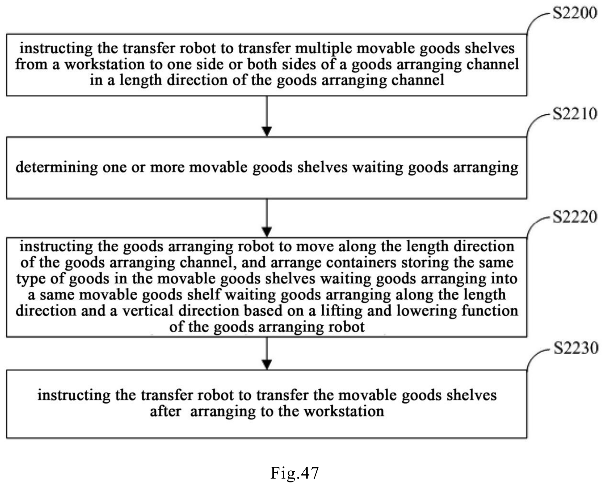

The second goods arranging method provided by the embodiment of the present application is applied to a control device, and the control device is in communication connection with the transfer robot and the goods arranging robot in the second embodiment of the aforementioned fifth warehousing system. Referring to Fig. 47, Fig. 47 is a first flow chart of the second goods arranging method provided by an embodiment of the present application. As shown in Fig. 47, the flow chart includes:
Step S2200, instructing the transfer robot to transfer multiple movable goods shelves from a workstation to one side or both sides of a goods arranging channel in a length direction of the goods arranging channel;
Step S2210, determining one or more movable goods shelves waiting goods arranging;
Step S2220, instructing the goods arranging robot to move along the length direction of the goods arranging channel, and arrange containers storing the same type of goods in the movable goods shelves waiting goods arranging into a same movable goods shelf waiting goods arranging along the length direction and a vertical direction based on a lifting and lowering function of the goods arranging robot.
Step S2230, instructing the transfer robot to transfer the movable goods shelves after arranging to the workstation.

In the goods arranging method in this embodiment, containers are picked-up and placed between the movable goods shelves by using the goods arranging robot, and the containers storing the same type of goods are arranged into the same movable goods shelf; the movable goods shelves are transferred between the warehouse storage area and the workstation by using uses the second transfer robot; so that automated goods arranging is realized, and when warehousing-out next time, the movable goods shelf after arranging is warehoused-out, which enables the faster warehousing-out, and improves the warehouse operation efficiency.

The difference between this embodiment and the aforementioned first embodiment is that the transfer robot does not transfer the movable goods shelves waiting goods arranging to a specially set goods arranging area for goods arranging, and instead, the movable goods shelves waiting goods arranging are directly set in a goods arranging channel in the warehouse storage area for goods arranging.

Compared with the first embodiment, in this embodiment, it is not necessary to move the movable goods shelves waiting goods arranging to the goods arranging area, thus goods arranging steps are simplified and the goods arranging speed can be improved to a certain extent.

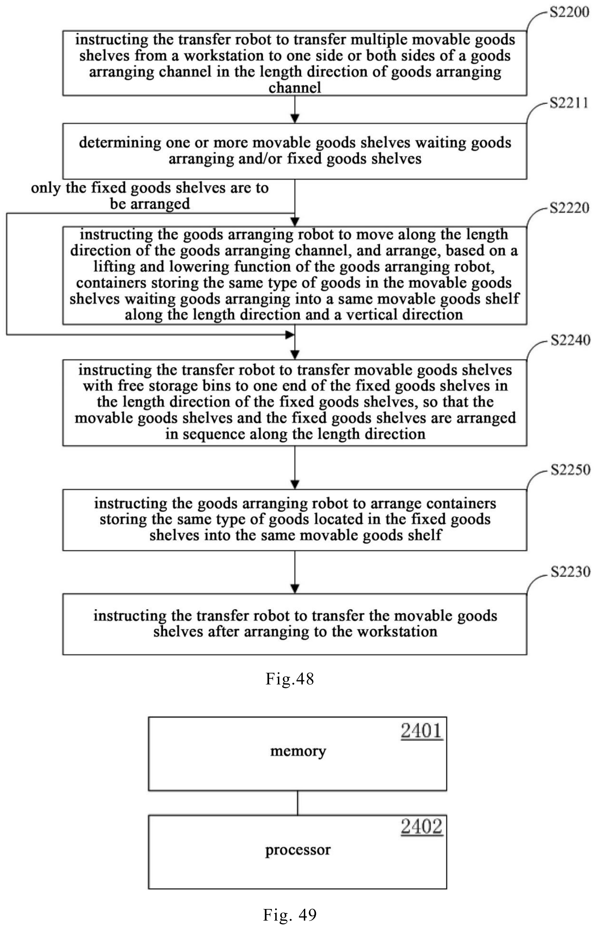

In some embodiments, the warehouse storage area is also provided with a fixed goods shelf; in this case, in order to improve the warehousing-out efficiency, containers in the fixed goods shelf can be arranged into a movable goods shelf in advice. Specifically, referring to Fig. 48, Fig. 48 is a second flow chart of the second goods arranging method provided by an embodiment of the present application; as shown in Fig. 48, the flow chart includes:
Step S2200, instructing the transfer robot to transfer multiple movable goods shelves from a workstation to one side or both sides of a goods arranging channel in the length direction of goods arranging channel;
Step S2211, determining one or more movable goods shelves waiting goods arranging and/or fixed goods shelves; in response to determining that only the fixed goods shelves are to be arranged, then directly performing step 2240 after this step has been completed; otherwise, performing step S2220.
Step S2220, instructing the goods arranging robot to move along the length direction of the goods arranging channel, and arrange, based on a lifting and lowering function of the goods arranging robot, containers storing the same type of goods in the movable goods shelves waiting goods arranging into a same movable goods shelf along the length direction and a vertical direction.

In response to determining that only the movable goods shelves are to be arranged, then directly performing step 2230 after this step has been completed; otherwise, performing step S2250.

Step S2240, instructing the transfer robot to transfer movable goods shelves with free storage bins to one end of the fixed goods shelves in the length direction of the fixed goods shelves, so that the movable goods shelves and the fixed goods shelves are arranged in sequence along the length direction.

Step S2250, instructing the goods arranging robot to arrange containers storing the same type of goods located in the fixed goods shelves into the same movable goods shelf.

Specifically, Figs. 38 to 40 and the above description can be referred, which will not be repeated here.

Step S2230, instructing the transfer robot to transfer the movable goods shelves after arranging to the workstation.

In this embodiment, the goods arranging robot can transfer the goods in the fixed goods shelves (which can be in a unit of a container) to the movable goods shelves, and then the transfer robot can transfer the movable goods shelves for warehousing-out. The fixed goods shelf is usually high and can store more goods, that is, has the high warehouse capacity utilization rate. Therefore, before warehousing-out each time, the goods are transferred to the movable goods shelves in advance and are transferred by the transfer robot for warehousing-out, which can improve the warehousing-out hit rate for the transfer robot in a single transfer and improve the overall warehouse operation efficiency.

An embodiment of the present application further provides a control device. Referring to Fig. 49, which is a schematic structural diagram of a control device provided by an embodiment of the present application. As shown in Fig. 49, the control device includes:
a memory 2401, configured for storing a computer program;
a processor 2402, configured for carrying out any order processing method, any warehousing-in method, any warehousing-out method or any goods arranging method in the above embodiments when executing the program stored on the memory 2401.

Furthermore, the electronic device may further include a communication bus and/or a communication interface, wherein the processor 2402, the communication interface, and the memory 2401 communicate with each other through the communication bus.

In yet another embodiment provided by the present application, a computer-readable storage medium is further provided, which has stored thereon a computer program, which, when executed by a processor, carries out any order processing method, any warehousing-in method, any warehousing-out method, or any goods arranging method in the above embodiments is implemented.

In yet another embodiment provided by the present application, a computer program product containing instructions is further provided, which, when running on a computer, causes the computer to carry out any of the order processing methods, warehousing-in methods, warehousing-out methods or goods arranging methods in the above embodiments.

The above descriptions are only preferred embodiments of the present application, and are not intended to limit the present application. Any modifications, equivalent replacements, improvements, etc. made within the spirit and principles of the present application shall be included within the scope of protection of the present application.

## Claims

1. A warehousing system, comprising multiple goods shelves, a first transfer robot and a second transfer robot;
at least one goods shelf among the multiple goods shelves is a movable goods shelf;
the first transfer robot is movably arranged beside two adjacent goods shelves, and is configured for transferring a workbin between the two goods shelves for goods arranging; wherein, one of the two adjacent goods shelves is a movable goods shelf, and the other of the two adjacent goods shelves is a movable goods shelf or a fixed goods shelf;
the second transfer robot is configured for transferring a movable goods shelf after goods arranging to a destination, or for transferring a movable goods shelf waiting goods arranging to a position adjacent to another goods shelf waiting goods arranging.

2. The warehousing system according to claim 1, wherein, one of the two adjacent goods shelves is a movable goods shelf and the other of the two adjacent goods shelves is a fixed high goods shelf;
the movable goods shelf and the fixed high goods shelf are arranged along an extension direction of an operating channel;
the fixed high goods shelf is provided with a guide rail adapted to the first transfer robot; an extension direction of the guide rail is consistent with the extension direction of the operating channel; the guide rail is arranged at the fixed high goods shelf and extends to an operating surface of the movable goods shelf;
the first transfer robot is slidably mounted to the guide rail and configured for moving along the extension direction of the guide rail to transfer a workbin between the movable goods shelf and the fixed high goods shelf.

3. The warehouse system according to claim 1, wherein, one of the two adjacent goods shelves is a movable goods shelf and the other of the two adjacent goods shelves is a fixed high goods shelf;
the fixed high goods shelf comprises a first storage space and a first accommodation space;
the first storage space is provided with multiple storage bins for storing workbins; the first accommodation space is arranged below the first storage space for accommodating the movable goods shelf; the fixed high goods shelf is provided with a support frame capable of mounting the first transfer robot, so that the first transfer robot transfers a workbin between the movable goods shelf and the fixed high goods shelf;
the movable goods shelf comprises a second storage space and a second accommodation space; the second storage space is provided with multiple temporary storage bins for temporarily storing workbins; the second accommodation space is arranged below the second storage space for the second transfer robot to move the movable goods shelf.

4. The warehousing system according to claim 1, wherein the two adjacent goods shelves are both movable goods shelves;
each of the movable goods shelves comprises a storage space and an accommodation space; the storage space is provided with multiple storage bins for storing workbins; the accommodation space is arranged below the storage space for the second transfer robot to move the movable goods shelf;
the first transfer robot is movably arranged beside two adjacent movable goods shelves, and is configured for arranging workbins storing a same type of goods in the movable goods shelves into a same movable goods shelf.

5. The warehousing system according to claim 4, wherein,
the first transfer robot is movably arranged at a ground support frame between two opposite movable goods shelves; or is movably arranged on a same side of two movable goods shelves adjacently arranged in a length direction of the two movable goods shelves.

6. A warehousing system, comprising:
a storage area, wherein at least one fixed high goods shelf is arranged in the storage area;
a goods arranging area, wherein at least one movable goods shelf is arranged in the goods arranging area, and the movable goods shelf and the fixed high goods shelf corresponding to the movable goods shelf are arranged along an extension direction of an operating channel;
a first transfer robot and a guide rail adapted to the first transfer robot, wherein an extension direction of the guide rail is consistent with the extension direction of the operating channel; the guide rail is arranged at the fixed high goods shelf and extends to an operating surface of the movable goods shelf; the first transfer robot is slidably mounted to the guide rail and configured for moving along the extension direction of the guide rail; the first transfer robot is configured to transfer a workbin between the storage area and the goods arranging area;
a second transfer robot, configured for transferring the movable goods shelf in the goods arranging area and/or transferring the movable goods shelf between the goods arranging area and the goods arranging area;
a sorting area, wherein a sorting workbench is arranged in the sorting area, and the sorting workbench is configured for sorting goods in the workbin.

7. The warehousing system according to claim 6, wherein, the movable goods shelf is arranged on one side of the fixed high goods shelf along the extension direction of the guide rail to form the operating channel;
a first traffic lane is provided on one side of the movable goods shelf away from the fixed high goods shelf along the extension direction of the guide rail, an extension direction of the first traffic lane is perpendicular to the extension direction of the guide rail, and the first traffic lane is connected to the operating channel.

8. The warehousing system according to claim 7, wherein the guide rail comprises a first part and a second part which are connected;
the warehousing system further comprises a carrier frame, which is arranged on one side of the fixed high goods shelf along the extension direction of the operating channel;
in a same operating channel, the first part is mounted to the fixed high goods shelf, the second part extends to the operating surface of the movable goods shelf, and the second part is mounted to the carrier frame.

9. The warehousing system according to claim 6, wherein a gap is maintained between a bottom of the fixed high goods shelf and a ground, to form a second traffic lane for the second transfer robot to shuttle.

10. The warehousing system according to claim 6, wherein the first transfer robot comprises a portal frame, a sliding mechanism, a lifting and lowering mechanism and a picking-up mechanism;
the portal frame is slidably connected to the guide rail, and the sliding mechanism is configured to provide a sliding force to the portal frame;
the picking-up mechanism is slidably mounted to the portal frame, and the picking-up mechanism is configured to be horizontally retractable and configured for picking-up and placing a workbin;
the lifting and lowering mechanism is arranged at the portal frame and connected with the picking-up mechanism; the lifting and lowering mechanism is configured for providing a driving force to the picking-up mechanism, so that the picking-up mechanism moves up and down relative to the portal frame in a height direction.

11. The warehousing system according to claim 6, wherein the second transfer robot comprises an elevating mechanism, a tray and a mobile chassis;
the elevating mechanism is arranged between the tray and the mobile chassis in a height direction, and the elevating mechanism is configured for elevating the tray;
the tray is configured for carrying the movable goods shelf, and the mobile chassis is configured for mounting the elevating mechanism and the tray.

12. The warehousing system according to any one of claims 6 to 11, wherein the warehousing system further comprises a buffer area;
the buffer area is arranged close to the sorting area, and the buffer area is used for temporarily storing the movable goods shelf;
the buffer area is located in a moving path of the second transfer robot from the goods arranging area to the sorting area.

13. An order processing method, comprising:
obtaining a set of to-be-processed orders and inventory information of a storage area and a goods arranging area; wherein the set of to-be-processed orders is processed at a same sorting workbench, at least one fixed high goods shelf is arranged in the storage area, and at least one movable goods shelf is arranged in the goods arranging area;
determining a storage position where each of target workbins requested by the set of to-be-processed orders is located, wherein any storage position is located in the fixed high goods shelf or the movable goods shelf;
determining a target movable goods shelf with a highest target workbin hit rate;
transferring the target movable goods shelf to a sorting workbench located in a sorting area.

14. The order processing method according to claim 13, wherein a first transfer robot is mounted to the fixed high goods shelf, the first transfer robot is a guide-rail-type transfer robot, and is configured for sliding along a length extension direction of the fixed high goods shelf, and can slide to an operating surface of the movable goods shelf; the first transfer robot is configured for transferring a target workbin in the storage area, in the goods arranging area, and/or between the storage area and the goods arranging area;
the movable goods shelf is transferred in the goods arranging area and/or transferred between the sorting area and the goods arranging area by a second transfer robot, and the second transfer robot is configured for moving along a ground;
transferring the target movable goods shelf to the sorting workbench located in the sorting area comprises:
in response to determining that the target movable goods shelf comprises all of the target workbins, scheduling the second transfer robot to transfer the target movable goods shelf to the sorting workbench;
in response to determining that the target movable goods shelf comprises a first partial target workbins among the target workbins, scheduling the first transfer robot and/or the second transfer robot to transfer a second partial target workbins among the target workbins that are not located in the target movable goods shelf to the target movable goods shelf.

15. The order processing method according to claim 14, wherein, the movable goods shelf is arranged on one side of the fixed high goods shelf in the length extension direction of the fixed high goods shelf to form an operating channel;
scheduling the first transfer robot and/or the second transfer robot to transfer the second partial target workbins that are not located in the target movable goods shelf to the target movable goods shelf comprises:
in response to determining that storage positions where the second partial target workbins are located are in a same operating channel as the target movable goods shelf, scheduling the first transfer robot to transfer the second partial target workbins to the target movable goods shelf;
in response to determining that the storage positions where the second partial target workbins are located are in a different operating channel from the target movable goods shelf, scheduling the first transfer robot and the second transfer robot to transfer the second partial target workbins to the target movable goods shelf.

16. The order processing method according to claim 15, wherein scheduling the first transfer robot and the second transfer robot to transfer the second partial target workbins to the target movable goods shelf comprises:
determining an operating channel where the second partial target workbins are located;
transferring the target movable goods shelf to the operating channel where the second partial target workbins are located by using the second transfer robot;
transferring the second partial target workbins to the target movable goods shelf by using the first transfer robot.

17. The order processing method according to claim 14, wherein the target movable goods shelf has a first partial target workbins, and storage positions in the target movable goods shelf are full;
scheduling the first transfer robot and/or the second transfer robot to transfer the second partial target workbins that are not located in the target movable goods shelf to the target movable goods shelf comprises:
transferring non-target workbins in the target movable goods shelf to a non-target movable goods shelf or a fixed high goods shelf to form free storage positions;
transferring at least one of the second partial target workbins to the storage positions of the target movable goods shelf.

18. The order processing method according to claim 13, wherein transferring the target movable goods shelf to the sorting workbench comprises:
scheduling the second transfer robot to transfer the target movable goods shelf to the sorting workbench in response to determining that the target movable goods shelf comprises some of the target workbins and meets a threshold of an order hit rate;
wherein the order hit rate is a ratio of the number of the some of the target workbins in the target movable goods shelf to all of the target workbins requested by the set of to-be-processed orders.

19. The order processing method according to claim 14, wherein scheduling the first transfer robot and/or the second transfer robot to transfer the second partial target workbins that are not located in the target movable goods shelf to the target movable goods shelf comprises:
in response to determining that the target movable goods shelf comprises the first partial target workbins, performing goods arranging on the second partial target workbins that are not located in the target movable goods shelf within a preset duration, to transfer at least one of the second partial target workbins to the target movable goods shelf;
in response to determining that the preset duration is reached, scheduling the second transfer robot to transfer the target movable goods shelf to the sorting workbench.

20. A warehousing system, comprising a storage area, a goods arranging area, a sorting area, a first transfer robot and a second transfer robot;
at least one fixed high goods shelf is arranged in the storage area, and at least one movable goods shelf is arranged in the goods arranging area;
the movable goods shelf is arranged immediately adjacent to the fixed high goods shelf;
a support frame is fixedly arranged at the fixed high goods shelf; the first transfer robot is mounted to the support frame and is configured for moving along the support frame to transfer a workbin between the storage area and the goods arranging area;
the second transfer robot is configured for transferring the movable goods shelf in the goods arranging area and/or between the goods arranging area and the sorting area.

21. The warehousing system according to claim 20, wherein,
the support frame comprises multiple crossbeams spaced apart in a vertical direction;
the first transfer robot is slidably mounted to the multiple crossbeams and configured for moving along an extension direction of the crossbeams to transfer a workbin between the storage area and the goods arranging area.

22. The warehousing system according to claim 21, wherein,
the movable goods shelf and the fixed high goods shelf corresponding to the movable goods shelf are arranged along an extension direction of an operating channel;
a guide rail adapted to the first transfer robot is arranged at the crossbeams; an extension direction of the guide rail is consistent with the extension direction of the operating channel;
the guide rail is arranged at the fixed high goods shelf and extends to an operating surface of the movable goods shelf, so that the first transfer robot transfers a workbin between the fixed high goods shelf and the movable goods shelf.

23. The warehousing system according to claim 20 or 21, wherein,
the fixed high goods shelf comprises a first storage space and a first accommodation space; the first storage space is provided with multiple storage bins for storing workbins; the first accommodation space is arranged below the first storage space for accommodating the movable goods shelf;
the movable goods shelf comprises a second storage space and a second accommodation space; the second storage space is provided with multiple temporary storage bins for temporarily storing workbins; the second accommodation space is arranged below the second storage space for the second transfer robot to move the movable goods shelf.

24. A warehousing apparatus, comprising a first robot goods shelf and a second robot goods shelf;
the first robot goods shelf comprises a first storage space and a first accommodation space; the first storage space is provided with multiple storage bins for storing containers; the first accommodation space is arranged below the first storage space for accommodating the second robot goods shelf; the first robot goods shelf is provided with a support frame capable of mounting a first robot; the first robot is configured for picking-up and placing a container between the first robot goods shelf and the second robot goods shelf;
the second robot goods shelf comprises a second storage space and a second accommodation space; the second storage space is provided with multiple temporary storage bins for temporarily storing containers; the second accommodation space is arranged below the second storage space for a second robot to move the second robot goods shelf.

25. The warehousing apparatus according to claim 24, wherein the support frame comprises multiple crossbeams spaced apart in a vertical direction of the first robot goods shelf, so that the first robot is mounted on outside of the first robot goods shelf based on the crossbeams.

26. The warehousing apparatus according to claim 24, wherein,
multiple first support columns are arranged below the first storage space of the first robot goods shelf, and the multiple first support columns extend toward a ground to form the first accommodation space;
multiple second support columns are arranged below the second storage space of the second robot goods shelf, and the multiple second support columns extend toward the ground to form the second accommodation space.

27. The warehousing apparatus according to claim 24, wherein the first robot goods shelf is a double-deep goods shelf or a multi-deep goods shelf; the second robot goods shelf is a double-deep goods shelf or a multi-deep goods shelf.

28. The warehousing apparatus according to claim 24, wherein a length of a cross-section of the first robot goods shelf is greater than that of a cross-section of the second robot goods shelf; a width of the cross-section of the first robot goods shelf is greater than or equal to that of the cross-section of the second robot goods shelf.

29. The warehousing apparatus according to claim 24, wherein the first robot goods shelf is an integrated shelf; or
the first robot goods shelf comprises multiple sub-goods shelves; the multiple sub-goods shelves are arranged in sequence in one column along a length direction or a width direction of the multiple sub-goods shelves; or, the multiple sub-goods shelves are arranged in sequence in an array along the length direction and the width direction of the multiple sub-goods shelves.

30. A warehousing system, comprising the warehousing apparatus according to any one of claims 24 to 29, a first robot and a second robot;
the first robot is mounted to the first robot goods shelf based on the support frame, and is configured for moving the containers in the storage bins of the first robot goods shelf to the temporary storage bins of the second robot goods shelf, or move the containers in the temporary storage bins of the second robot goods shelf to the storage bins of the first robot goods shelf;
the second robot is configured for transferring the second robot goods shelf carrying a to-be-warehoused-out container to a destination, or for transferring the second robot goods shelf carrying the to-be-warehoused-in container to the first accommodation space of the first robot goods shelf.

31. The warehousing system according to claim 30, wherein,
the support frame comprises multiple crossbeams spaced apart in a vertical direction of the first robot goods shelf;
the first robot comprises a column portal frame, a transfer mechanism and at least one sliding guide rail; the column portal frame is mounted along the vertical direction of the first robot goods shelf; the transfer mechanism is arranged at the column portal frame for picking-up and placing containers at different heights in the first robot goods shelf; the at least one sliding guide rail is fixedly mounted to the crossbeams; the column portal frame is slidably connected to the at least one sliding guide rail, so that the column portal frame and the transfer mechanism slide horizontally along the crossbeams to pick-up and place different containers in the length direction of the first robot goods shelf.

32. The warehousing system according to claim 31, wherein the transfer mechanism comprises a lifting and lowering component and a picking-up component;
the lifting and lowering component is arranged at the column portal frame, and is configured for driving the picking-up component to move up and down along the vertical direction of the first robot goods shelf;
the picking-up component is mounted to the lifting and lowering component and is configured for extending out of the column portal frame to pick-up and place a container.

33. The warehousing system according to claim 30, wherein,
the second robot is a lifting-type movable robot;
a height of the second accommodation space of the second robot goods shelf is higher than that of the lifting-type movable robot, so that the lifting-type movable robot can move into interior of the second accommodation space, lift the second robot goods shelf to move or place the second robot goods shelf on a ground.

34. The warehousing system according to claim 33, wherein,
a height of the first accommodation space of the first robot goods shelf is higher than a height at which the second robot goods shelf carrying a container is lifted by the second robot.

35. The warehousing system according to claim 30, wherein,
at a bottom of the first accommodation space of the first robot goods shelf, a docking channel and a bottom traveling channel that are interconnected are arranged along a length direction of the first robot goods shelf; the docking channel is used for accommodating the second robot goods shelf; the second robot is configured for traveling along the bottom traveling channel, so that after the second robot goods shelf reaches a specified docking position in the docking channel, the first robot moves the containers in the temporary storage bins of the second robot goods shelf to the first robot goods shelf, or moves the containers in the first robot goods shelf to the second robot goods shelf.

36. The warehousing system according to claim 35, wherein the first robot is mounted on one side surface of the first robot goods shelf close to the docking channel in the length direction of the first robot goods shelf.

37. The warehousing system according to claim 30, wherein,
a one-way or two-way external traveling channel for the second robot to travel is provided between the first robot goods shelf and the destination.

38. The warehousing system according to claim 37, wherein,
the external traveling channel comprises a first external traveling channel with a destination being a workstation and a second external traveling channel with a destination being a reviewing and packing area;
the second robot is configured for transferring a to-be-warehoused-out second robot goods shelf to the workstation for picking and warehousing-out, or for transferring a to-be-warehoused-in second robot goods shelf to the first robot goods shelf for container warehousing-in, along the first external traveling channel;
the second robot is further configured for transferring the to-be-warehoused-out second robot goods shelf to the reviewing and packing area along the second external traveling channel, to pack all goods in containers of the second robot goods shelf for warehousing-out.

39. The warehousing system according to any one of claims 30 to 38, further comprising a control device;
the control device is in communication connection with the first robot and the second robot, to instruct the first robot to pick-up and place a container, and instruct the second robot to move the second robot goods shelf.

40. A warehousing-in method applied to a control device, wherein the control device is in communication connection with the first robot and the second robot of the warehousing system according to any one of claims 30 to 39; the method comprises:
determining a target free storage bin for each to-be-warehoused-in container according to the number of to-be-warehoused-in containers and the number and positions of free storage bins in a first robot goods shelf;
instructing the second robot to move a to-be-warehoused-in second robot goods shelf to a first accommodation space of the first robot goods shelf; wherein the to-be-warehoused-in containers are temporarily stored in temporary storage bins in the to-be-warehoused-in second robot goods shelf;
instructing the first robot to move the to-be-warehoused-in containers in the second robot goods shelf to target free storage bins of the first robot goods shelf.

41. The warehousing-in method according to claim 40, wherein,
before instructing the second robot to move the to-be-warehoused-in second robot goods shelf to the first accommodation space of the first robot goods shelf, the method further comprises:
determining a target docking position for the second robot goods shelf to move to the first accommodation space of the first robot goods shelf according to a position of each of the target free storage bins in the first robot goods shelf;
instructing the second robot to move the to-be-warehoused-in second robot goods shelf to the first accommodation space of the first robot goods shelf comprises: instructing the second robot to move the to-be-warehoused-in second robot goods shelf to the target docking position.

42. The warehousing-in method according to claim 41, wherein,
the first robot comprises a column portal frame, a transfer mechanism and at least one sliding guide rail;
instructing the first robot to move the to-be-warehoused-in containers in the second robot goods shelf to the target free storage bins of the first robot goods shelf comprises:
sending a first operation instruction comprising the target docking position to the first robot, so that the first robot horizontally moves, at the first robot goods shelf, to a position corresponding to the target docking position by using the sliding guide rail, and moves the transfer mechanism downward along the column portal frame positions corresponding to the to-be-warehoused-in containers in the second robot goods shelf, and picks-up the to-be-warehoused-in containers from the second robot goods shelf by using the transfer mechanism, and places the to-be-warehoused-in containers in the target free storage bins corresponding to the to-be-warehoused-in containers by moving upward.

43. The warehousing-in method according to claim 40, wherein,
determining the target free storage bin for each to-be-warehoused-in container according to the number of to-be-warehoused-in containers and the number and the positions of the free storage bins in the first robot goods shelf comprises:
determining the target free storage bin for each to-be-warehoused-in container based on a principle that a moving distance of the second robot from a starting point is from near to far and/or a principle that the target free storage bins are concentrated in the first robot goods shelf.

44. The warehousing-in method according to claim 43, wherein,
the first robot comprises a column portal frame, a transfer mechanism and at least one sliding guide rail;
before instructing the first robot to move the to-be-warehoused-in containers in the second robot goods shelf to the target free storage bins of the first robot goods shelf, the method further comprises:
obtaining multiple target operating areas for the first robot by dividing according to a position of each of the target free storage bins in the first robot goods shelf; wherein a distance between target free storage bins contained in each target operating area is less than a preset distance;
determining a corresponding target docking position and corresponding partial to-be-warehoused-in containers among the to-be-warehoused-in containers for each of the target operating areas according to positions of the target operating areas;
instructing the second robot to move the to-be-warehoused-in second robot goods shelf to the first accommodation space of the first robot goods shelf comprises: sending movement instructions each including one target docking position to the second robot in sequence, so that the second robot moves the to-be-warehoused-in second robot goods shelf to a corresponding target docking position after receiving a movement instruction each time, and waits for the first robot to move partial to-be-warehoused-in containers corresponding to the target docking position to corresponding target free storage bins; each time a signal indicating that the first robot has moved the partial to-be-warehoused-in containers is received, a movement instruction for a next target docking position is sent to the second robot;
instructing the first robot to move the to-be-warehoused-in containers in the second robot goods shelf to the target free storage bins of the first robot goods shelf comprises:
sending a second operation instruction including each of the target operating areas to the first robot, so that the first robot moves, at the first robot goods shelf, to each target operating area in sequence by using the sliding guide rail and the column portal frame, and in each of the target operating areas, the first robot moves the transfer mechanism downward along the column portal frame to positions corresponding to the to-be-warehoused-in containers in the second robot goods shelf, picks-up the to-be-warehoused-in containers from the second robot goods shelf by using the transfer mechanism, and places the to-be-warehoused-in containers in the target free storage bins corresponding to the to-be-warehoused-in containers by at least moving upward.

45. The warehousing-in method according to claim 41, wherein,
instructing the first robot to move the to-be-warehoused-in containers in the second robot goods shelf to the free storage bins of the first robot goods shelf comprises:
predicting a predicted operation duration required for the first robot to move all of the to-be-warehoused-in containers to the target free storage bins in a case that the target docking position remains unchanged, based on the position of each of the target free storage bins and a position of the target docking position;
in response to determining that the predicted operation duration is not greater than a preset threshold, instructing the first robot to move all of the to-be-warehoused-in containers in the second robot goods shelf to corresponding target free storage bins in the first robot goods shelf respectively;
in response to determining that the predicted operation time is greater than the preset threshold, instructing the first robot to move some of the to-be-warehoused-in containers in the second robot goods shelf to corresponding target free temporary storage bins in the first robot goods shelf respectively;
updating the target docking position based on positions of target free storage bins corresponding to remaining to-be-warehoused-in containers;
instructing the second robot to move to the updated target docking position;
instructing the first robot to move the remaining to-be-warehoused-in containers in the second robot goods shelf to corresponding target free storage bins in the first robot goods shelf.

46. A warehousing-out method applied to a control device, wherein the control device is in communication connection with the first robot and the second robot of the warehousing system according to any one of claims 30 to 39; the method comprises:
determining a to-be-warehoused-out second robot goods shelf according to the number of to-be-warehoused-out containers; wherein the to-be-warehoused-out second robot goods shelf has free temporary storage bins;
instructing the second robot to move the to-be-warehoused-out second robot goods shelf to a first accommodation space of a first robot goods shelf;
instructing the first robot to move the to-be-warehoused-out containers in the first robot goods shelf to the free temporary storage bins of the to-be-warehoused-out second robot goods shelf;
instructing the second robot to drive the to-be-warehoused-out second robot goods shelf to move to a destination.

47. The warehousing-out method according to claim 46, wherein,
before instructing the second robot to move the to-be-warehoused-out second robot goods shelf to the first accommodation space of the first robot goods shelf, the method further comprises:
determining a target docking position for the second robot goods shelf to move to the first accommodation space of the first robot goods shelf according to the number of the to-be-warehoused-out containers and a position of a storage bin where each of the to-be-warehoused-out containers is located;
instructing the second robot to move the to-be-warehoused-out second robot goods shelf to the first accommodation space of the first robot goods shelf comprises: instructing the second robot to move the to-be-warehoused-out second robot goods shelf to the target docking position.

48. The warehousing-out method according to claim 47, wherein,
the first robot comprises a column portal frame, a transfer mechanism and at least one sliding guide rail;
instructing the first robot to move the to-be-warehoused-out containers in the first robot goods shelf to the free temporary storage bins of the to-be-warehoused-out second robot goods shelf comprises:
sending a first operation instruction including the target docking position and positions of the to-be-warehoused-out containers to the first robot, so that the first robot horizontally moves, at the first robot goods shelf, to a column where a to-be-warehoused-out container is located by using the sliding guide rail, and moves the transfer mechanism up and down along the column portal frame to a layer where a to-be-warehoused-out containers is located, and picks-up the to-be-warehoused-out containers from the first robot goods shelf by using the transfer mechanism, and places the to-be-warehoused-out containers in the free temporary storage bins of the second robot goods shelf by at least moving downward.

49. The warehousing-out method according to claim 46, wherein,
before instructing the second robot to move the to-be-warehoused-out second robot goods shelf to the first accommodation space of the first robot goods shelf, the method further comprises:
obtaining multiple target operating areas for the first robot by dividing according to a position of each of the to-be-warehoused-out containers in the first robot goods shelf; wherein a distance between to-be-warehoused-out containers contained in each of the target operating areas is less than a preset distance;
determining a corresponding target docking position and corresponding partial to-be-warehoused-out containers among the to-be-warehoused-out containers for each of the target operating areas according to positions of the target operating areas;
instructing the second robot to move the to-be-warehoused-out second robot goods shelf to the first accommodation space of the first robot goods shelf comprises: sending movement instructions each including one target docking position to the second robot in sequence; so that the second robot moves the to-be-warehoused-out second robot goods shelf to a corresponding target docking position after receiving a movement instruction each time, and waits for the first robot to move partial to-be-warehoused-out containers corresponding to the target docking position to free temporary storage bins of the second robot goods shelf; each time a signal indicating that the first robot has moved the partial to-be-warehoused-out containers, a movement instruction including a next target docking position is sent to the second robot;
the first robot comprises a column portal frame, a transfer mechanism and at least one sliding guide rail;
instructing the first robot to move the to-be-warehoused-out containers in the first robot goods shelf to the free temporary storage bins of the to-be-warehoused-out second robot goods shelf comprises:
sending a second operation instruction including each of the target operating areas to the first robot, so that the first robot moves, at the first robot goods shelf, to each of the target operating areas in sequence by using the sliding guide rail and the column portal frame, and in each target operating area, the first robot moves the transfer mechanism up and down along the column portal frame to a layer where a to-be-warehoused-out container is located, picks-up the to-be-warehoused-out containers from the first robot goods shelf by using the transfer mechanism, and places the to-be-warehoused-out containers in the free temporary storage bins of the second robot goods shelf by at least moving downward.

50. The warehousing-out method according to claim 47, wherein:
instructing the first robot to move the to-be-warehoused-out containers in the first robot goods shelf to the free temporary storage bins of the to-be-warehoused-out second robot goods shelf comprises:
predicting a predicted operation duration required for the first robot to move all of the to-be-warehoused-out containers to the free temporary storage bins in a case that the target docking position remains unchanged, based on positions of storage bins where the to-be-warehoused-out containers are located and a position of the target docking position;
in response to determining that the predicted operation duration is not greater than a preset threshold, instructing the first robot to move all of the to-be-warehoused-out containers in the first robot goods shelf to the free temporary storage bins in the second robot goods shelf respectively;
in response to determining that the predicted operation time is greater than the preset threshold, instructing the first robot to move some of the to-be-warehoused-out containers in the first robot goods shelf to some of the free temporary storage bins in the second robot goods shelf respectively;
updating the target docking position based on positions of storage bins where remaining to-be-warehoused-out containers are located;
instructing the second robot to move to the updated target docking position;
instructing the first robot to move the remaining to-be-warehoused-out containers in the first robot goods shelf to remaining free temporary storage bins in the second robot goods shelf.

51. A control device, comprising:
a memory, configured for storing a computer program;
a processor, configured for carrying out, when executing the program stored on the memory, the order processing method according to any one of claims 13 to 19, the warehousing-in method according to any one of claims 40 to 45, or the warehousing-out method according to any one of claims 46 to 50.

52. A computer-readable storage medium having stored thereon a computer program, which, when executed by a processor, carries out the order processing method according to any one of claims 13 to 19, the warehousing-in method according to any one of claims 40 to 45, or the warehousing-out method according to any one of claims 46 to 50.
